# EUROPEAN PATENT APPLICATION

(11) **EP 4 563 867 A1**
(43) Date of publication of application: **04.06.2025**
(21) Application number: 23860897.0
(22) Date of filing: 30.08.2023
(51) Int. Cl.: F16L 41/14, F16L 41/08, F16L 41/02, F16L 41/04

(54) **FLUID CONNECTOR**

(30) Priority: 30.08.2022 KR 20220109315; 30.09.2022 KR 20220125279; 01.11.2022 KR 20220144096; 28.12.2022 KR 20220186515
(71) Applicant: Shingin Chemtech Corp., Icheon-si Gyeonggi-do 17405 (KR)
(72) Inventor: PARK, Hyungsuk, Icheon-si Gyeonggi-do 17359 (KR)
(74) Representative: ABG Intellectual Property Law, S.L.
(86) International application number: PCT/KR2023/012936
(87) International publication number: WO 2024/049221

(57) **Abstract**

Provided is a fluid connector, the fluid connector being coupled to a coupling hole formed by perforating a main pipe, wherein the fluid connector includes: a socket, at least a portion of which is inserted into the coupling hole; an elastic bushing movably mounted on the socket such that at least a portion of the elastic bushing is inserted into the coupling hole together with the socket; a washer movably mounted on the socket to be disposed outside the main pipe in a state of facing the elastic bushing; and a tightening nut screw-coupled to the socket to be disposed outside the main pipe in a state of facing the washer, wherein the elastic bushing is provided to pressurize each of an inner corner, positioned at a lower end of an inner peripheral surface of the coupling hole, and an outer corner, positioned at an upper end thereof, in a height direction of the main pipe and, at the same time, in at least one direction of a longitudinal direction and circumferential direction of the main pipe while being elastically deformed by pressure delivered through the socket and the washer when the tightening nut is screw-coupled to the socket.

## Description

### [Technical Field]

The present invention relates to a fluid connector for connecting a branch pipe to a main pipe.

### [Background Art]

Pipes are components for supplying water or other fluids (hereinafter collectively referred to as water) supplied from a supply source to a demander.

However, there are cases where supply routes need to be branched, such as when water supply routes are complex or there are multiple demanders. Accordingly, a fluid connector for connecting a branch pipe to a main pipe has been developed and used.

An existing fluid connector is provided to be coupled to a branch pipe by inserting the head of a socket (hereinafter referred to as a socket head) provided in a fluid connector into a coupling hole formed by drilling a main pipe, and then pressurizing the socket head and a coupling hole-surrounding part, which surrounds the coupling hole, in the thickness direction of the main pipe in a screw-tightening manner or other coupling manners such that the inner peripheral surface of the coupling hole and the socket head are in close contact with each other, thereby enabling the socket to be connected to the coupling hole.

In general, when high-pressure water is supplied from a supply source to a main pipe, the high pressure of the water is applied to a main pipe along a circumferential direction and longitudinal direction perpendicular to the thickness direction of the main pipe, thereby expanding the main pipe.

By the way, an existing fluid connector pressurizes a socket head and a coupling hole-surrounding part only in the thickness direction to connect the socket to the main pipe, and thus has a disadvantage in that it is difficult to hold the coupling hole-surrounding part that expands in the circumferential direction and longitudinal direction due to the pressure applied from water. Accordingly, the existing fluid connector has a problem in that, when the main pipe is expanded by water supplied from the supply source, the socket is frequently separated from the coupling hole or a gap occurs between the socket and the inner peripheral surface of the coupling hole.

### [Disclosure]

### [Technical Problem]

Therefore, the present invention has been made in view of the above problems, and it is one object of the present invention to provide a fluid connector having an improved structure so as to hold and fix a main pipe connected to a fluid supply source not only in the height direction or the thickness direction but also in at least one direction of the circumferential direction and the longitudinal direction.

### [Technical Solution]

In accordance with an aspect of the present invention, the above and other objects can be accomplished by the provision of a fluid connector, the fluid connector being coupled to a coupling hole formed by perforating a main pipe, wherein the fluid connector includes: a socket, at least a portion of which is inserted into the coupling hole; an elastic bushing movably mounted on the socket such that at least a portion of the elastic bushing is inserted into the coupling hole together with the socket; a washer movably mounted on the socket to be disposed outside the main pipe in a state of facing the elastic bushing; and a tightening nut screw-coupled to the socket to be disposed outside the main pipe in a state of facing the washer, wherein the elastic bushing is provided to pressurize each of an inner corner, positioned at a lower end of an inner peripheral surface of the coupling hole, and an outer corner, positioned at an upper end thereof, in a height direction of the main pipe and, at the same time, in at least one direction of a longitudinal direction and circumferential direction of the main pipe while being elastically deformed by pressure delivered through the socket and the washer when the tightening nut is screw-coupled to the socket.

### [Advantageous effects]

The present invention relates to a fluid connector, and has the following effects.

First, the present invention is provided such that an inner sealing part and outer sealing part of an elastic bushing can pressurize inner and outer corners of an inner peripheral surface of a coupling hole formed by perforating a main pipe in a height direction of the main pipe while pressurizing the inner and outer corners in at least one direction of a longitudinal direction and circumferential direction of the main pipe. Accordingly, the present invention can be firmly coupled to the main pipe by the elastic bushing such that the fluid connector is not separated from the main pipe when the main pipe expands in the longitudinal direction and circumferential direction due to high-pressure water, and can prevent the occurrence of a gap, which may cause water leakage, between the outer peripheral surface of the elastic bushing and the inner peripheral surface of the coupling hole.

Second, the present invention can be fixed to the coupling hole in a manner of pressurizing the inner corner and the outer corner of the coupling hole in the longitudinal direction and the circumferential direction of the main pipe, which have relatively high rigidity compared to the thickness direction of the main pipe, using the elastic bushing. Accordingly, the fluid connector can minimize deformation of the main pipe due to the installation of the fluid connector, compared to an existing fluid connector that pressurizes a main pipe only in a thickness direction for installation.

### [Description of Drawings]

FIG. 1 illustrates an exploded perspective view of a fluid connector and main pipe according to a first embodiment of the present invention.
FIG. 2 illustrates a combined perspective view of the fluid connector and main pipe shown in FIG. 1.
FIG. 3 illustrates a sectional view of the fluid connector and main pipe shown in FIG. 2, when viewed in the longitudinal direction of the main pipe.
FIG. 4 illustrates a sectional view of the fluid connector and the main pipe shown in FIG. 2, when viewed in the width direction of the main pipe.
FIG. 5 illustrates a sectional view of the main pipe when viewed in the longitudinal direction of the main pipe.
FIG. 6 illustrates a plan view of the main pipe.
FIG. 7 illustrates a perspective view of a socket.
FIG. 8 illustrates a front view of the socket shown in FIG. 7.
FIG. 9 illustrates a side view of the socket shown in FIG. 7.
FIG. 10 illustrates a sectional view of the socket shown in FIG. 7.
FIG. 11 is a perspective view of an elastic bushing.
FIG. 12 is a sectional view of the elastic bushing shown in FIG. 11.
FIG. 13 illustrates a perspective view of a washer as viewed from above.
FIG. 14 illustrates a perspective view of the washer shown in FIG. 13 as viewed from below.
FIG. 15 illustrates a sectional view of the washer shown in FIG. 13 as viewed in a longitudinal direction of a main pipe.
FIG. 16 illustrates a sectional view of the washer shown in FIG. 13 as viewed in a width direction of the main pipe.
FIG. 17 illustrates a perspective view of a tightening nut.
FIG. 18 illustrates a sectional view of the tightening nut shown in FIG. 17.
FIGS. 19 to 21 are drawings for explaining a method of installing the fluid connector to a main pipe.
FIGS. 22 and 23 are drawings for explaining the principle that the elastic bushing holds a main pipe wall.
FIGS. 24 and 25 are drawings for explaining a method of coupling the branch pipe to the main pipe.
FIG. 26 illustrates an exploded perspective view of a fluid connector according to a second embodiment of the present invention.
FIG. 27 illustrates a combined perspective view of the fluid connector shown in FIG. 26.
FIG. 28 illustrates a sectional view of the fluid connector shown in FIG. 27 and a main pipe as viewed in a longitudinal direction of the main pipe.
FIG. 29 illustrates a sectional view of the fluid connector shown in FIG. 27 and the main pipe as viewed in a width direction of the main pipe.
FIG. 30 illustrates a perspective view of a socket.
FIG. 31 illustrates a front view of the socket shown in FIG. 30.
FIG. 32 illustrates a side view of the socket shown in FIG. 30.
FIG. 33 illustrates a sectional view of the socket shown in FIG. 30.
FIG. 34 illustrates a perspective view of an elastic bushing.
FIG. 35 illustrates a sectional view of the elastic bushing shown in FIG. 34.
FIG. 36 illustrates a perspective view of a washer as viewed from above.
FIG. 37 illustrates a perspective view of the washer shown in FIG. 36 as viewed from below.
FIG. 38 illustrates a sectional view of the washer shown in FIG. 36 as viewed in a longitudinal direction of a main pipe.
FIG. 39 illustrates a sectional view of the washer shown in FIG. 36 as viewed in a width direction of the main pipe.
FIG. 40 illustrates a perspective view of a tightening nut.
FIG. 41 illustrates a sectional view of the tightening nut shown in FIG. 40..
FIG. 42 illustrates a perspective view of a packing.
FIG. 43 illustrates a sectional view of the packing shown in FIG. 42.
FIG. 44 illustrates that a gap between a socket and a branch pipe is sealed by the packing.
FIGS. 45 to 48 are drawings for explaining a method of connecting a main pipe and a branch pipe to each other using a fluid connector.
FIG. 49 illustrates an exploded perspective view of a fluid connector and main pipe according to the third embodiment of the present invention.
FIG. 50 illustrates a combined perspective view of the fluid connector and main pipe shown in FIG. 49.
FIG. 51 illustrates a sectional view of the fluid connector and main pipe shown in FIG. 50 as viewed in a longitudinal direction of the main pipe.
FIG. 52 illustrates a sectional view of the fluid connector and main pipe shown in FIG. 50 as viewed in a width direction of the main pipe.
FIG. 53 illustrates a sectional view of the main pipe as viewed in a longitudinal direction of the main pipe.
FIG. 54 illustrates a plan view of the main pipe.
FIG. 55 illustrates a perspective view of a socket.
FIG. 56 illustrates a front view of the socket shown in FIG. 55.
FIG. 57 illustrates a side view of the socket shown in FIG. 55.
FIG. 58 illustrates a sectional view of the socket shown in FIG. 55.
FIG. 59 illustrates a perspective view of a washer as viewed from above.
FIG. 60 illustrates a perspective view of the washer shown in FIG. 59 as viewed from below.
FIG. 61 illustrates a sectional view of the washer shown in FIG. 59 as viewed in a longitudinal direction of a main pipe.
FIG. 62 illustrates a sectional view of the washer shown in FIG. 59 as viewed in a width direction of the main pipe.
FIGS. 63 to 75 are drawings for explaining a method of connecting a main pipe and a branch pipe to each other using a fluid connector.
FIG. 76 illustrates a state where a fluid connector according to a fourth embodiment of the present invention is separated from a fluid source.
FIG. 77 illustrates a state where the fluid connector shown in FIG. 76 is coupled to a fluid source.
FIGS. 78 and 79 illustrate a drawing for explaining a method of forming a coupling hole by perforating a fluid source wall.
FIG. 80 illustrates a front view of a socket.
FIG. 81 illustrates a sectional view of the socket.
FIG. 82 illustrates a plan view of the socket.
FIG. 83 illustrates a front view of an elastic bushing.
FIG. 84 illustrates a sectional view of the elastic bushing.
FIG. 85 illustrates a plan view of the elastic bushing.
FIG. 86 illustrates a front view of a washer.
FIG. 87 illustrates a sectional view of the washer.
FIG. 88 illustrates a plan view of the washer.
FIG. 89 illustrates a front view of a tightening nut.
FIG. 90 illustrates a sectional view of the tightening nut.
FIG. 91 illustrates a plan view of the tightening nut.
FIGS. 92 to 95 are drawings for explaining a method of installing a fluid connector at a fluid source.
FIG. 96 is a drawing for explaining the principle that an elastic bushing holds a fluid source wall.
FIG. 97 illustrates a state where a fluid connector according to a fifth embodiment of the present invention is separated from a fluid source.
FIG. 98 illustrates a state where the fluid connector shown in FIG. 97 is coupled to a fluid source.
FIGS. 99 and 100 illustrate a drawing for explaining a method of forming a coupling hole by perforating a fluid source wall.
FIG. 101 illustrates a front view of a socket.
FIG. 102 illustrates a plan view of the socket.
FIG. 103 illustrates a state where an inner pressurizing surface is formed at a socket head.
FIG. 104 illustrates a front view of a washer.
FIG. 105 illustrates a sectional view of the washer.
FIG. 106 illustrates a plan view of the washer.
FIGS. 107 to 113 are drawings for explaining a method of installing a fluid connector at a fluid source.
FIG. 114 is a drawing for explaining the principle that a socket body and a washer hold a fluid source wall.

### [Best Mode]

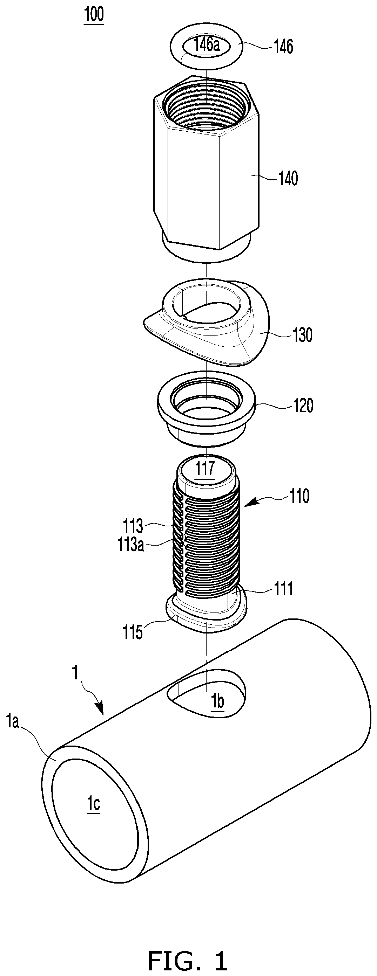

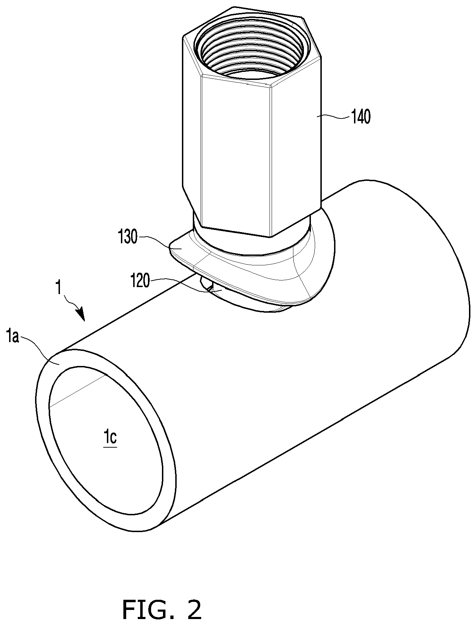

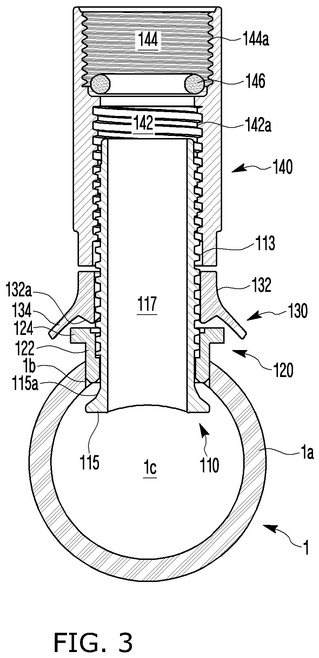

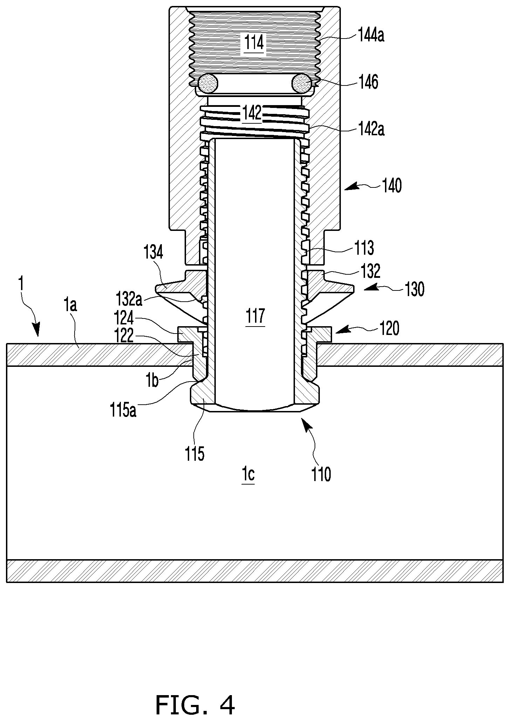

FIG. 1 illustrates an exploded perspective view of a fluid connector and main pipe according to a first embodiment of the present invention, FIG. 2 illustrates a combined perspective view of the fluid connector and main pipe shown in FIG. 1, FIG. 3 illustrates a sectional view of the fluid connector and main pipe shown in FIG. 2, when viewed in the longitudinal direction of the main pipe, and FIG. 4 illustrates a sectional view of the fluid connector and the main pipe shown in FIG. 2, when viewed in the width direction of the main pipe.

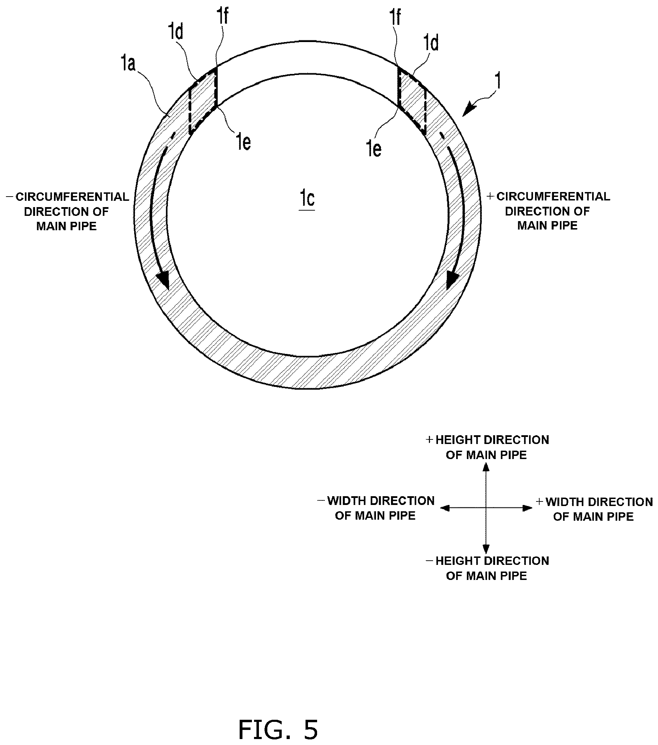

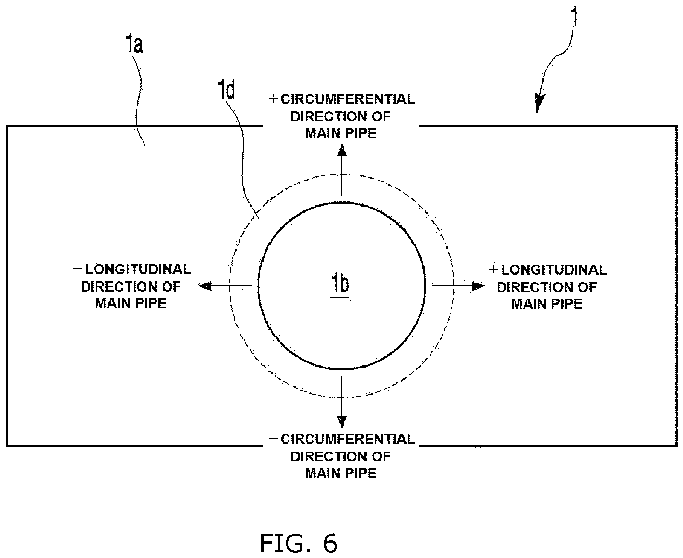

In addition, FIG. 5 illustrates a sectional view of the main pipe when viewed in the longitudinal direction of the main pipe, and FIG. 6 illustrates a plan view of the main pipe.

Referring to FIGS. 1 to 4, a fluid connector 100 according to the first embodiment of the present invention may include a socket 110, an elastic bushing 120, a washer 130, a tightening nut 140, etc.

The type of a main pipe 1 on which the fluid connector 100 can be installed is not particularly limited. For example, the main pipe 1 may be a pipe made of a material such as a hard plastic or metal that has a degree of rigidity that allows the main pipe 1 to maintain a predetermined shape even when an inside 1c of the main pipe 1 is not filled with fluid, such as an agricultural water pipe or a water pipe, but have a thickness greater than a predetermined standard thickness.

In addition, the fluid connector 100 is provided to be coupled to a coupling hole 4b formed by perforating a wall of the main pipe 1 (hereinafter referred to as 'the main pipe wall 1a') to communicate the inside 1c of the main pipe 1 with the outside. Accordingly, as shown in FIGS. 5 and 6, a work of perforating a specific location of the main pipe 1, to which a branch pipe 2 is to be connected, to form a coupling hole 1b for coupling the fluid connector 100 needs to be performed first using a punch or other perforation members so as to install the fluid connector 100 on the main pipe 1. The coupling hole 1b is preferably formed in the height direction of the main pipe 1 perpendicular to the longitudinal direction or width direction of the main pipe 1, but the present invention is not limited thereto. In addition, the coupling hole 1b is preferably circular, but the present invention is not limited thereto.

Hereinafter, the fluid connector 100 is described based on the case where the circular coupling hole 1b is perforated in the height direction of the main pipe wall 1a. In addition, a peripheral area surrounding the coupling hole 1b among the entire area of the main pipe wall 1a is named a coupling hole-surrounding part 1d, a corner connecting the inner surface of the coupling hole-surrounding part 1d and the inner peripheral surface of the coupling hole 1b is named an inner corner 1e of the coupling hole 1b, and a corner connecting the outer surface of the coupling hole-surrounding part 1d and the inner peripheral surface of the coupling hole 1b is named an inner corner 1e of the coupling hole 1b.

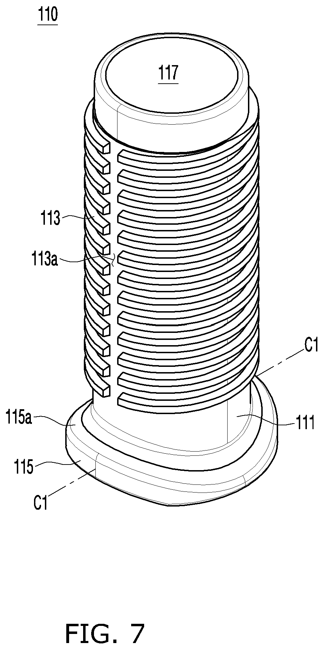

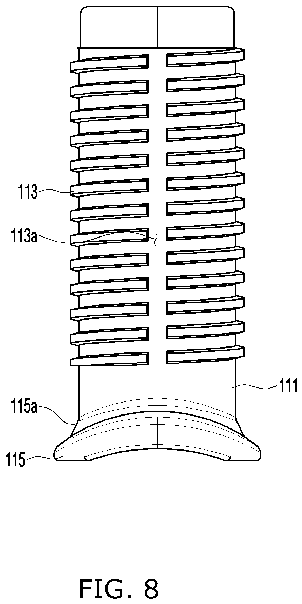

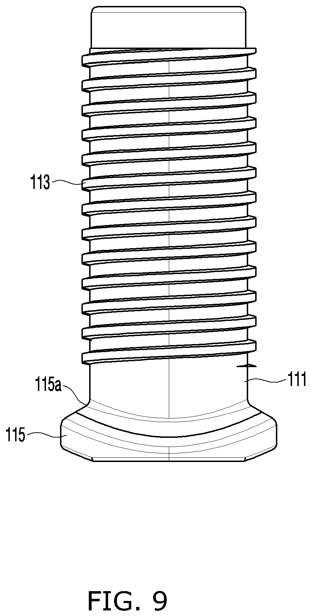

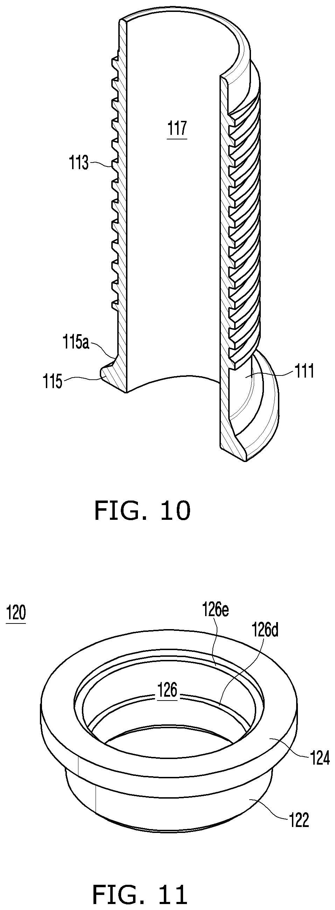

FIG. 7 illustrates a perspective view of a socket, FIG. 8 illustrates a front view of the socket shown in FIG. 7, FIG. 9 illustrates a side view of the socket shown in FIG. 7, and FIG. 10 illustrates a sectional view of the socket shown in FIG. 7.

The socket 110 is a member for connecting the main pipe 1 with the branch pipe such that a fluid flowing along the main pipe 1 can be delivered to the branch pipe 2. The socket 110 may include a socket body 111, a first male screw thread 113, a socket head 115, and a discharge hole 117, etc.

First, the socket body 111 has a cylindrical shape lengthily elongated along the height direction of the fluid connector 100. The socket body 111 has a diameter that is smaller by a predetermined ratio compared to the diameter of the coupling hole 1b.

Next, the first male screw thread 113 is formed to protrude from an outer peripheral surface of the socket body 111. In particular, the first male screw thread 113 is preferably formed to be spaced apart by a predetermined clearance from each of the upper end and low end of the socket body 111, but the present invention is not limited thereto. Here, the upper end of the socket body 111 refers to an end, where the socket head 115 to be described below is formed, among both ends of the socket body 111, and the upper end of the socket body 111 refers to an end opposite to the lower end among the both ends of the socket body 111.

In addition, the first male screw thread 113 is larger than the diameter of the socket body 111 by a predetermined ratio, but has an outer diameter smaller than the diameter of the coupling hole 1b by a predetermined ratio. That is, when a worker perforates the coupling hole 1b, the worker needs to perforate the coupling hole 1b to have a larger diameter than the outer diameter of the first male screw thread 113 by a predetermined ratio.

A guide groove 113a into which a guide block 132c of the washer 130 to be described below is movably inserted along the height direction of the fluid connector 100 is concavely formed on the first male screw thread 113 along the height direction of the fluid connector 100. A detailed description of the guide groove 113a is provided below together with a description of the guide block 132c.

Next, the socket head 115 is formed at the lower end of the socket body 111 so as to be concentric with the socket body 111.

In addition, the diameter of the socket head 115 is the same as the diameter of the coupling hole 1b or is smaller than the diameter of the coupling hole 1b by a predetermined ratio.

In addition, an inner pressurizing surface 115a that extends from the lower end of the socket body 111 and is downwardly sloped to have a height that is gradually decreased from the center of the socket 110 to the outer edge is formed on the upper surface of the socket head 115. In particular, the inner pressurizing surface 115a may be formed so that the slope angle of the inner pressurizing surface 115a gradually decreases as approaching an imaginary center line C1 penetrating the center of the socket 110 in the longitudinal direction of the main pipe 1, and the slope angle thereof gradually increases as it is away from the center line C1. The socket head 115 provided with the inner pressurizing surface 115a has a curved shape that is bent in an arch shape with a curvature corresponding to the curvature of the main pipe 1 based on the center line C1 so that the highest point of the inner pressurizing surface 115a is located on the center line C1.

The discharge hole 117 is formed by perforating the inside of the socket 110 to penetrate the socket head 115 and the socket body 111 in the height direction of the fluid connector 100.

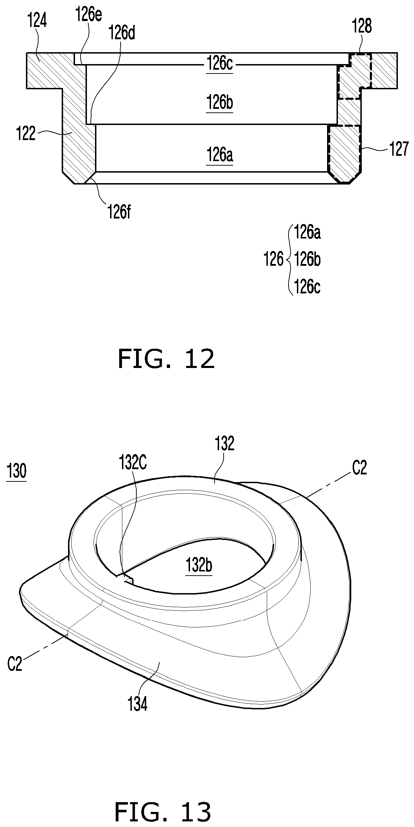

FIG. 11 is a perspective view of an elastic bushing, and FIG. 12 is a sectional view of the elastic bushing shown in FIG. 11.

The elastic bushing 120 is a member for sealing the coupling hole 1b while coupling the fluid connector 100 to the main pipe 1.

In addition, the elastic bushing 120 is composed of an elastic material that can be elastically deformed. For example, the elastic bushing 120 may be composed of a rubber material.

In addition, the elastic bushing 120 may pressurize the inner peripheral surface of the coupling hole 1b not only in the height direction of the main pipe 1, but also in the longitudinal direction and circumferential direction of the main pipe 1 at a predetermined angle with the height direction of the main pipe 1 so that the elastic bushing 120 and the fluid connector 100 including the elastic bushing 120 are provided to be coupled to the main pipe 1. For this, the elastic bushing 120 may have a coupling part 122, an engagement part 124, an insertion hole 126, etc.

First, the coupling part 122 is formed such that at least a portion of the coupling part 122 is elastically deformed due to pressure applied when the socket 110 and the tightening nut 140 are screwed together, and each of the inner corner 1e and outer corner 1f of the coupling hole 1b is pressurized in the height direction of the main pipe 1 while being pressurizing in at least one direction of at least one direction of the longitudinal direction and circumferential direction of the main pipe 1.

For this, the coupling part 122 has a length longer by a predetermined ratio compared to the depth of the coupling hole 1b such that a lower part of the coupling part 122 penetrates the coupling hole 1b by a predetermined length to protrude into the inside 1c of the main pipe 1.

The shape of the coupling part 122 is not particularly limited. For example, the coupling part 122 may be configured in a cylindrical shape wherein the diameter of the coupling part 122 is the same as the diameter of the coupling hole 1b or smaller by a predetermined ratio compared to the diameter of the coupling hole 1b.

Next, the engagement part 124 is formed to be caught and adhered to the outer surface of the coupling hole-surrounding part 1d while being elastically deformed due to pressure applied when the socket 110 and the tightening nut 140 are screwed together. For example, the engagement part 124 may have a disk shape that extends from the upper end of the coupling part 122 to be concentric with the coupling part 122 and has a diameter larger by a predetermined ratio compared to the diameter of the coupling hole 1b.

Next, the insertion hole 126 is formed to be concentric with the coupling part 122 and the engagement part 124 and to penetrate the coupling part 122 and the engagement part 124 in the height direction of the fluid connector 100.

The insertion hole 126 may include a first insertion hole 126a, a second insertion hole 126b, a third insertion hole 126c, etc.

The first insertion hole 126a is formed to be positioned at a lower part of the insertion hole 126. More specifically, the first insertion hole 126a is formed to penetrate a lower part of a coupling part 122. The first insertion hole 126a has a diameter that is the same as the diameter of the socket body 111 or a diameter that is larger by a predetermined ratio compared to the diameter of the socket body 111 but is smaller by a predetermined ratio compared to the outer diameter of the first male screw thread 113 such that the lower end of the socket body 111 where the first male screw thread 113 is not formed can be inserted into the first insertion hole 126a.

The first insertion hole 126a may include a bent guide surface 126f slantingly formed at a lower part of the inner peripheral surface of the first insertion hole 126a such that the diameter of the first insertion hole 126a gradually increases toward a lower end of the first insertion hole 126a. The bent guide surface 126f may guide the lower part of the coupling part 122 such that the lower part of the coupling part 122 is uniformly bent while sliding in at least one direction of a longitudinal direction and circumferential direction of the main direction 1 along the inner pressurizing surface 115a of the socket 110 when pressure is applied to the coupling part 122 in the height direction of the main pipe 1 in a process of screw-tightening the socket 110 and the tightening nut 140.

The second insertion hole 126b is positioned on an upper side of the first insertion hole 126a, and formed to extend from an upper end of the first insertion hole 126a to be connected to the first insertion hole 126a. More specifically, the second insertion hole 126b is formed to penetrate an upper part of the coupling part 122 and a lower part of the engagement part 124. The second insertion hole 126b has a diameter that is the same as the outer diameter of the first male screw thread 113 or is larger by a predetermined ratio compared to the outer diameter of the first male screw thread 113 such that the first male screw thread 113 can be inserted into the second insertion hole 126b. Accordingly, the second insertion hole 126b and the first insertion hole 126a may be connected to form a step structure. In this case, a bottom surface of the second insertion hole 126b may support a lower end of the first male screw thread 113. Accordingly, the bottom surface of the second insertion hole 126b is referred to as a support surface 126d.

The third insertion hole 126c is positioned on an upper side of the second insertion hole 126b, and is formed to extend from an upper end of the second insertion hole 126b to be connected to a second insertion hole 126b. More specifically, the third insertion hole 126c is formed to penetrate an upper part of an engagement part 124. The third insertion hole 126c has a diameter larger by a predetermined ratio compared to the second insertion hole 126b. Accordingly, the third insertion hole 126c and the second insertion hole 126b may be connected to form a step structure. In this case, an inner peripheral surface and bottom surface of the third insertion hole 126c may function as an alignment groove 126e that assists in allowing the elastic bushing 120 to be uniformly, elastically deformed to fit the curvature of the main pipe 1 in a state of being aligned in a predetermined manner in conjunction with an outer pressurizing surface 132a of the washer 130 to be described below.

As the elastic bushing 120 is formed as described above, the lower part of the coupling part 122 formed inside the first insertion hole 126a may function as an inner sealing part 127 that is brought into close contact with the inner corner 1e of the coupling hole 1b while being elastically deformed due to pressure applied when the socket 110 and the tightening nut 140 are screwed together. Accordingly, the first insertion hole 126a preferably has a depth equal to or deeper than a predetermined reference depth such that the fluid connector 100 can be applied to various types of the main pipes 1 whose main pipe walls 1a have different thicknesses. In addition, a corner for connecting the upper part of the coupling part 122, inside which the second insertion hole 126b is formed, and the engagement part 124 functions as an outer sealing part 128 that is brought into close contact with the outer corner 1f of the coupling hole 1b while being elastically deformed due to pressure applied when the socket 110 and the tightening nut 140 are screwed together. A more detailed description of the inner sealing part 127 and the outer sealing part 128 is provided below.

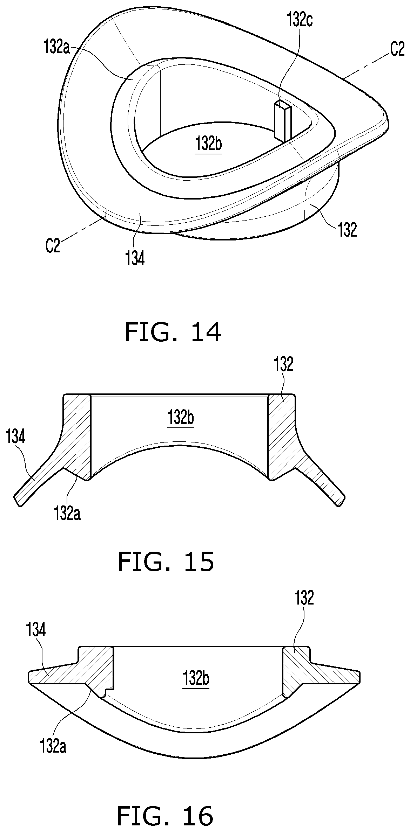

FIG. 13 illustrates a perspective view of a washer as viewed from above, FIG. 14 illustrates a perspective view of the washer shown in FIG. 13 as viewed from below, FIG. 15 illustrates a sectional view of the washer shown in FIG. 13 as viewed in a longitudinal direction of a main pipe, and FIG. 16 illustrates a sectional view of the washer shown in FIG. 13 as viewed in a width direction of the main pipe.

The washer 130 is a member for converting pressure, applied when the socket 110 and the tightening nut 140 are screwed together, into a predetermined manner to pressurize the elastic bushing 120.

In addition, the washer 130 may be made of plastic or a material having a rigidity that can maintain an original shape without being deformed due to pressure applied when another socket 110 and another tightening nut 140 are screwed together.

In addition, the washer 130 may include a washer body 132, a flange 134, etc.

First, the washer body 132 has a cylindrical shape that has a diameter larger by a predetermined ratio compared to the diameter of the coupling hole 1b.

In addition, the washer body 132 may include an outer pressurizing surface 132a formed on an outer peripheral surface of a lower end of the washer body 132 to pressurize the alignment groove 126e of the elastic bushing 120, an insertion hole 132b formed to penetrate the center of the washer body 132 in the height direction of the fluid connector 100 such that the first male screw thread 113 is movably inserted into the insertion hole 132b, a guide block 132c formed to protrude from the inner peripheral surface of the insertion hole 132b along the height direction of the fluid connector 100, etc.

The outer pressurizing surface 132a is formed on the outer peripheral surface of the lower end of the washer body 132, and is configured as an upwardly inclined surface whose height gradually increases from the center of the washer 130 to the outer edge thereof. In particular, the outer pressurizing surface 132a has a slope angle formed to gradually decrease as it is away from an imaginary center line C2 that penetrates the center of the washer 130 along the longitudinal direction of the main pipe 1. The lower end of the washer body 132 on which the outer pressurizing surface 132a is formed has a curved shape that is bent into an arch shape with a curvature corresponding to the curvature of the main pipe 1 based on the center line C2 such that the highest point of the outer pressurizing surface 132a is located on the center line C2.

The insertion hole 132b is formed to penetrate in the height direction of the fluid connector 100 at the center of the washer body 132. In addition, the insertion hole 132b has a diameter that is the same as the outer diameter of the first male screw thread 113 or is larger by a predetermined ratio compared to the outer diameter of the first male screw thread 113 such that the first male screw thread 113 is movably inserted into the insertion hole 132b.

The guide block 132c is formed to protrude toward the center of the insertion hole 132b from the inner peripheral surface of the insertion hole 132b so as to be positioned on the center line C2 or an imaginary vertical line perpendicular to the center line C2, and to lengthily extend along the height direction of the fluid connector 100. In addition, the guide block 132c has a smaller width than the guide groove 113a so as to be movably inserted into the guide groove 113a of the first male screw thread 113 in the height direction of the fluid connector 100.

Next, the flange 134 is formed to extend from a lower end of the washer body 132 so as to be connected to an upper end of the outer pressurizing surface 132a.

In addition, the flange 134 has a disk shape that has a diameter larger by a predetermined ratio compared to the diameter of the washer body 132, and has a curved shape that is bent in an arch shape with a curvature corresponding to the curvature of the main pipe 1 based on the center line C2 such that the highest point having the maximum height is located on the center line C2.

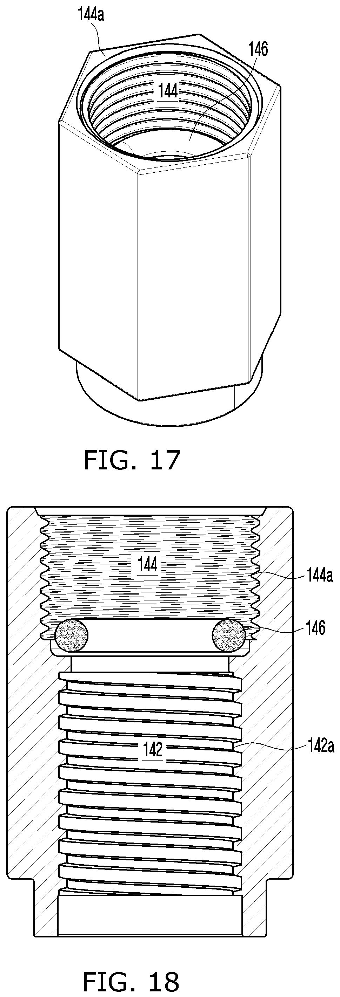

FIG. 17 illustrates a perspective view of a tightening nut, and FIG. 18 illustrates a sectional view of the tightening nut shown in FIG. 17.

Next, the tightening nut 140 is a member for coupling the branch pipe 2 to the fluid connector 100 while coupling the elastic bushing 120 to the coupling hole 1b.

The tightening nut 140 preferably has a cylindrical shape lengthily elongated along the height direction of the fluid connector 100, but the present invention is not limited thereto. The tightening nut 140 may include a first coupling hole 142, a second coupling hole 144, a packing 146, etc.

The first coupling hole 142 is formed by perforating a lower part of the tightening nut 140 along the height direction of the fluid connector 100 such that the socket body 111 is inserted into the first coupling hole 142. In addition, the first coupling hole 142 has a predetermined length such that an upper end of the socket body 111 coupled to the first coupling hole 142 is brought into contact with the packing 146, but does not contact with an end of the branch pipe 2 coupled to the second coupling hole 144 when the coupling part 122 of the elastic bushing 120 is coupled to the main pipe 1 by screw-tightening the socket 110 with the tightening nut 140.

A first female screw thread 142a is formed on the inner peripheral surface of the first coupling hole 142 to be screw-coupled with the first male screw thread 113 of the socket body 111. Then, the socket 110 may be gradually coupled to the tightening nut 140 by rotating the tightening nut 140 along the first male screw thread 113 in a predetermined tightening direction such that the socket body 111 is gradually inserted into the first coupling hole 142, or the socket 110 may be gradually separated from the tightening nut 140 by rotating the tightening nut 140 along the first male screw thread 113 in a loosening direction opposite to the tightening direction such that the socket body 111 is gradually withdrawn from the first coupling hole 142.

The second coupling hole 144 is formed by perforating an upper part of the tightening nut 140 along the height direction of the fluid connector 100 such that an end of the branch pipe 2 can be inserted into the second coupling hole 144 and a lower end of the second coupling hole 144 aligns with an upper end of the first coupling hole 142. In addition, the second coupling hole 144 has a predetermined length such that the end of the branch pipe 2 is brought into contact with the packing 146, but is not brought into contact with an upper end of the socket body 111 coupled to the first coupling hole 142 when the end of the branch pipe 2 is coupled to the second coupling hole 144.

A second female screw thread 144a is formed on the inner peripheral surface of the second coupling hole 144 to be screw-coupled with a second male screw thread 2c formed at one end 2b of the branch pipe 2. A specific coupling relationship between the second coupling hole 144 and the branch pipe 2 is described below.

Meanwhile, the first coupling hole 142 and the second coupling hole 144 may have different diameters depending upon a difference between the diameter of the socket body 111 and the diameter of the end 2b of the branch pipe 2. For example, when the diameter of the end 2b of the branch pipe 2 is larger than the diameter of the socket body 111, the second coupling hole 144 may have a larger diameter than the first coupling hole 142.

The packing 146 has an annular ring shape with a through hole 146a at the center thereof.

The packing 146 is interposed between the upper end of the socket body 111 coupled to the first coupling hole 142 and the end 2b of the branch pipe 2 coupled to the second coupling hole 144, and installed to seal between the upper end of the socket body 111 and the end 2b of the branch pipe 2.

For example, the packing 146 may be installed to be settled on a bottom surface of the second coupling hole 14 joined with the upper end of the first coupling hole 142 when the second coupling hole 144 has a larger diameter than the diameter of the first coupling hole 142. The packing 146 has the same structure as a general packing, so a detailed description thereof is omitted.

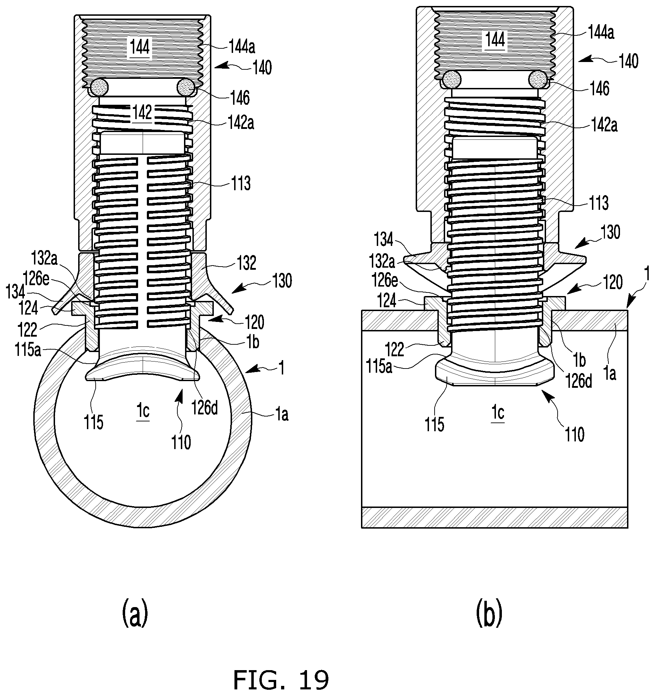

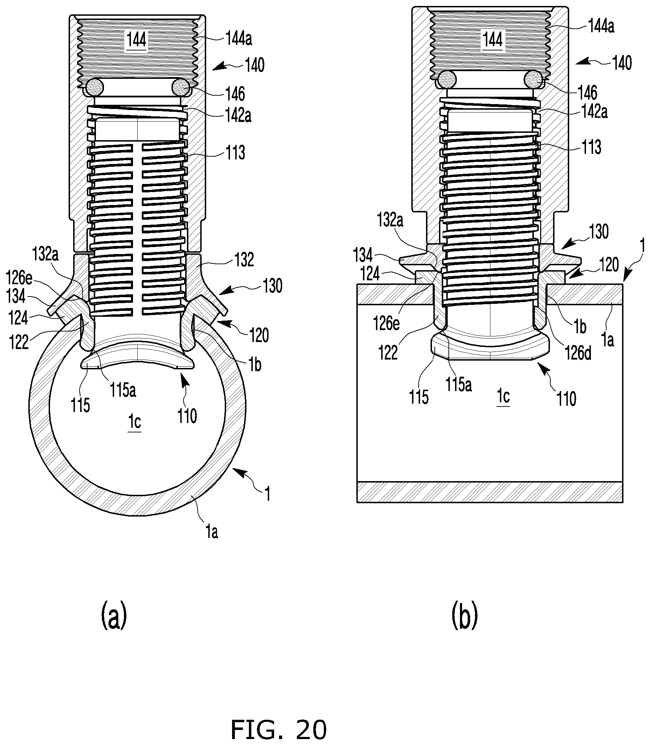

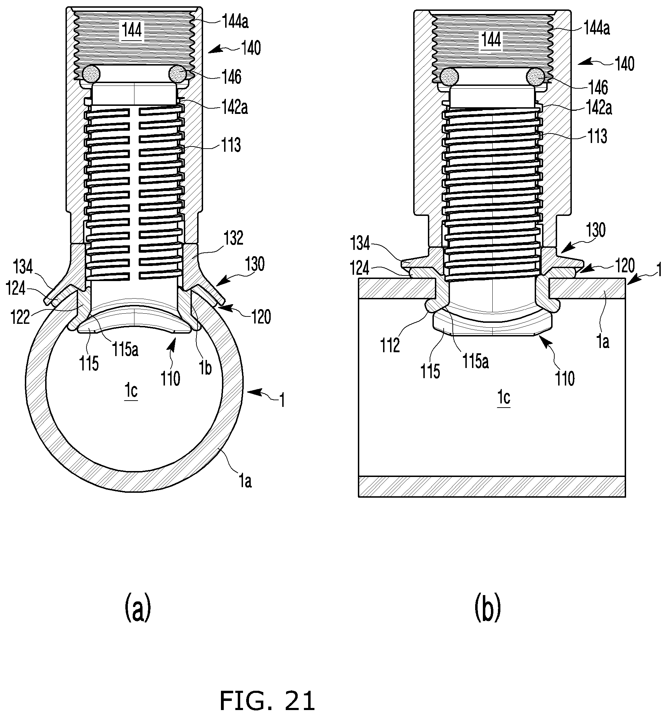

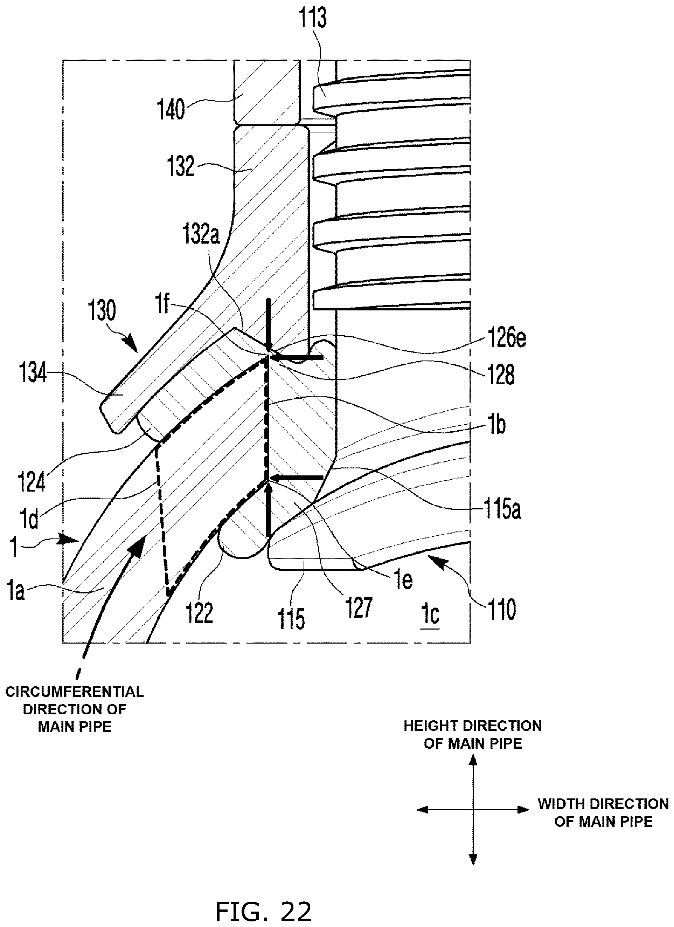

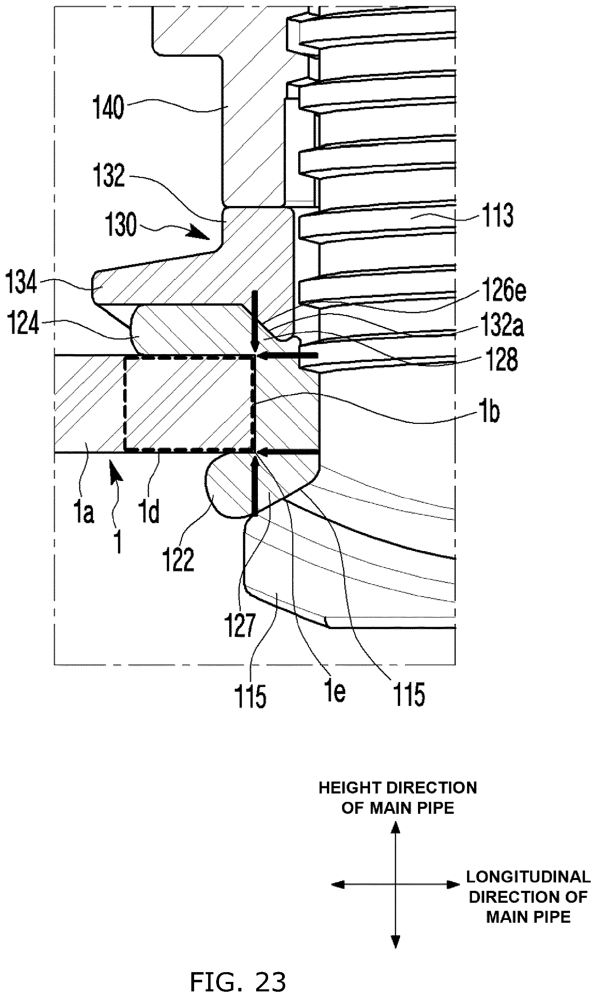

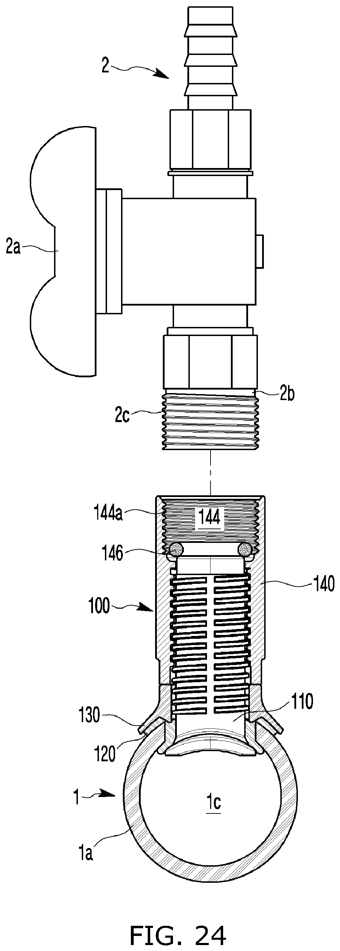

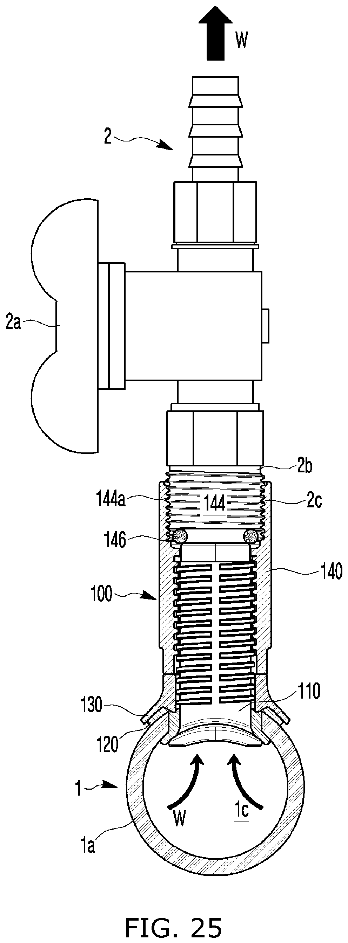

FIGS. 19 to 21 are drawings for explaining a method of installing the fluid connector to a main pipe, FIGS. 22 and 23 are drawings for explaining the principle that the elastic bushing holds a main pipe wall, and FIGS. 24 and 25 are drawings for explaining a method of coupling the branch pipe to the main pipe.

First, the coupling hole 1b is formed by perforating the main pipe wall 1a using a perforating member.

Next, the socket body 111 and the first male screw thread 113 are inserted into the insertion hole 126 such that the lower end of the first male screw thread 113 of the socket 110 is supported by the support surface 126d of the elastic bushing 120, thereby coupling the socket 110 with the elastic bushing 120.

Next, the engagement part 124 of the elastic bushing 120 is engaged with the highest point of the outer peripheral surface of the coupling hole-surrounding part 1d, and, at the same time, the socket head 115, a lower part of the socket body 111 connected to the socket head 115, the coupling part 122 of the elastic bushing 120 are inserted into the coupling hole 1b such that the outer sealing part 128 of the elastic bushing 120 comes into contact with the outer corner 1f. In this case, the socket head 115 is inserted into the coupling hole 1b such that the center line C1 accords with the longitudinal direction of the main pipe 1. Then, the entire area of the socket head 115 and the lower part of the socket body 111 penetrate the coupling hole 1b and protrude into the inside 1c of the main pipe 1. At the same time, when looking at the main pipe 1 in the width direction of the main pipe 1 as shown in FIG. 19(b), the engagement part 124 is engaged with the outer peripheral surface of the coupling hole-surrounding part 1d, while the lower part of the coupling part 122 penetrates the coupling hole 1b by a predetermined length and protrudes into the inside 1c of the main pipe 1. In response to this, when looking at the main pipe 1 in the longitudinal direction of the main pipe 1 as shown in FIG. 19(a), the engagement part 124 is spaced apart from the outer peripheral surface of the main pipe 1 in the + height direction and, at the same time, the lower part of the coupling part 122 protrudes into the inside 1c of the main pipe 1 by a shorter length than when looking at the main pipe 1 in the width direction of the main pipe 1 or is positioned inside the coupling hole 1b.

Next, the socket body 111 and the first male screw thread 113 are inserted into the insertion hole 132b of the washer 130 such that the outer pressurizing surface 132a of the washer 130 faces the alignment groove 126e of the elastic bushing 120, thereby coupling the washer 130 to the socket 110. In this case, the washer 130 couples the socket 110 to the outer pressurizing surface 132a such that the outer pressurizing surface 132a is spaced apart from the alignment groove 126e of the elastic bushing 120 by a predetermined clearance.

In addition, the washer 130 couples the guide block 132c to the socket 110 such that the guide block 132c is movably inserted into the guide groove 113a of the first male screw thread 113 in the height direction of the fluid connector. Then, the washer 130 is arranged such that the center line C2 accords with the longitudinal direction of the main pipe 1 and the flange 134 surrounds the outer peripheral surface of the main pipe 1 along the circumferential direction of the main pipe 1.

Next, by rotating and tightening the tightening nut 140 in a predetermined tightening direction along the first male screw thread 113 of the socket 110 in a state in which an upper end of the first male screw thread 113 of the socket 110 is placed on a lower end of the first female screw thread 142a of the tightening nut 140, the tightening nut 140 and the socket 110 are pre-coupled such that the upper end of the socket body 111 and an upper part of the first male screw thread 113 are inserted into the first coupling hole 142 by a predetermined length. In this case, it is preferred to couple with the socket 110 such that a lower end of the tightening nut 140 is settled on an upper end of the washer body 132, but the present invention is not limited thereto.

When the tightening nut 140 is rotated and tightened along the first male screw thread 113 in a state in which an upper end of the first male screw thread 113 is placed on the lower end of the first female screw thread 142a, the socket 110 is raised while the tightening nut 140 is lowered, so that a gap between the socket head 115 and the tightening nut 140 is gradually reduced. Accordingly, the socket body 111 is gradually inserted into the first coupling hole 142 through a lower opening of the first coupling hole 142 of the tightening nut 140, and a gap between the socket head 115, the elastic bushing 120, the washer 130 and the tightening nut 140 is gradually reduced. Accordingly, when the tightening nut 140 is additionally tightened in a state in which the tightening nut 140 is tightened such that the socket head 115, the elastic bushing 120, the washer 130 and the tightening nut 140 are in close contact with each other, the socket head 115 pressurizes an elastic bushing 120 in the + thickness direction of the main pipe 1, and the tightening nut 140 pressurizes the washer 130 in the - height direction of the main pipe 1. In addition, the washer 130 pressurizes the elastic bushing 120 in the - height direction of the main pipe 1 via pressure applied from the tightening nut 140. Then, the elastic bushing 120 is pressurized by the socket head 115 and the washer 130 in both up and down directions, thereby being elastically deformed.

Next, the tightening nut 140 and the socket 110 are fully connected by rotating the tightening nut 140 in a predetermined tightening direction along the first male screw thread 113 of the socket 110 until the upper end of the socket body 111 comes into contact with the packing 146 of the tightening nut 140.

When the tightening nut 140 and the socket 110 are fully connected in such a manner, the flange 134 of the washer 130 pressurizes the engagement part 124 toward the outer peripheral surface of the main pipe 1, so that the engagement part 124 is brought into close contact with the outer peripheral surface of the main pipe 1 while being elastically deformed into a curved shape by the flange 134.

In addition, the outer pressurizing surface 132a of the washer 130 pressurizes an inner surface of the alignment groove 126e of the elastic bushing 120 in at least one direction of the longitudinal direction and circumferential direction of the main pipe 1 while pressurizing the inner surface in the - height direction of the main pipe 1 through the above-described inclined structure. Then, the lower part of the coupling part 122 protrudes into the inside 1c of the main pipe 1 through the coupling hole 1b throughout the entire area of the coupling hole 1b while the coupling part 122 is elastically deformed, and, at the same time, the outer sealing part 128 elastically deformed by the outer pressurizing surface 132a pressurizes the outer corner 1f of the coupling hole 1b in at least one direction of the longitudinal direction and circumferential direction of the main pipe 1 while pressurizing the outer corner 1f in the - height direction of the main pipe 1.

The main pipe 1 has a cylindrical shape having a predetermined curvature, and the depth of the coupling hole 1b, the angle of the outer corner 1f, the height of the outer corner 1f, etc. have different values for each portion of the coupling hole 1b. Accordingly, a ratio of a pressure acting in the longitudinal direction of the main pipe 1 to a pressure acting in the circumferential direction of the main pipe 1, among the total pressure applied to the outer corner 1f by the outer sealing part 128, is different for each portion of the coupling hole 1b. More specifically, when looking at a cross-section of the main pipe 1, cut along the center line C1 of the socket body 111, in the width direction of the main pipe 1, the angle of the outer corner 1f becomes the maximum value (vertical), the height of the outer corner 1f becomes the maximum value, and the outer sealing part 128 pressurizes the outer corner 1f only in the longitudinal direction of the main pipe 1 without pressurizing in the circumferential direction of the main pipe 1. In contrast, when looking at a cross-section of the main pipe 1 cut to be perpendicular to the center line C1 of the socket body 111 in the longitudinal direction of the main pipe 1, the angle of the outer corner 1f becomes the minimum value (acute angle), the height of the outer corner 1f becomes the minimum value, and the outer sealing part 128 pressurizes the outer corner 1f only in the circumferential direction of the main pipe 1 without pressurizing in the longitudinal direction of the main pipe 1. That is, as approaching from the longitudinal direction of the main pipe 1 to the circumferential direction, the pressure acting in the longitudinal direction of the main pipe 1 is gradually reduced, and the pressure acting in the circumferential direction of the main pipe 1 gradually increases.

However, the slope angle of the outer pressurizing surface 132a is formed to gradually decrease as it is away from the center line C2. Accordingly, when arranging the socket 110 and the washer 130 as described above, a contact angle between the outer pressurizing surface 132a and the outer corner 1f becomes generally uniform over the entire area of the outer corner 1f. Accordingly, the sum of the pressure acting in the longitudinal direction of the main pipe 1 and the pressure acting in the circumferential direction of the main pipe 1, among the total pressure applied to the outer corner 1f by the outer sealing part 128 may become generally uniform over the entire area of the outer corner 1f.

In addition, the inner pressurizing surface 115a of the socket head 115 pressurizes the inner sealing part 127, which protrudes into the inside 1c of the main pipe 1, in at least one direction of the longitudinal direction and circumferential direction of the main pipe 1 while pressurizing the inner sealing part 127 in the + height direction of the main pipe 1, due to the above-described inclined structure. Then, the inner sealing part 127 elastically deformed by the inner pressurizing surface 115a pressurizes the inner corner 1e of the coupling hole 1b in at least one direction of the longitudinal direction and circumferential direction of the main pipe 1 while pressurizing the inner corner 1e in the + height direction of the main pipe 1.

The main pipe 1 has a cylindrical shape having a predetermined curvature, and the depth of the coupling hole 1b, the angle of the inner corner 1e, the height of the inner corner 1e, etc. are different for each portion of the coupling hole 1b. Accordingly, a ratio of the pressure acting in the longitudinal direction of the main pipe 1 to the pressure acting in the circumferential direction of the main pipe 1, among the total pressure applied to the inner corner 1e by the inner sealing part 127, is different for each portion of the coupling hole 1b. More specifically, when looking at a cross-section of the main pipe 1, cut along the center line C1 of the socket body 111, in the width direction of the main pipe 1, the angle of the inner corner 1e becomes the minimum value (vertical), the height of the inner corner 1e becomes the maximum value, and the inner sealing part 127 pressurizes the inner corner 1e only in the longitudinal direction of the main pipe 1 without pressurizing in the circumferential direction of the main pipe 1. In contrast, when looking at a cross-section of the main pipe 1, cut to be perpendicular to the center line C1 of the socket body 111, in the longitudinal direction of the main pipe 1, the angle of the inner corner 1e becomes the maximum value (obtuse angle), the height of the inner corner 1e becomes the minimum value, and the inner sealing part 127 pressurizes the inner corner 1e only in the circumferential direction of the main pipe 1 without pressurizing in the longitudinal direction of the main pipe 1. In response to this, as approaching from the longitudinal direction of the main pipe 1 to the circumferential direction, the pressure acting in the longitudinal direction of the main pipe 1 is gradually reduced, and the pressure acting in the circumferential direction of the main pipe 1 gradually increases.

However, the slope angle of the inner pressurizing surface 115a is gradually lowered as approaching the center line C1. Accordingly, when the socket 110 is arranged as described above, a contact angle between the inner pressurizing surface 115a and the inner corner 1e becomes generally uniform over the entire area of the inner corner 1e. Accordingly, the sum of the pressure acting in the longitudinal direction of the main pipe 1 and the pressure acting in the circumferential direction of the main pipe 1, among the total pressure applied to the inner corner 1e by the inner sealing part 127, may become generally uniform over the entire area of the inner corner 1e.

In addition, as described above, the bent guide surface 126f for guiding the lower part of the coupling part 122 is formed at the lower part of the first insertion hole 126 such that the lower part of the coupling part 122 slides in at least one direction of the longitudinal direction and circumferential direction of the main pipe 1 along the inner pressurizing surface 115a of the socket 110 when pressure is applied to the coupling part 122 in the height direction of the main pipe 1. Due to the bent guide surface 126f, the lower part of the coupling part 122 where the inner sealing part 127 is positioned is bent in at least one direction of the longitudinal direction and circumferential direction of the main pipe 1 while sliding along the bent guide surface 126f, thereby being uniformly elastically deformed according to a predetermined deformation pattern.

Next, the branch pipe 2 is coupled to the tightening nut 140.

The branch pipe 2 is a device for forming a branch stream branched from a main stream forming flowing along the main pipe 1, and may include an opening/closing valve 2a capable of opening/closing the branch pipe 2, and a second male screw thread 2c formed on the outer peripheral surface of the end 2b to be screw-coupled with the second female screw thread 144a of the tightening nut 140, etc. The branch pipe 2 may be coupled to the tightening nut 140 by inserting the end 2b into the second coupling hole 144 of the tightening nut 140, and then screw-coupling the second male screw thread 2c with the second female screw thread 144a of the tightening nut 140.

When the branch pipe 2 is coupled with the tightening nut 140 in such a manner, the inside 1c of the main pipe 1 and the branch pipe 2 may be sequentially connected through the discharge hole 117 of the socket 110, the first coupling hole 142 of the tightening nut 140 and the second coupling hole 144, whereby water or other fluids (W) flowing along the inside 1c of the main pipe 1 may be delivered to the branch pipe 2.

As described above, the fluid connector 100 is provided such that the inner sealing part 127 and the outer sealing part 128 can hold the inner corner 1e and the outer corner 1f together in at least one direction of the longitudinal direction and circumferential direction of the main pipe 1 as well as in the height direction of the main pipe 1 while maintaining a contact state between the inner and outer corners 1e and 1f and the inner and outer sealing parts 127 and 128 over the entire area of the coupling hole 1b. Accordingly, the fluid connector 100 may be firmly coupled to the main pipe 1 by the elastic bushing 120 such that the fluid connector 100 is not separated from the main pipe 1 when the main pipe 1 expands in the longitudinal direction and circumferential direction due to high-pressure water, and may prevent the occurrence of a gap, which may cause water leakage, between the outer peripheral surface of the elastic bushing 120 and the inner peripheral surface of the coupling hole 1b.

In addition, the fluid connector 100 may be fixed to the coupling hole 1b in a manner of pressurizing the inner corner 1e and the outer corner 1f of the coupling hole 1b in the longitudinal direction and the circumferential direction of the main pipe 1, which have relatively high rigidity compared to the thickness direction of the main pipe 1, using the elastic bushing 120. Accordingly, the fluid connector 100 may minimize the deformation of the main pipe 1 due to the installation of the fluid connector 100, compared to an existing fluid connector that pressurizes the main pipe 1 only in a thickness direction for installation.

In addition, the fluid connector 100 may prevent the fluid connector 100 from being separated from the coupling hole 1b due to non-uniform coupling force among pressurizing directions by forming the inner pressurizing surface 115a of the socket head 115, the outer pressurizing surface 132a and flange 134 of the washer 130, etc. in an arched structure or curved structure having a curvature corresponding to the curvature of the main pipe 1 such that the inner pressurizing surface 115a of the socket head 115, the outer pressurizing surface 132a and flange 134 of the washer 130, etc. can uniformly pressurize the inner corner 1e and outer corner 1f of the main pipe 1 regardless of pressurizing directions.

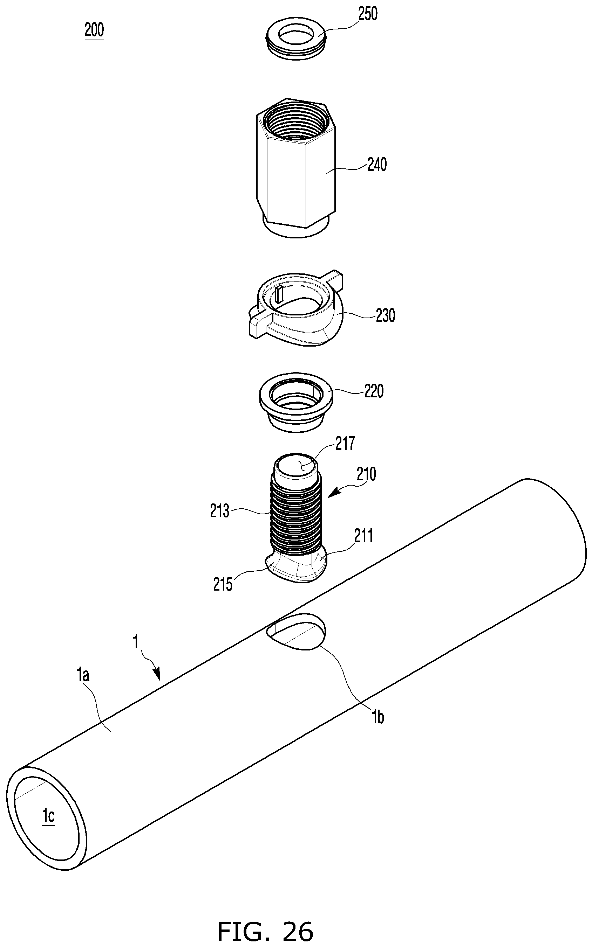

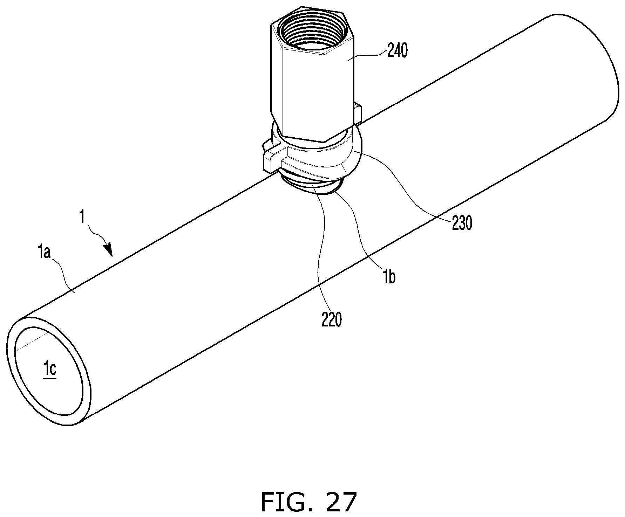

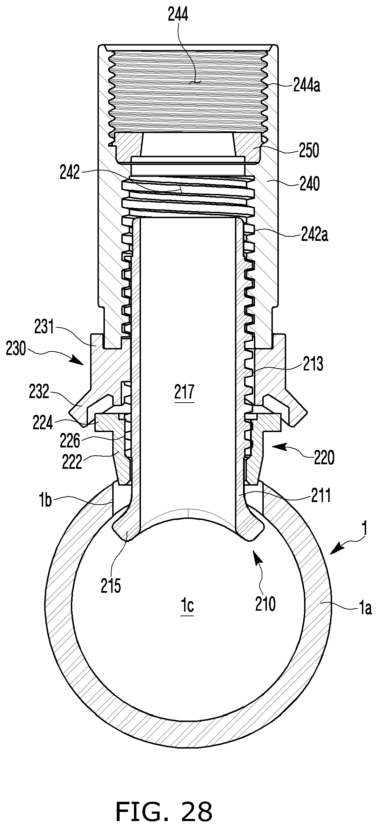

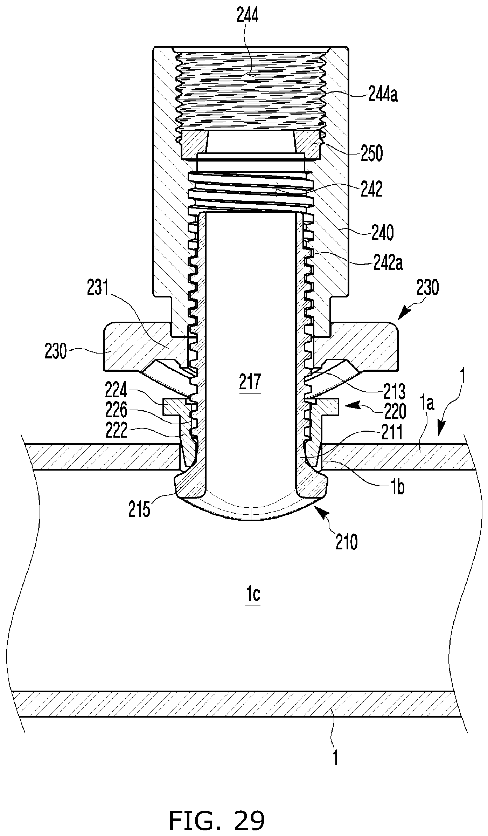

FIG. 26 illustrates an exploded perspective view of a fluid connector according to a second embodiment of the present invention, FIG. 27 illustrates a combined perspective view of the fluid connector shown in FIG. 26, FIG. 28 illustrates a sectional view of the fluid connector shown in FIG. 27 and a main pipe as viewed in a longitudinal direction of the main pipe, and FIG. 29 illustrates a sectional view of the fluid connector shown in FIG. 27 and the main pipe as viewed in a width direction of the main pipe.

Referring to FIGS. 26 to 29, a fluid connector 200 according to the second embodiment of the present invention may include a socket 210, an elastic bushing 220, a washer 230, a tightening nut 240, a packing 250, etc. The fluid connector 200 includes the washer 230 and packing 250 having improved structures compared to the above-described fluid connector 100. Hereinafter, descriptions of components included in the fluid connectors 100 and 200 are omitted or omitted or only briefly mentioned.

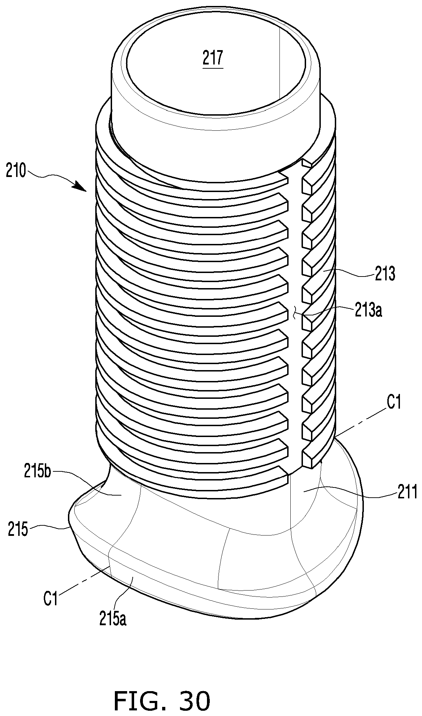

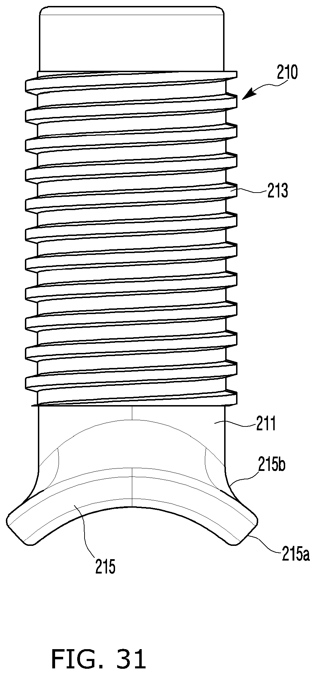

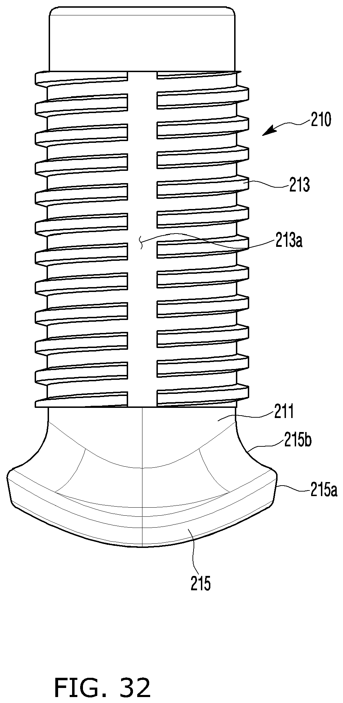

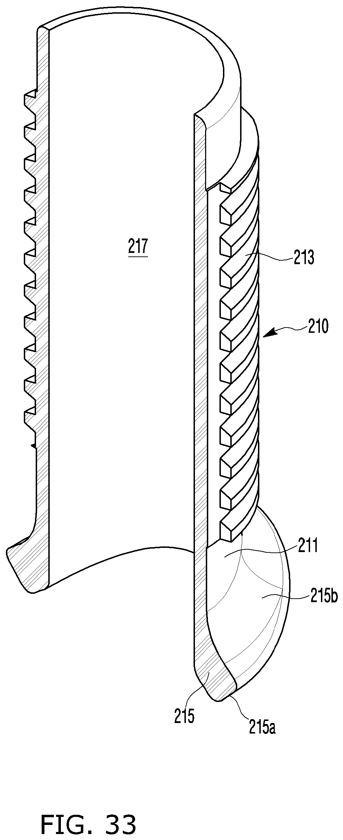

FIG. 30 illustrates a perspective view of a socket, FIG. 31 illustrates a front view of the socket shown in FIG. 30, FIG. 32 illustrates a side view of the socket shown in FIG. 30, and FIG. 33 illustrates a sectional view of the socket shown in FIG. 30.

The socket 210 may include a socket body 211, a first male screw thread 213, a socket head 215, a discharge hole 217, etc.

In addition, a guide groove 213a is concavely formed on the first male screw thread 213.

In addition, an insertion guide surface 215a is formed on a side surface of the socket head 215, and the inner pressurizing surface 215b is formed on an upper surface of the socket head 215. Here, the insertion guide surface 215a is provided to guide the socket head 215 such that the socket head 215 is easily inserted into the coupling hole 1b, and the socket head 215 preferably has an inclined structure wherein the diameter of the socket head 215 gradually decreases as approaching the lower end of the socket head 215, but the present invention is not limited thereto.

In addition, the inner pressurizing surface 215b may be formed such that its slope angle gradually decreases as approaching the center line C1, but gradually increases as being away from the center line C1. The socket head 215 having the inner pressurizing surface 215b has a curved shape bent in an arch shape to have a curvature corresponding to the curvature of the main pipe 1 based on the center line C1 such that the highest point of the inner pressurizing surface 215b is positioned on the center line C1.

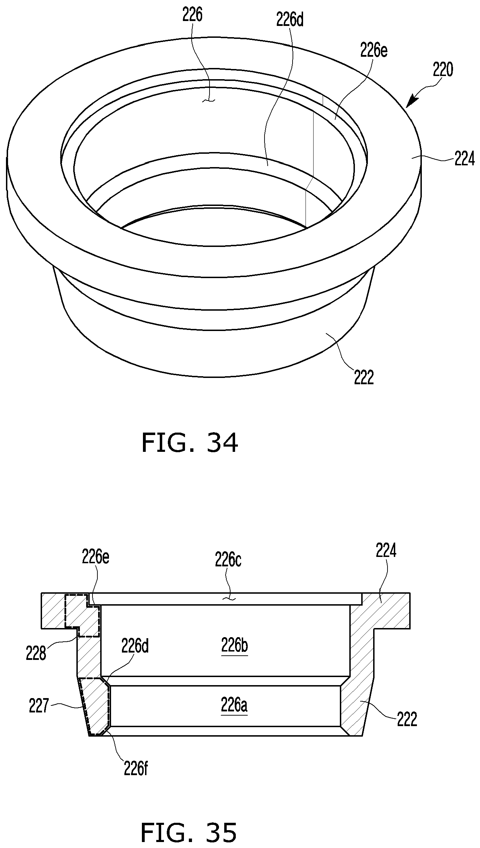

FIG. 34 illustrates a perspective view of an elastic bushing, and FIG. 35 illustrates a sectional view of the elastic bushing shown in FIG. 34.

The elastic bushing 220 may include a coupling part 222, an engagement part 224, an insertion hole 226, etc.

The outer peripheral surface of a lower part of the coupling part 222 may be configured to have an inclined surface wherein the diameter of the coupling part 222 gradually decreases as approaching a lower end of the coupling part 222. Accordingly, the coupling part 222 may be more easily inserted into the coupling hole 1b.

The insertion hole 226 may include a first insertion hole 226a, a second insertion hole 226b, a third insertion hole 226c, etc.

In addition, a bent guide surface 226f is formed at a lower part of the inner peripheral surface of the first insertion hole 226a.

In addition, a support surface 226d is formed on a bottom surface of the second insertion hole 226b.

In addition, an alignment groove 226e is formed on the inner peripheral surface and bottom surface of the third insertion hole 226c.

As described above, as the insertion hole 226 is formed, the lower part of the coupling part 222 formed inside the first insertion hole 226a functions as an inner sealing part 227. Accordingly, the first insertion hole 226a preferably has a length equal to or longer than a predetermined standard length such that the fluid connector 200 can be applied to a main pipe 1 having various thicknesses and diameters. In addition, a corner for connecting an upper part of the coupling part 222, inside which the second insertion hole 226b is formed, and the engagement part 224 functions as an outer sealing part 228 brought into contact with the outer corner 1f of the coupling hole 1b while being elastically deformed by an outer pressurizing surface 234 of the washer 230 to be described below.

The lower part of the coupling part 222 may function as the inner sealing part 227, and the corner for connecting the upper part of the coupling part 222, inside which the second insertion hole 226b is formed, and the engagement part 224 functions as the outer sealing part 228.

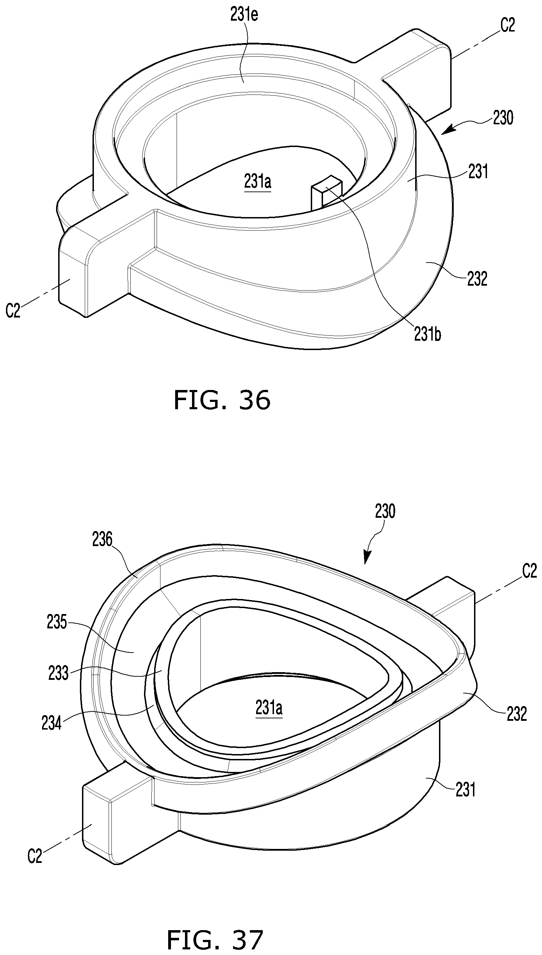

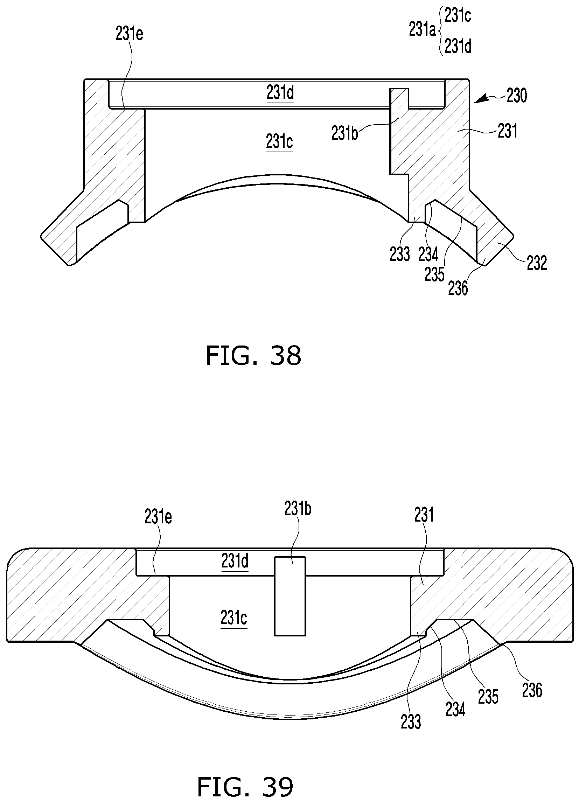

FIG. 36 illustrates a perspective view of a washer as viewed from above, FIG. 37 illustrates a perspective view of the washer shown in FIG. 36 as viewed from below, FIG. 38 illustrates a sectional view of the washer shown in FIG. 36 as viewed in a longitudinal direction of a main pipe, and FIG. 39 illustrates a sectional view of the washer shown in FIG. 36 as viewed in a width direction of the main pipe.

In addition, the washer 230 may include a washer body 231, a flange 232, an alignment protrusion 233, an outer pressurizing surface 234, a bent guide surface 235, a fixing protrusion 236, etc.

First, the washer body 231 has a cylindrical shape that has a diameter larger by a predetermined ratio compared to the diameter of the coupling hole 1b.

In addition, the washer body 231 may include an insertion hole 231a formed to penetrate the center of the washer body 231 in the height direction of the fluid connector 20 such that the first male screw thread 213 is movably inserted thereinto; a guide block 231b formed to protrude from the inner peripheral surface of the insertion hole 231a along the height direction of the fluid connector 200, etc.

The insertion hole 231a is formed to penetrate the center of the washer body 231 in the height direction of the fluid connector 20 such that the socket body 211 and the first male screw thread 213 are movably inserted thereinto. In addition, the insertion hole 231a may include a first insertion hole 231c that is formed at a lower part of the washer body 231 and has a diameter that is the same as the outer diameter of the first male screw thread 213 or larger by a predetermined ratio compared to the outer diameter of the first male screw thread 213 such that the first male screw thread 213 is movably inserted thereinto; and a second insertion hole 231d that is formed at an upper end of the washer body 231 and has a diameter larger by a predetermined ratio compared to the diameter of the first insertion hole 231c such that a lower end of the second insertion hole 231d is connected to the upper end of the first insertion hole 231c. When the first insertion hole 231c and the second insertion hole 231d are formed in such manners, the second insertion hole 231d and the first insertion hole 231c are connected to form a step structure, whereby a bottom surface of the second insertion hole 231d may function as a settlement surface 231e on which a lower end of the tightening nut 240 is settled.

The guide block 231b protrudes toward the center of the insertion hole 231a from the inner peripheral surface of the insertion hole 231a, and is formed to lengthily extend along the height direction of the fluid connector 200. In addition, the guide block 231b has a smaller width than the guide groove 213a to be movably inserted into the guide groove 213a of the first male screw thread 213 in the height direction of the fluid connector 20.

The flange 232 is formed to extend from the lower end of the washer body 231 so as to be connected to a lower end of the washer body 231.

In addition, the flange 232 has a disk shape having a diameter larger by a predetermined ratio compared to the diameter of the washer body 231. In particular, the flange 232 has a curved shape bent in an arch shape to have a curvature corresponding to the curvature of the main pipe 1 based on an imaginary center line C2 such that the highest point having the maximum height is positioned on the center line C2 that penetrates the center of the washer 230 along the longitudinal direction of the main pipe 1.

The alignment protrusion 233 is formed to protrude from a lower surface of the flange 232 so as to be inserted into the alignment groove 226e of the elastic bushing 220 in the - height direction of the main pipe 1 when installing the fluid connector 200 at the main pipe 1. The alignment protrusion 233 has preferably a ring shape surrounding the first insertion hole 231c, but the present invention is not limited thereto.

In particular, the height of the alignment protrusion 233 is gradually lowered as it is away from the center line C2. The alignment protrusion 233 is inserted into the alignment groove 226e of the elastic bushing 220 to align the elastic bushing 220 in a predetermined arrangement shape, thereby assisting the elastic bushing 220 to be uniformly elastically deformed.

The outer pressurizing surface 234 is formed on a bottom surface of the flange 232 to extend from an upper end of the outer peripheral surface of the alignment protrusion 233. The outer pressurizing surface 234 is configured to have an upwardly inclined surface whose height gradually increases as approaching from the center of the washer 230 to the outer edge thereof. In particular, the slope angle of the outer pressurizing surface 234 gradually decreases as it is away from the center line C2 of the washer 230.

The outer pressurizing surface 234 is formed to extend toward an outer edge of the washer 230 from the upper end of the outer peripheral surface of the alignment protrusion 233 so as to face the outer corner 1f of the coupling hole 1b with the outer sealing part 228 of the elastic bushing 220 therebetween when installing the fluid connector 200 at the main pipe 1. The outer pressurizing surface 234 is configured to have an upwardly inclined surface whose height gradually increases toward the outer edge of the washer 230 from the center thereof. In particular, the slope angle of the outer pressurizing surface 234 gradually decreases as it is away from the center line C2 of the washer 230. A more detailed description of the outer pressurizing surface 234 is provided below.

The bent guide surface 235 is formed on a bottom surface of the flange 232 to extend toward an outer edge of the washer body 231 from an upper end of the outer pressurizing surface 234. The bent guide surface 235 may be configured to have a downwardly inclined surface wherein the highest point elongated in the longitudinal direction of the main pipe 1 along the center line C2 is configured as a horizontal plane, but the height of a remaining portion excluding the center line C2 is gradually lowered as it is away from the center line C2. Accordingly, the bent guide surface 235 may bend the engagement part 224 of the elastic bushing 220 to be in close contact with the outer peripheral surface of the main pipe 1.

The fixing protrusion 236 extends from an outer end of the bent guide surface 235, and is formed on a bottom surface of the flange 232 to protrude toward an outer peripheral surface of the main pipe wall 1a. In particular, the fixing protrusion 236 has a predetermined height to be in close contact with an outer surface of one area of the main pipe wall 1a located away from the coupling hole 1b by a predetermined distance, compared to the coupling hole-surrounding part 1d, when installing the fluid connector 200 at the main pipe 1.

In addition, the fixing protrusion 236 has a ring shape, but has an inner diameter larger than an outer diameter of the engagement part 224 to pressurize an outer surface of the main pipe wall 1a when installing the fluid connector 200 at the main pipe 1. Accordingly, the fixing protrusion 236 is brought into close contact with the outer surface of the main pipe wall 1a such that frictional force acts between the fixing protrusion 236 and the main pipe wall 1a, thereby fixing the fluid connector 200 not to be separated from the main pipe 1.

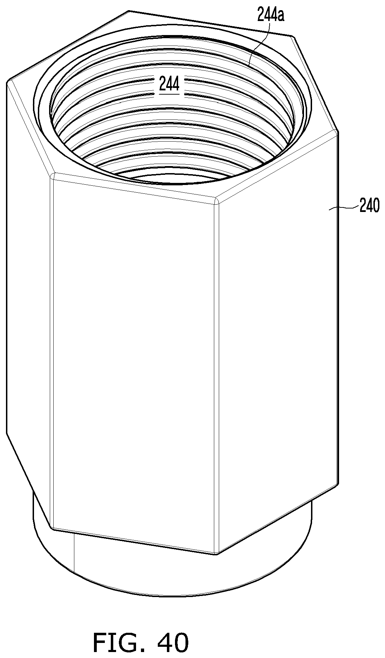

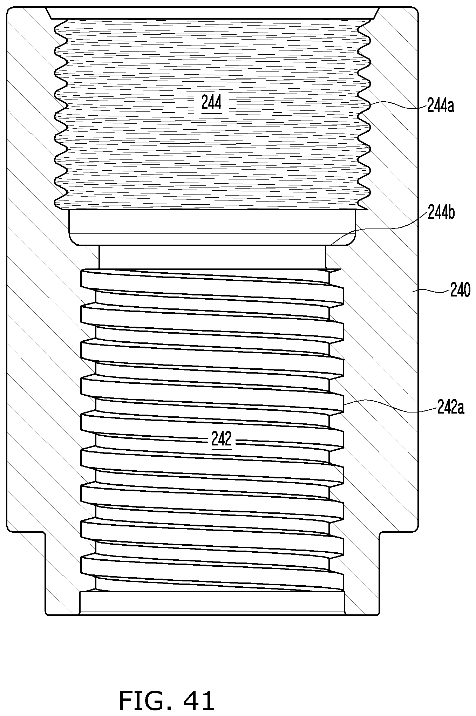

FIG. 40 illustrates a perspective view of a tightening nut, and FIG. 41 illustrates a sectional view of the tightening nut shown in FIG. 40.

The tightening nut 240 may include a first coupling hole 242, a second coupling hole 244, etc.

A first female screw thread 242a is formed on the inner peripheral surface of the first coupling hole 242.

A second female screw thread 244a is formed on the inner peripheral surface of the second coupling hole 244.

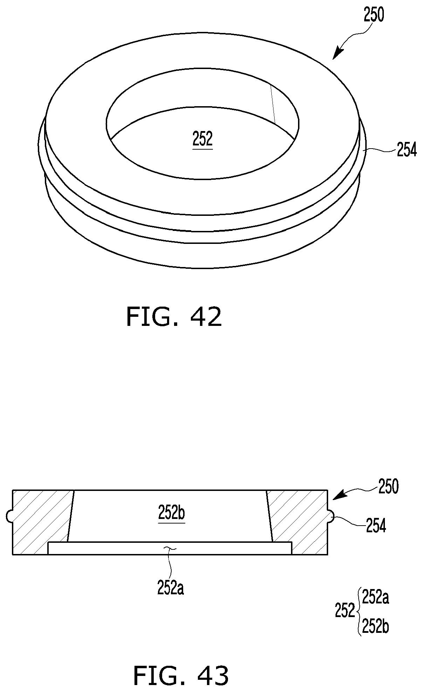

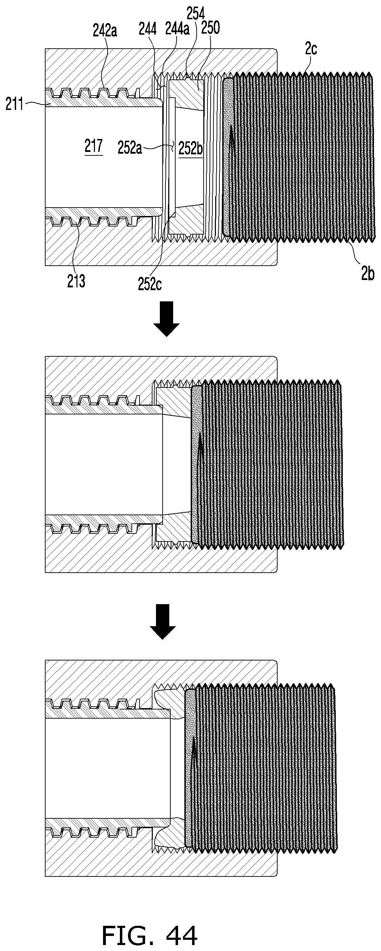

FIG. 42 illustrates a perspective view of a packing, FIG. 43 illustrates a sectional view of the packing shown in FIG. 42, and FIG. 44 illustrates that a gap between a socket and a branch pipe is sealed by the packing.

The packing 250 has an annular ring shape at the center of which a through hole 252 is formed, and is composed of rubber or other elastically deformable materials.

In addition, the packing 250 may be interposed between an upper end of the socket body 211 coupled to the first coupling hole 242 and one end 2b of the branch pipe 2 coupled to the second coupling hole 244, thereby sealing between the upper end of the socket body 211 and the end 2b of the branch pipe 2.

For example, when the second coupling hole 244 has a larger diameter than the diameter of the first coupling hole 242, the packing 250 may be installed on a bottom surface 244b of the second coupling hole 244. In this case, the packing 250 has a diameter larger by a predetermined ratio compared to the diameter of the end 2b of the branch pipe 2.

The packing 250 may include the through hole 252 formed to penetrate the center of the packing 250 so as to allow the socket 210 and the branch pipe 2 to communicate with each other; an engagement portion 254 engaged with the second female screw thread 244a of the tightening nut 240, and formed to protrude from the outer peripheral surface to fix the packing 250 to a predetermined position of the second coupling hole 244; etc.

In addition, the through hole 252 includes a first through hole 252a formed at the lower part of the packing 250 and configured to have a diameter that is the same as the diameter of the socket body 211 or larger by a predetermined ratio compared to the diameter of the socket body 211; a second through hole 252b formed at the upper part of the packing 250 such that the lower end of second through hole 252b communicates with the upper end of the first through hole 252a and configured to have a diameter smaller by a predetermined ratio compared to the diameter of the socket body 211, etc. Then, the first through hole 252a and the second through hole 252b are connected to each other to form a step structure, and a ceiling surface 252c of the first through hole 252a may function as a support surface for supporting the socket body 211.

In addition, the second through hole 252b preferably has an inclined structure whose diameter is gradually reduced as approaching the upper end of the packing 250, but the present invention is not limited thereto. Then, When the end 2b of the branch pipe 2 is inserted into the second coupling hole 244 of the tightening nut 240 so that the branch pipe 2 is coupled with the tightening nut 240, the packing 250 is pressurized by the end 2b of the branch pipe 2 to be elastically deformed, so that, even if the diameter of the second through hole 252b partially expands, a contact state between the end 2b of the branch pipe 2 and the packing 250 may be stably maintained.

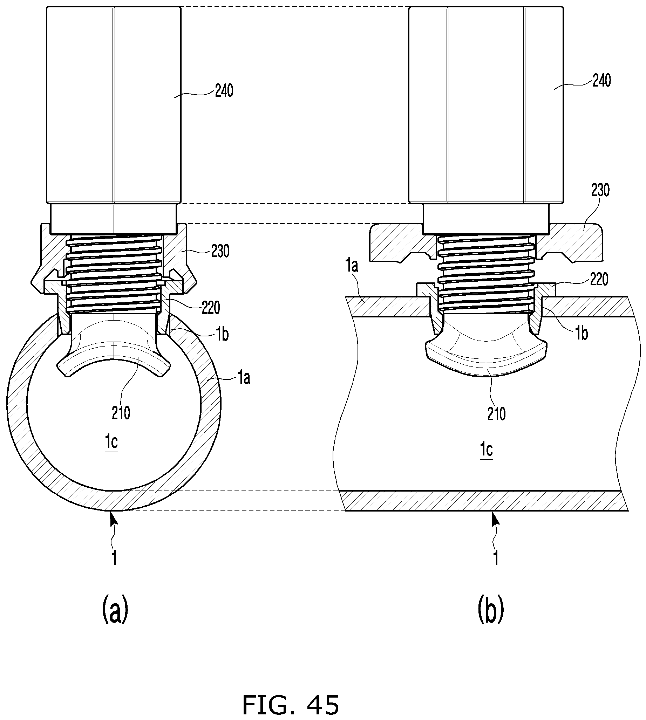

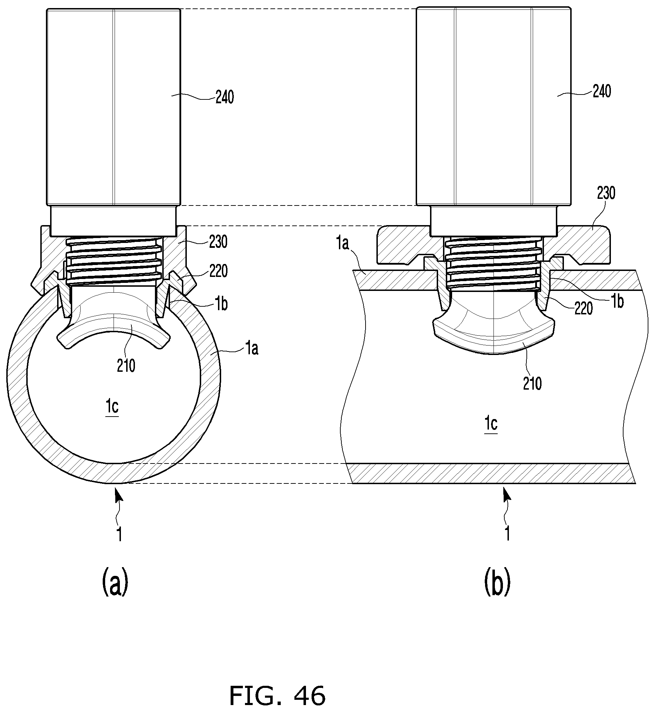

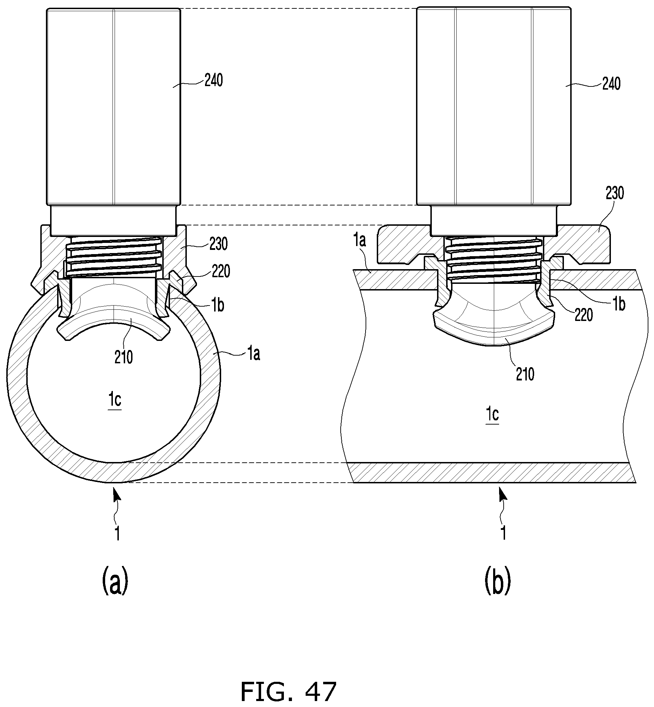

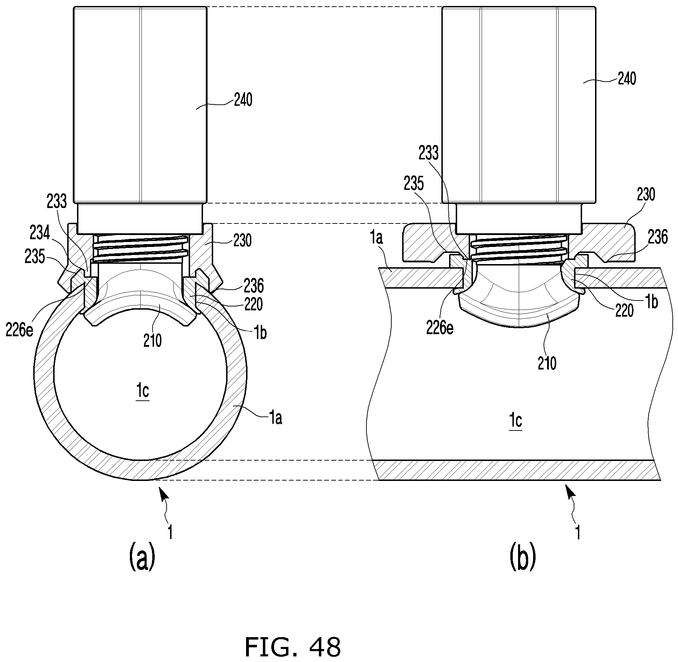

FIGS. 45 to 48 are drawings for explaining a method of connecting a main pipe and a branch pipe to each other using a fluid connector.

Hereinafter, a method of connecting a main pipe and a branch pipe to each other using a fluid connector is described with reference to the accompanying drawings.

First, the main pipe wall 1a is perforated to form the coupling hole 1b using a perforating member.

Next, the socket body 211 and the first male screw thread 213 are inserted into the insertion hole 226, thereby coupling the socket 210 with the elastic bushing 220.

Next, the socket head 215; the lower part of the socket body 211 connected to the socket head 215, and the coupling part 222 of the elastic bushing 220 are inserted into the coupling hole 1b. In this case, the socket head 215 is inserted into the coupling hole 1b such that the center line C1 accords with the longitudinal direction of the main pipe 1.

Next, the socket body 211 and the first male screw thread 213 are inserted into the insertion hole 231a of the washer 230, thereby coupling the washer 230 to the socket 210.

Next, the tightening nut 240 is pre-coupled with the socket 210 by rotating and tightening the tightening nut 240 in a predetermined tightening direction along the first male screw thread 213 of the socket 210 such that the upper end of the socket body 211 and the upper part of a second male screw thread 213 is inserted into the first coupling hole 242 by a predetermined length.

Next, the tightening nut 240 is fully connected with the socket 210 by rotating and tightening the tightening nut 240 in a predetermined tightening direction along the first male screw thread 213 of the socket 210 such that the upper end of the socket body 211 comes into contact with the packing 250 of the tightening nut 240.

When the tightening nut 240 is fully connected with the socket 210 in such a manner, the inner sealing part 227 and outer sealing part 228 of the elastic bushing 220 pressurize the inner corner 1e and outer corner 1f of the coupling hole 1b in the height direction of the main pipe 1 while being elastically deformed by the inner pressurizing surface 215b of the socket body 211 and the outer pressurizing surface 234 of the washer 230 and, at the same time, pressurize and hold the inner corner 1e and the outer corner 1f in at least one direction of the longitudinal direction and circumferential direction of the main pipe 1. Accordingly, the elastic bushing 220 and the fluid connector 200 may be coupled to the main pipe 1.

In addition, the inner sealing part 227 and the outer sealing part 228 may be uniformly elastically deformed in a state in which the elastic bushing 220 is aligned in a predetermined arrangement pattern by a fixing protrusion 233 inserted into the alignment groove 226e, thereby preventing coupling force of the elastic bushing 220 to a main pipe 1 from being decreased due to irregular elastic deformation of the inner sealing part 227 and the outer sealing part 228.

Next, the branch pipe 2 is coupled to the tightening nut 240.

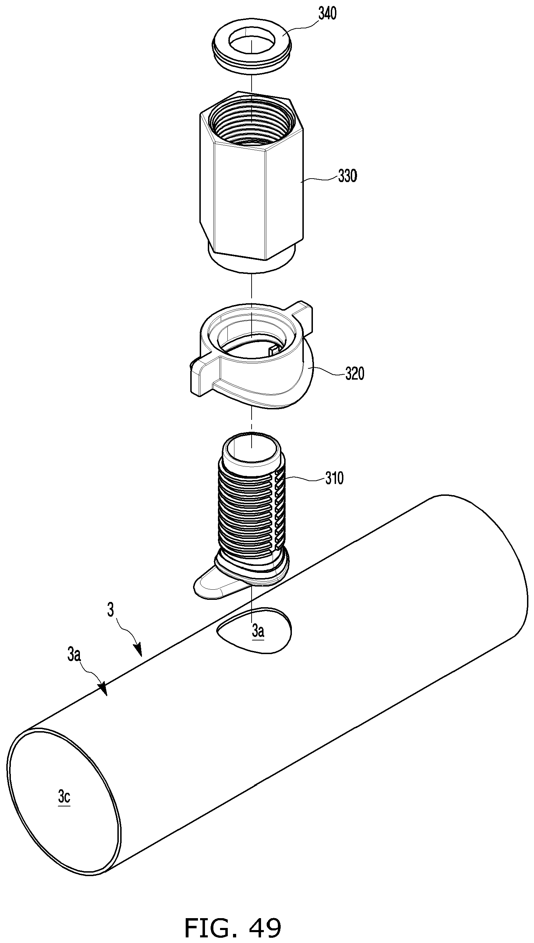

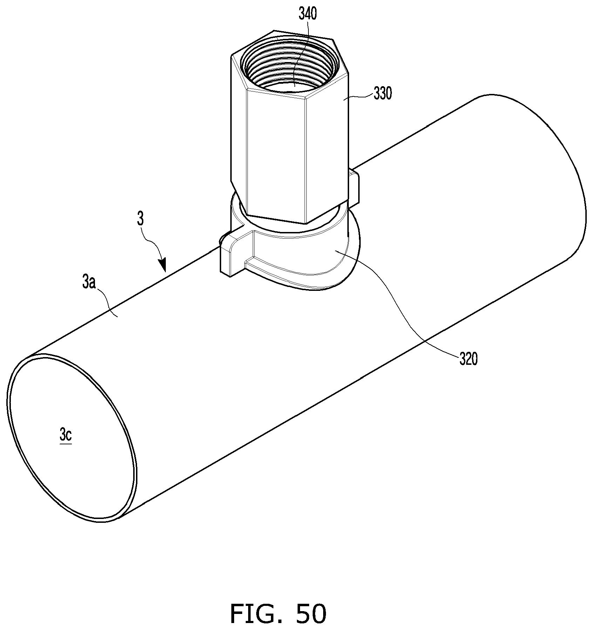

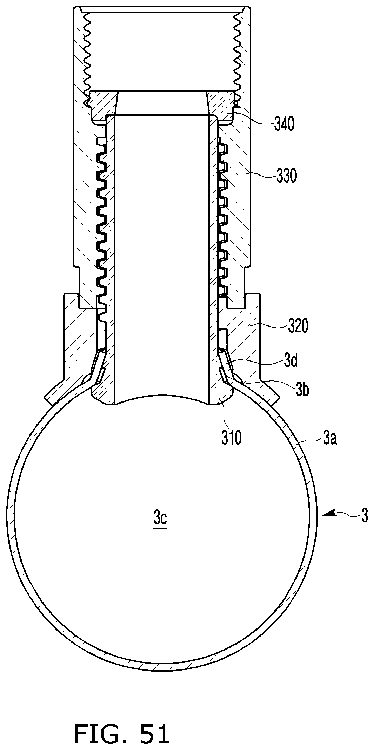

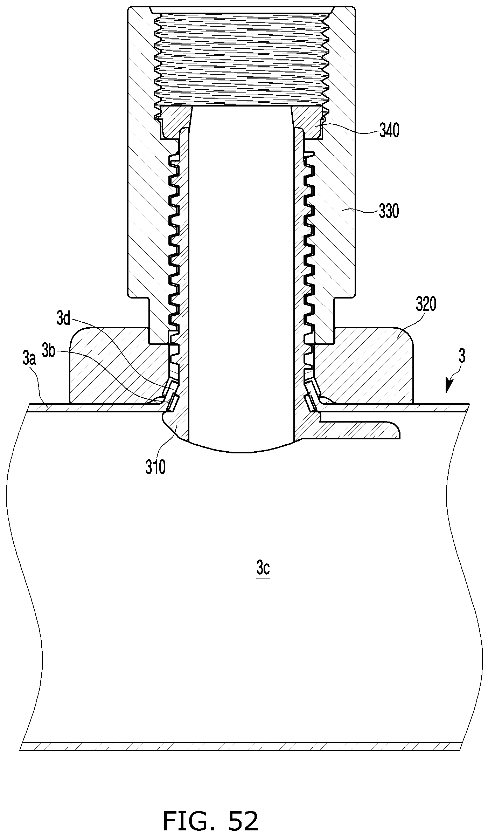

FIG. 49 illustrates an exploded perspective view of a fluid connector and main pipe according to the third embodiment of the present invention, FIG. 50 illustrates a combined perspective view of the fluid connector and main pipe shown in FIG. 49, FIG. 51 illustrates a sectional view of the fluid connector and main pipe shown in FIG. 50 as viewed in a longitudinal direction of the main pipe, and FIG. 52 illustrates a sectional view of the fluid connector and main pipe shown in FIG. 50 as viewed in a width direction of the main pipe.

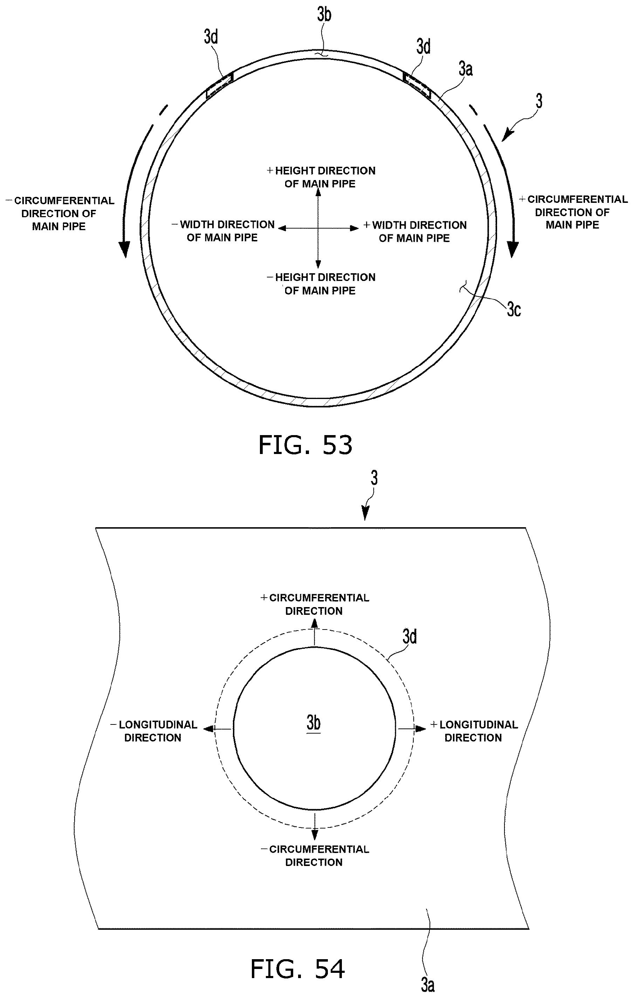

In addition, FIG. 53 illustrates a sectional view of the main pipe as viewed in a longitudinal direction of the main pipe, and FIG. 54 illustrates a plan view of the main pipe.

A fluid connector 300 according to the third embodiment of the present invention may include a socket 310, a washer 320, a tightening nut 330, a packing 340, etc. Some configurations of the fluid connector 300 have been changed, thereby being constructed in a different manner from the installation manners of the fluid connectors 100 and 200 described above. Hereinafter, descriptions of the same constructions included in the fluid connectors 100, 200 and 300 are omitted or only briefly mentioned.

The fluid connector 300 is provided by elastically deforming a coupling hole-surrounding part 3d corresponding to the peripheral area of a coupling hole 3b formed by perforating a position, where a branch pipe 2 is to be installed, in the entire area of a wall (hereinafter referred to as "main pipe wall 3a") of a main pipe 3 to form a wing part 3e, and then fixing the wing part 3e using the washer 320 and the socket 310 so that the fluid connector 300 is coupled to the coupling hole 3b while sealing the coupling hole 3b.

Accordingly, to install the fluid connector 300, a work of perforating the coupling hole 3b, which is to be used to couple the fluid connector 300 to the main pipe wall 3a, using a punch or other drilling devices is performed first. It is preferred to perforate the coupling hole 3b in the thickness direction of the main pipe wall 3a, but the present invention is not limited thereto. In addition, the coupling hole 3b is preferably circular, but the present invention is not limited thereto.

For this, the main pipe 3 to which the fluid connector 300 is to be applied is preferably made of a soft material that is easy to elastically deform, and preferably has a thinner thickness than the main pipe 1 described above. For example, the main pipe 3 may be an elastic hose made of an elastic material, such as PVC or rubber, which can be elastically deformed. In this case, the main pipe 3 is preferably a knitted hose having a woven knitted yarn embedded in its wall to prevent tearing or tearing of the main pipe 3, but is not limited thereto.

As described above, the fluid connector 300 is preferably applied to the main pipe 3 made of a soft material, but the present invention is not limited thereto. For example, even if a main pipe is made of a hard material, the fluid connector 300 may be installed on a main pipe 3 made of a hard material, in an environment where the main pipe 3 can be elastically deformed with ease, such as when the temperature of an installation location is high or a region around a main pipe's joint hole is heat-treated at high temperature.

Meanwhile, the tightening nut 330 and the packing 340 have the same structures as the tightening nut 240 of the fluid connector 200 and the packing 250 described above. Accordingly, descriptions of the tightening nut 330 and the packing 340 are omitted.

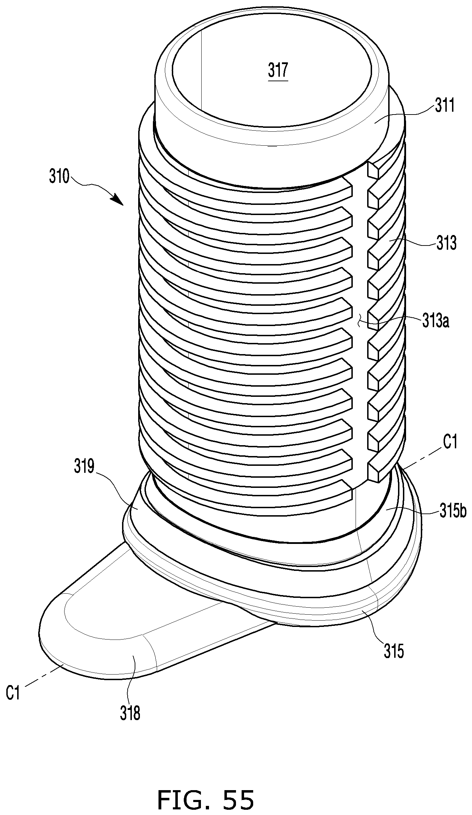

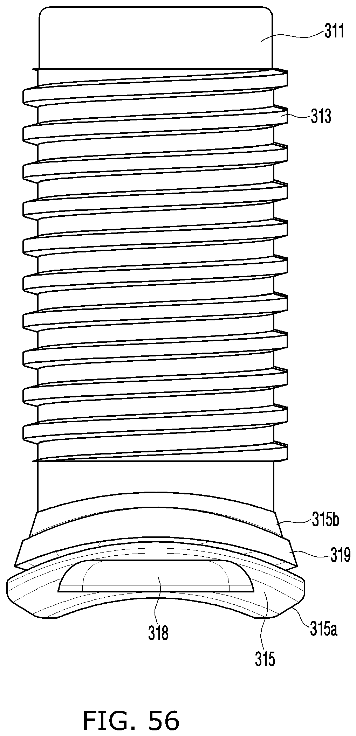

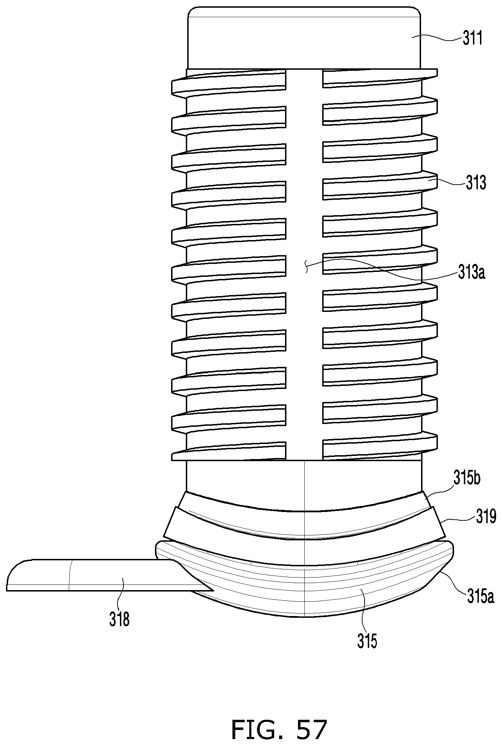

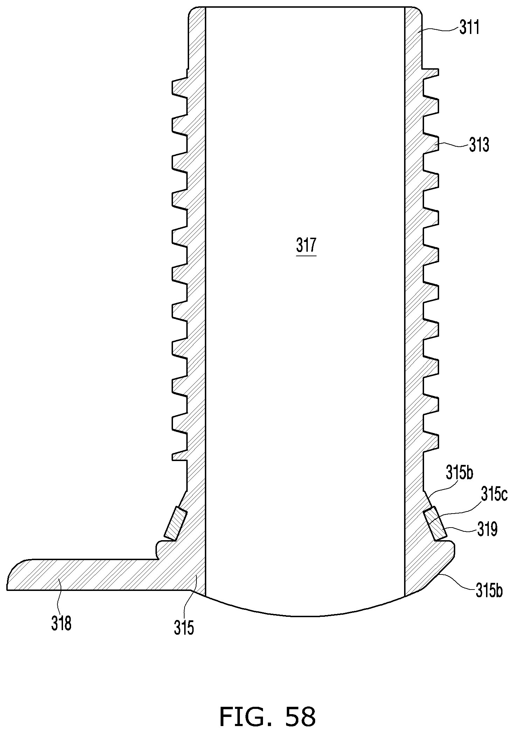

FIG. 55 illustrates a perspective view of a socket, FIG. 56 illustrates a front view of the socket shown in FIG. 55, FIG. 57 illustrates a side view of the socket shown in FIG. 55, and FIG. 58 illustrates a sectional view of the socket shown in FIG. 55.

The socket 310 may include a socket body 311, a first male screw thread 313, a socket head 315, a discharge hole 317, a hook 318, an O-ring 319, etc.

The socket body 311 has a cylindrical shape lengthily elongated along the height direction of the fluid connector 300. The socket body 311 has a diameter larger by a predetermined ratio compared to the diameter of the coupling hole 3b.

The first male screw thread 313 is formed to protrude from the outer peripheral surface of the socket body 311 to have an outer diameter larger by a predetermined ratio compared to the diameter of the socket body 311. In particular, the first male screw thread 313 is preferably formed to be spaced apart from each of upper and lower ends of the socket body 311 by a predetermined clearance. Here, a lower end of the socket body 311 refers to an end, where the socket head 315 to be described below is formed, among both ends of the socket body 311, and an upper end of the socket body 311 refers to an end, which is opposite to the lower end, among both the ends of the socket body 311.

On the first male screw thread 313, a guide groove 313a into which a guide block 321b of the washer 320 described below is movably inserted along the height direction of the fluid connector 300 is concavely formed along the height direction of the fluid connector 300. A detailed description of the guide groove 313a is described below together with a description of the guide block 321b.

The socket head 315 is formed at the lower end of the socket body 311 to be concentric with the socket body 311, and has a diameter larger by a predetermined ratio compared to the outer diameter of a first male screw thread 313. Then, the following relationship is established between the coupling hole 3b, the socket body 311, the first male screw thread 313 and the socket head 315.

Diameter of socket head 315 > Outer diameter of first male screw thread 313 > Diameter of socket body 311 > Diameter of coupling hole 3b

In addition, an insertion guide surface 315a for guiding the socket head 315 to easily insert the socket head 315 into the coupling hole 3b is formed on the side surface of the socket head 315. The insertion guide surface 315a preferably has an inclined structure wherein the diameter of the socket head 315 is gradually reduced as approaching the lower end of the socket head 315, but the present invention is not limited thereto.

In addition, an inner pressurizing surface 315b, which has a downwardly sloped shape wherein it extends from the lower end of the socket body 311 and its height is gradually lowered as approaching from the center of the socket head 315 to the outer edge thereof, is formed on the upper surface of the socket head 315. In particular, the slope angle of the inner pressurizing surface 315b may gradually decrease as approaching an imaginary center line C1 penetrating the center point of the socket 310 in the longitudinal direction of the main pipe 3, and may gradually increase as it is away from the center line C1. The socket head 315 where the inner pressurizing surface 315b has been formed has a curved shape bent in an arch shape to have a curvature corresponding to the curvature of the main pipe 3 based on the center line C1 such that the highest point of the inner pressurizing surface 315b is positioned on the center line C1.

In the inner pressurizing surface 315b, an O-ring groove 315c onto which the O-ring 319 can be fit is concavely formed. Preferably, the height of the O-ring groove 315c gradually increases as approaching the center line C1, but gradually decreases as it is away from the center line C1, but the present invention is not limited thereto.

The discharge hole 317 is formed by perforating the inside of the socket 310 to penetrate the socket head 315 and the socket body 311 in the height direction of the fluid connector 300.

The hook 318 is formed to protrude from the side surface of the socket head 315 in the extension direction of the center line C1 of the socket head 315 (the longitudinal direction of the main pipe 3). The hook 318 is formed at a predetermined height on the side surface of the socket head 315 to be spaced apart from the inner peripheral surface of the main pipe 3 by a predetermined distance when inserted into the inside 3c of the main pipe 3 through the coupling hole 3b.

The O-ring 319 is formed of elastically deformable rubber or other materials and fitted onto the O-ring groove 315c. The O-ring 319 preferably has a thickness greater by a predetermined ratio than the depth of the O-ring groove 315c. Then, when the O-ring 319 is fitted onto the O-ring groove 315c, the O-ring 319 may protrude to be higher by a predetermined height than the inner pressurizing surface 315b.

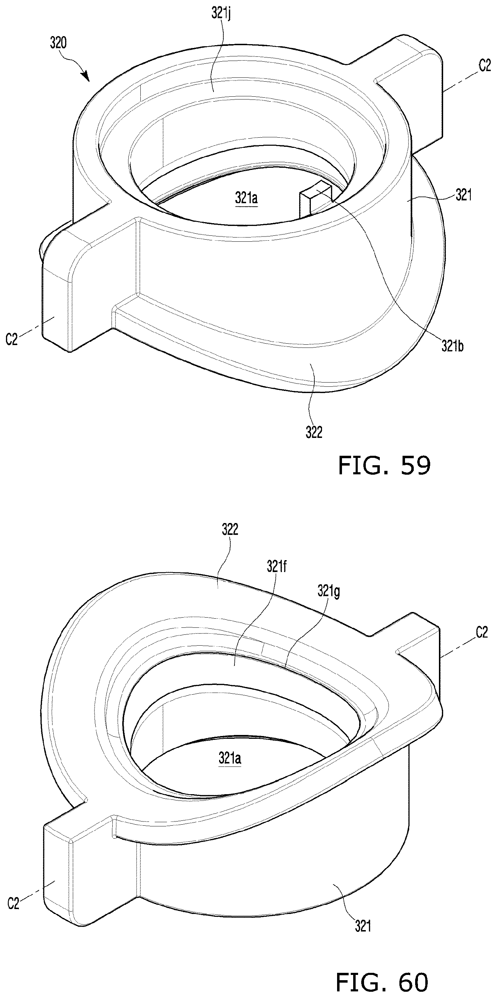

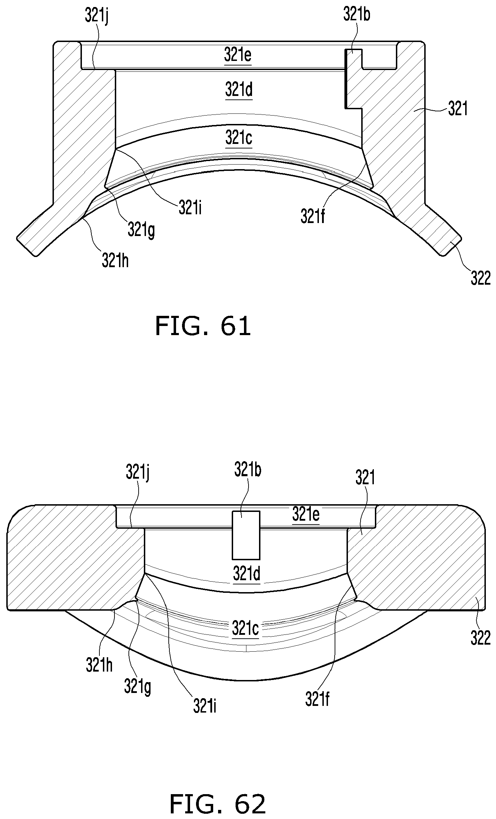

FIG. 59 illustrates a perspective view of a washer as viewed from above, FIG. 60 illustrates a perspective view of the washer shown in FIG. 59 as viewed from below, FIG. 61 illustrates a sectional view of the washer shown in FIG. 59 as viewed in a longitudinal direction of a main pipe, and FIG. 62 illustrates a sectional view of the washer shown in FIG. 59 as viewed in a width direction of the main pipe.

Next, the washer 320 is a member for fixing the wing part 3e of the main pipe 3 into a predetermined shape in conjunction with the socket head 315.

The washer 320 may be made of plastic or other materials having a rigidity that can maintain their shape without being deformed by pressure applied when screwing the socket 310 and the tightening nut 330.

The washer 320 is provided to deliver pressure, applied from the tightening nut 330 and the socket body 311, to the wing part 3e not only in the thickness direction of the main pipe 3 but also in the circumferential direction and longitudinal direction of the main pipe 3 when screw-tightening the tightening nut 330 and the socket body 311, thereby enabling the wing part 3e to be fixed in multiple directions. For this, the washer 320 may include a washer body 321, a flange 322, etc.

The washer body 321 has a cylindrical shape having a diameter larger by a predetermined ratio compared to the diameter of the coupling hole 3b.

The washer body 321 may include an insertion hole 321a formed at the center such that the first male screw thread 313 and the wing part 3e formed to be in contact with the first male screw thread 313 can be inserted thereinto; the guide block 321b protruding from the inner peripheral surface of the insertion hole 321a along the height direction of the fluid connector 300; etc.

The insertion hole 321a may include a first insertion hole 321c formed at the lower part of the washer 320; a second insertion hole 321d formed in the middle of the washer 320 such that the lower end of the second insertion hole 321d is connected to the upper end of the first insertion hole 321c; a third insertion hole 321e formed at the upper part of the washer 320 such that the lower end of the third insertion hole 321e is connected to the upper end of the second insertion hole 321d; etc.

In addition, a bent guide surface 321f is inclined such that the diameter of the first insertion hole 321c gradually increases as approaching the lower end of the first insertion hole 321c is formed on the inner peripheral surface of the first insertion hole 321c.

The bent guide surface 321f is preferably formed such that the lower end of the first insertion hole 321c having the maximum diameter has a diameter that is larger than the diameter of the socket head 315, and the upper end of the first insertion hole 321c having the minimum diameter has a diameter that is larger than the outer diameter of the first male screw thread 313 but smaller than the diameter of the socket head 315, but the present invention is not limited thereto. In particular, the slope angle of the bent guide surface 321f is formed to gradually increase as it is away from an imaginary center line C2 penetrating the center point of the washer 320 along the longitudinal direction of the main pipe 3.

A formation position of a fixing protrusion 321g is not particularly limited, and the fixing protrusion 321g may be formed to protrude from a specific region that is positioned between a lower corner 321h of the bent guide surface 321f, where the bent guide surface 321f and a bottom surface of the flange 322 meet, and an upper corner 321i of the bent guide surface 321f where the bent guide surface 321f and the inner peripheral surface of the second insertion hole 321d meet.

In addition, each of the upper corner 321i and lower corner 321h of the bent guide surface 321f is preferably rounded to prevent the wing part 3e of the main pipe 3 from being sharply bent and damaged by the bent guide surface 321f, but the present invention is not limited thereto.

The second insertion hole 321d is formed to have a diameter the same as the diameter of the upper end of the first insertion hole 321c, and the third insertion hole 321e is formed to have a diameter larger by a predetermined ratio compared to the second insertion hole 321d. Then, the bottom surface of the third insertion hole 321e may function as a settlement surface 321j where the lower end of the tightening nut 330 is settled.

The guide block 321b is formed to protrude toward the center of the insertion hole 321a from the inner peripheral surface of the insertion hole 321a and to lengthily extend along the height direction of the fluid connector 300. In addition, the guide block 321b has a width smaller than the guide groove 313a so as to be movably inserted into the guide groove 313a of the first male screw thread 313 in the height direction of the fluid connector 300.

The flange 322 is formed to extend from the lower end of the washer body 321 so as to be connected to the lower end of the washer body 321.

In addition, the flange 322 has a disk shape having a diameter larger by a predetermined ratio compared to the diameter of the washer body 321, and has a curved shape bent in an arch shape to have a curvature corresponding to the curvature of the main pipe 3 based on the center line C2 such that the highest point having the maximum height is positioned on the center line C2.

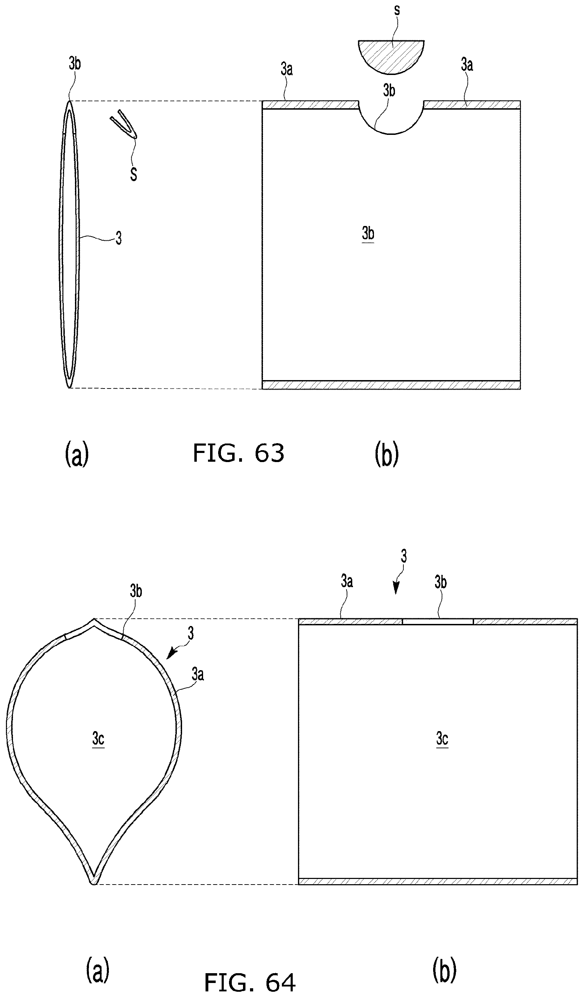

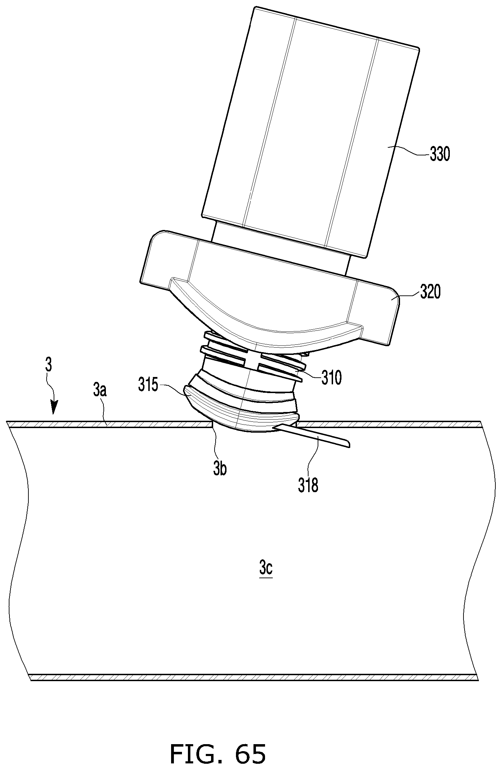

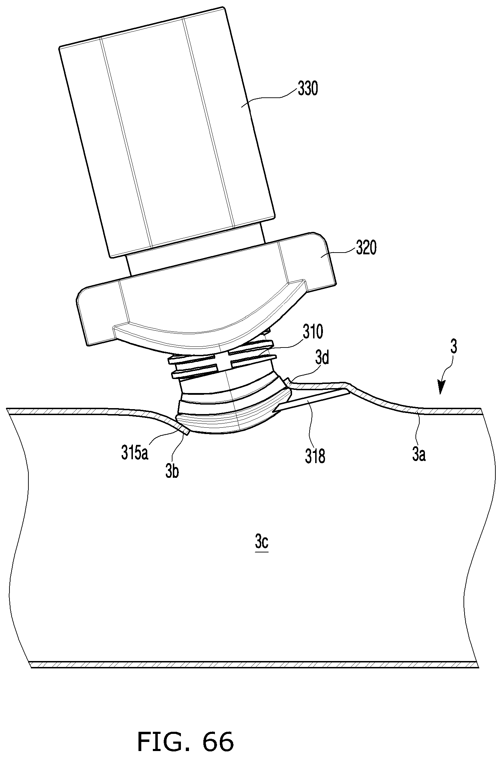

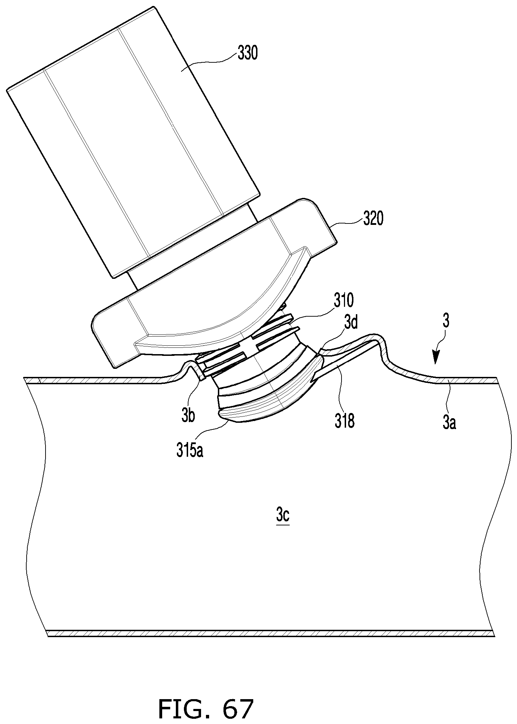

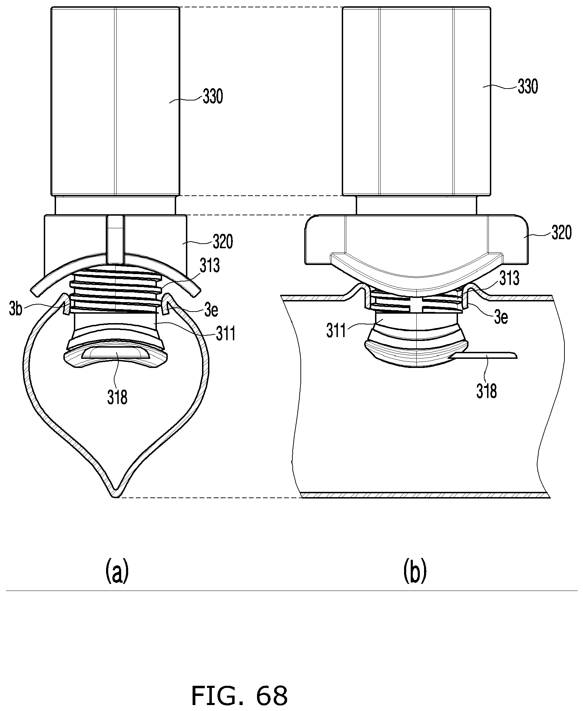

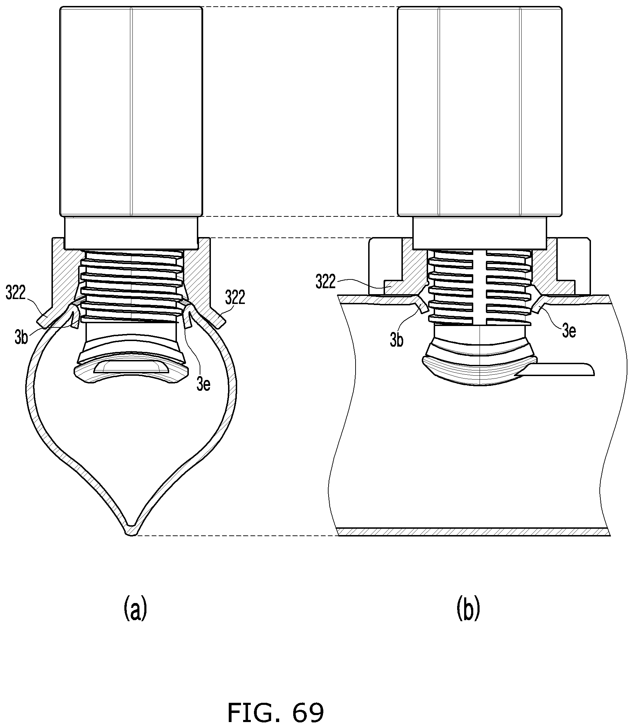

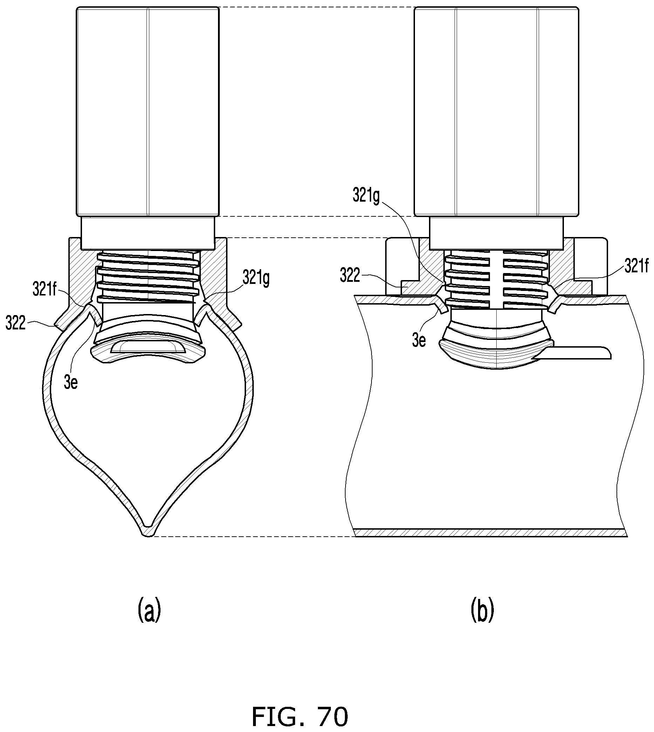

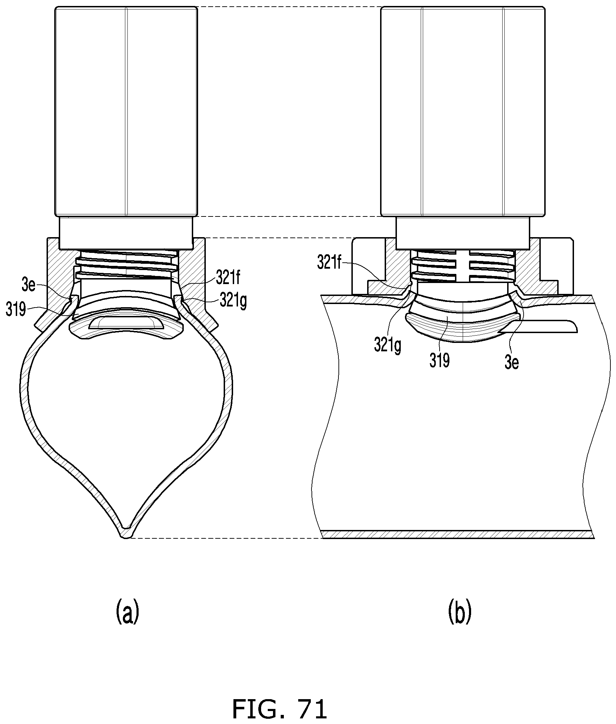

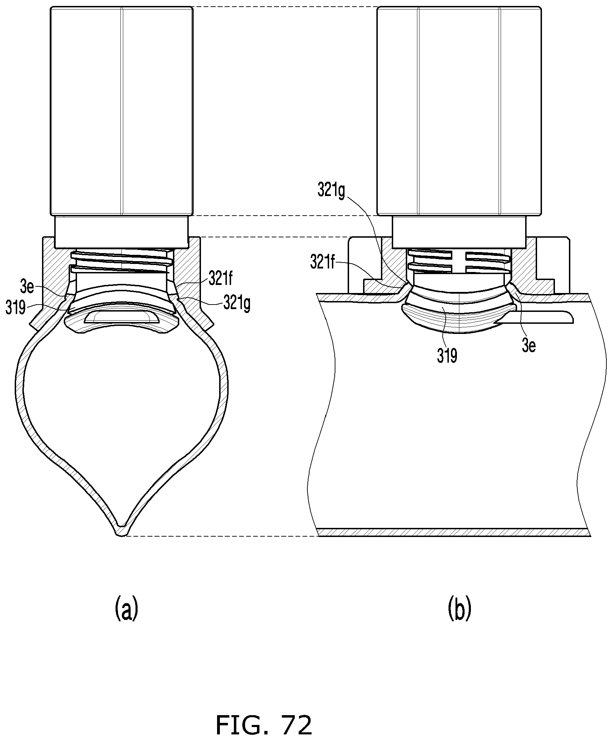

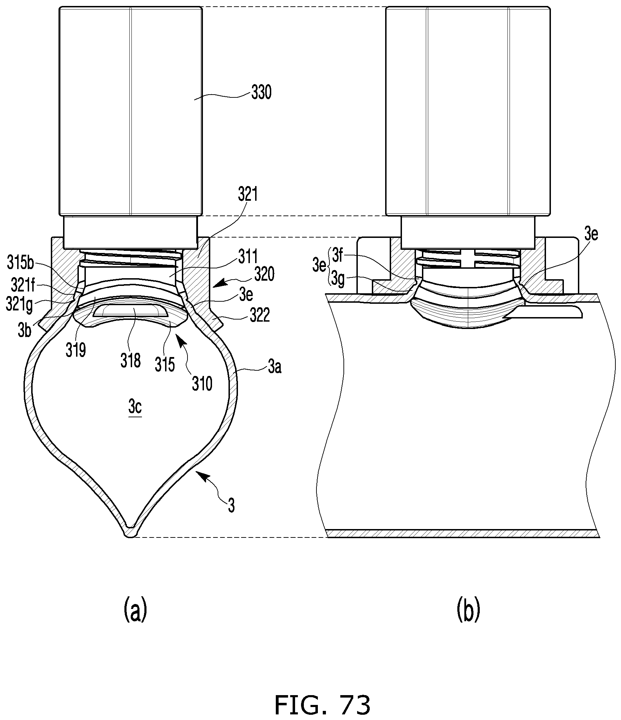

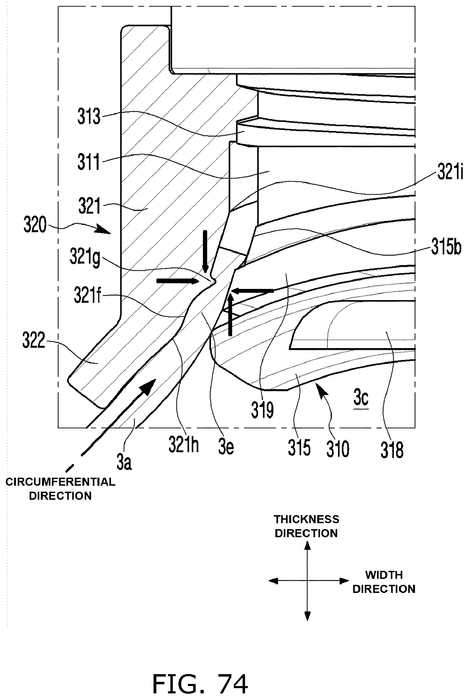

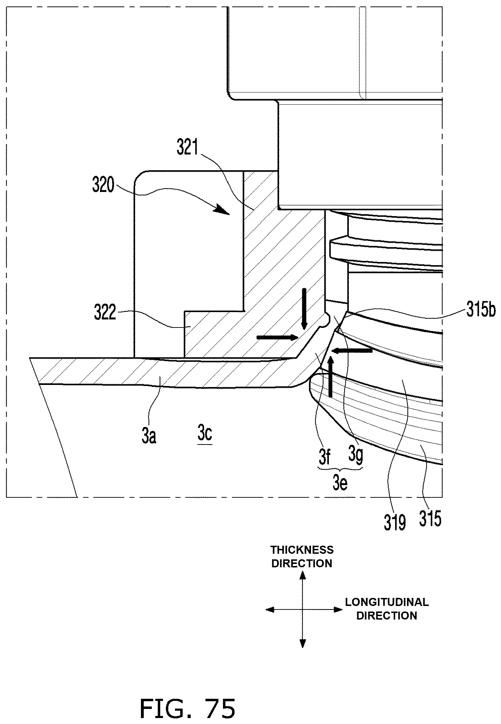

FIGS. 63 to 75 are drawings for explaining a method of connecting a main pipe and a branch pipe to each other using a fluid connector.

Hereinafter, a method of connecting the main pipe 3 with the branch pipe 2 using the fluid connector 300 is described with reference the accompanying drawings. As described above, the main pipe 3 is composed of an elastic hose that is elastically deformable. However, an elastic hose is stored normally in a thinly pressed state, so the case of connecting the main pipe 3, which is in a thinly pressed state, to the branch pipe 2 is described as an example.

First, a coupling hole 3b is formed by perforating a specific position of a thinly pressed main pipe 3 using a perforating member.

Next, the washer 320 is coupled to a section of the socket body 311 located on the outside of the main pipe 3 under the guidance of the guide groove 313a and the guide block **321b such** that the socket body 311 is inserted into the insertion hole 321a of the washer 320.

Next, the tightening nut 330 is positioned on the upper side of the washer 320 by rotating and tightening the tightening nut 330 in a predetermined tightening direction along the first male screw thread 313 such that the lower end of the tightening nut 330 is settled on the settlement surface 321j of the washer 320, and the socket 310 is pre-coupled with the tightening nut 330 such that the tightening nut 330 is spaced apart from the socket head 315 by a predetermined clearance.

Next, in a state where the main pipe 3 is elastically deformed to be close to a cylinder shape such that the hook 318 can be inserted into the coupling hole 3b, the socket 310 is titled at a predetermined angle such that the end of the hook 318 faces the coupling hole 3b, and then the hook 318 is inserted into the inside 3c of the main pipe 3 through the coupling hole 3b.

Next, the socket head 315 and a lower part of the socket body 311 connected to the socket head 315 are inserted into the inside 3c of the coupling hole 3b by pressurizing the socket head 315 toward the inside 3c of the main pipe 3 through the lever principle in a state where the hook 318 is caught on the inner peripheral surface of the main pipe 3 and, at the same time, the wing part 3e is formed at the coupling hole-surrounding part 3d to face the inside 3c of the main pipe 3.

Next, the tightening nut 330 is fully connected to the socket body 311 by rotating the tightening nut 330 in the tightening direction until the wing part 3e is interposed between the bent guide surface 321f of the washer 320 and the O-ring 319 of the socket head 315.

In the process of fully connecting the tightening nut 330 to the socket body 311, the wing part 3e is flipped up and down to face the outside of the main pipe 3 while being sequentially pressurized in the + height direction of the main pipe 3 by the first male screw thread 313 of the socket 310 and the O-ring 319, and is bent according to the slope angles of the bent guide surface 321f and the inner pressurizing surface 315b. In particular, the wing part 3e is first bent by a predetermined first angle based on the lower corner 321h of the bent guide surface 321f, and is secondarily bent by a second angle, compared to the first angle, based on the upper corner 321i of the bent guide surface 321f. Accordingly, the wing part 3e may be divided into a first wing part 3f constituting a lower part of the wing part 3e and inclined by the first angle; and a second wing part 3g whose lower end is connected to an upper end of the first wing part 3f and which constitutes an upper part of the wing part 3e and is inclined by the second angle. Accordingly, a two-stage sealing structure may be formed using the first wing part 3f and the second wing part 3g. In addition, the fixing protrusion 321g may fix the first wing part 3f by pressurizing the first wing part 3f, and the O-ring 319 may seal the coupling hole 3b by being brought into close contact with the inner peripheral surface of the first wing part 3f.

When the wing part 3e is flipped up and down in such a manner, the washer 320 and the socket body 311 may pressurize and fix the main pipe wall 3a not only in the thickness direction of the main pipe 3 but also in at least one direction of the circumferential direction and longitudinal direction thereof, so that the socket 310 may be coupled to the main pipe 3 in a state where the discharge hole 317 is connected to the inside 3c of the main pipe 3. In addition, the washer 320 and the socket body 311 seal the coupling hole 3b, thereby preventing water flowing along the main pipe 3 from flowing out through the coupling hole 3b.

Next, the branch pipe 2 is coupled to the tightening nut 330.

Since the wing part 3e protruding by a predetermined height toward the outside of the main pipe 3 is installed by fixing to the fluid connector 300, the above-described fluid connector 300, the fluid connector 300 may be stably coupled to the main pipe 3 even when the coupling hole 3b of the main pipe 3 has an oval shape or other uneven shapes, and, compared to an existing fluid connector where the diameter of the coupling hole 3b should be reduced as much as possible in consideration of a height difference in the coupling hole 3b occurring due to the curvature of the main pipe 3, the diameter of the coupling hole 3b, the diameter of the socket 310 installed in the coupling hole 3b and the diameter of the discharge hole 317 formed in the socket 310 may be expanded.

In addition, the inner pressurizing surface 315b of the socket head 315, the bent guide surface 321f of the washer 320, the flange 322, etc. are formed in an arched structure or curved structure having a curvature corresponding to the curvature of the main pipe 3 such that the inner pressurizing surface 315b of the socket head 315, the bent guide surface 321f of the washer 320, the flange 322, etc. can uniformly pressurize the wing part 3e and the main pipe wall 3a regardless of a pressurizing direction, thereby preventing the fluid connector 300 from being separated from the coupling hole 3b due to non-uniform coupling force between pressurizing directions.

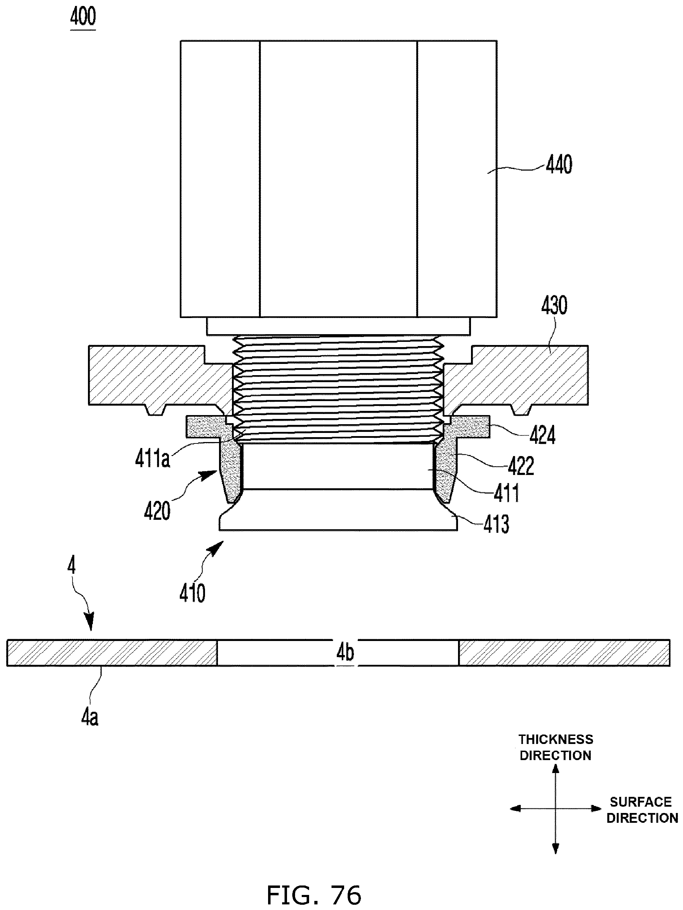

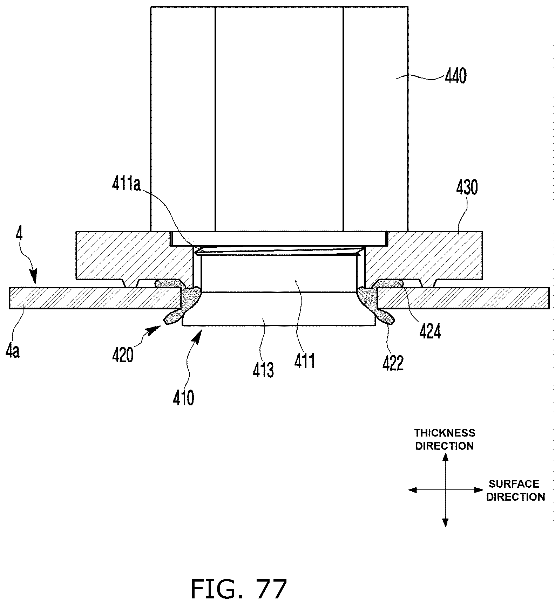

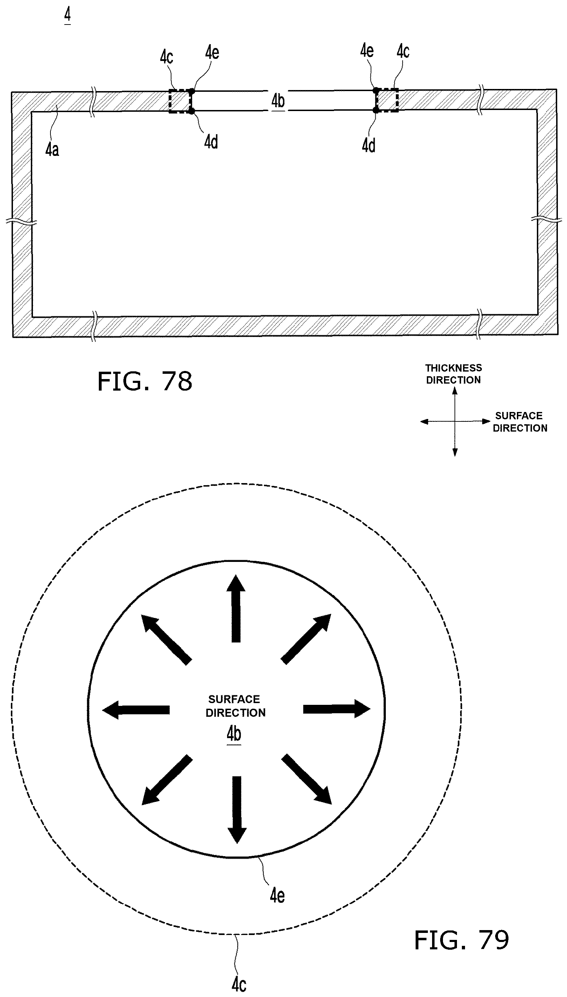

FIG. 76 illustrates a state where a fluid connector according to a fourth embodiment of the present invention is separated from a fluid source, FIG. 77 illustrates a state where the fluid connector shown in FIG. 76 is coupled to a fluid source, and FIGS. 78 and 79 illustrate a drawing for explaining a method of forming a coupling hole by perforating a fluid source wall.

The fluid connector 400 according to the fourth embodiment of the present invention is a device for connecting a fluid source 4 and a fluid-guiding member to each other. Referring to FIGS. 76 and 77, the fluid connector 400 may include a socket 410, an elastic bushing 420, a washer 430, a tightening nut 440, etc. The fluid connector 400 has a partially changed structure such that it can be installed at a fluid source 4 such as a water tank. Hereinafter, descriptions of the same constructions included in the fluid connectors 100, 200, 300 and 400 are omitted or only briefly mentioned.

The fluid source 4 refers to a device or facility for containing water or other various fluids (hereinafter referred to as 'fluid'). The types of devices or facilities that can be used as the fluid source are not particularly limited, and various devices or facilities, such as tanks, drums, pipes, pipes, water collection tanks, sinks, and washbasins, installed to contain fluids for the purposes of storing, supplying, transporting, and collecting fluids in various places, such as agricultural sites, commercial sites, industrial sites and homes, may be included in examples of the fluid source.

The fluid-guiding member refers to a member that guides a fluid delivered from the fluid source 4 according to a predetermined pattern. Types of members that can be used as the fluid-guiding member are not particularly limited, and the fluid-guiding member may be composed of at least one of members that can guide a fluid, delivered from the fluid source 4 such as a pipe, a branch pipe, a faucet, a valve, or a nozzle, in various ways such as transfer, branching, drainage, and spraying.

Meanwhile, the fluid connector 400 is provided such that it can be installed on a wall of the fluid source 4 (hereinafter referred to as 'fluid source wall 4a') made of a high-strength material such as hard plastic or metal and configured to have a thickness equal to or greater than a predetermined standard thickness.

In addition, the fluid connector 400 is provided to be coupled to a coupling hole 4b that is formed by perforating the fluid source wall 4a so as to communicate the inside of the fluid source 4 with the outside. Accordingly, to install the fluid connector 400, a work of perforating the coupling hole 4b using a punch or other drilling devices so as to couple the fluid connector 400 to the fluid source wall 4a is performed in advance. It is preferred to perforate the coupling hole 4b in the thickness direction of the fluid source wall 4a, but the present invention is not limited thereto. In addition, the coupling hole 4b is preferably circular, but the present invention is not limited thereto. In addition, the coupling hole 4b is preferably formed in one area of the fluid source wall 4a having a flat structure, but the present invention is not limited thereto.

Hereinafter, the fluid connector 400 is described based on the case where the circular coupling hole 4b is perforated in the thickness direction of the fluid source wall 4a. In addition, a peripheral area surrounding the coupling hole 4b among the entire area of the fluid source wall 4a is named a coupling hole-surrounding part 4c, a corner connecting the inner surface of the coupling hole-surrounding part 4c and the inner peripheral surface of the coupling hole 4b is named an inner corner 4d of the coupling hole 4b, and a corner connecting the outer surface of the coupling hole-surrounding part 4c and the inner peripheral surface of the coupling hole 4b is named an inner corner 4e of the coupling hole 4b.

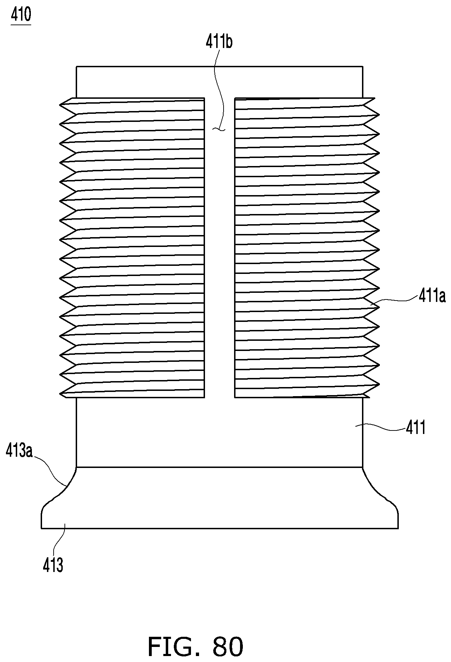

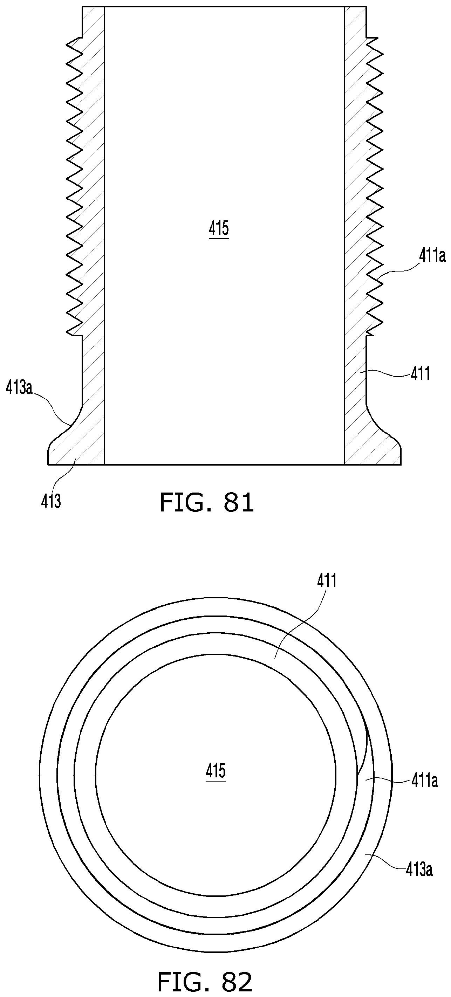

FIG. 80 illustrates a front view of a socket, FIG. 81 illustrates a sectional view of the socket, and FIG. 82 illustrates a plan view of the socket.

The socket 410 is a member for connecting the fluid source 4 with the fluid-guiding member so as to deliver a fluid contained in the fluid source 4 to the fluid-guiding member.

The socket 410 may include a socket body 411, a socket head 413, a discharge hole 415, etc.

The socket body 411 has a cylindrical shape lengthily elongated along the height direction of the fluid connector 400. In addition, the socket body 411 has a diameter that is smaller by a predetermined ratio than the diameter of the coupling hole 4b.

The socket body 411 includes a first male screw thread 411a formed to protrude from the outer peripheral surface thereof. In particular, the first male screw thread 411a is preferably formed to be spaced apart by a predetermined clearance from each of the upper end and low end of the socket body 411. Here, the upper end of the socket body 411 refers to an end, where the socket head 413 to be described below is formed, among both ends of the socket body 411, and the upper end of the socket body 411 refers to an end opposite to the lower end among the both ends of the socket body 411.

In addition, the first male screw thread 411a is larger than the diameter of the socket body 411 by a predetermined ratio, but has an outer diameter smaller than the diameter of the coupling hole 4b by a predetermined ratio. That is, when a worker perforates the coupling hole 4b, the worker needs to perforate the coupling hole 4b to have a larger diameter than the outer diameter of the first male screw thread 411a by a predetermined ratio.

On the first male screw thread 411a, a guide groove 411b into which a guide block 432 of the washer 430 described below is movably inserted may be concavely formed along the height direction of the fluid connector 400.

The socket head 413 is formed to extend from the lower end of the socket body 411 to be concentric with the socket body 411. The socket head 413 has a diameter that is larger by a predetermined ratio than the outer diameter of the first male screw thread 411a and that is the same as the diameter of the coupling hole 4b or smaller by a predetermined ratio than the diameter of the coupling hole 4b.

In addition, an inner pressurizing surface 413a which is downwardly sloped to extend from the lower end of the socket body 411 so as to face an inner sealing part 427 of the elastic bushing 420 when installing the fluid connector 400 at the fluid source 4 and whose height is gradually lowered as approaching from the center of the socket 410 to the outer edge thereof is formed on the upper surface of the socket head 413. The slope angle of the inner pressurizing surface 413a is preferably formed to gradually decrease as approaching the lower end of the socket head 413, but the present invention is not limited thereto.

The discharge hole 415 is formed by perforating the inside of the socket 410 to penetrate the socket head 413 and the socket body 411 in the height direction of the fluid connector 400.

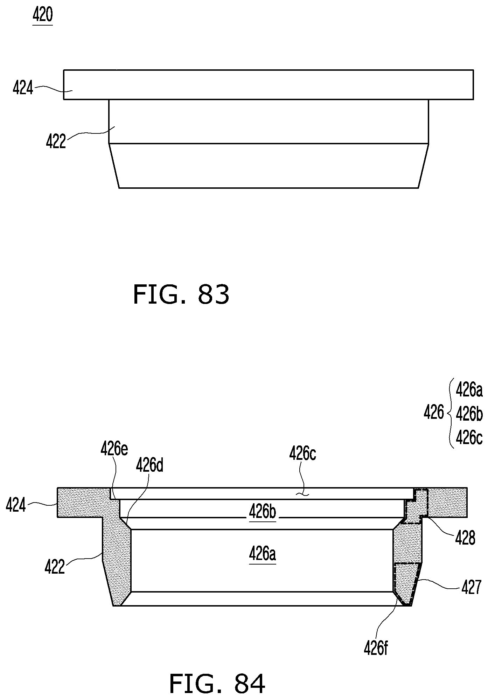

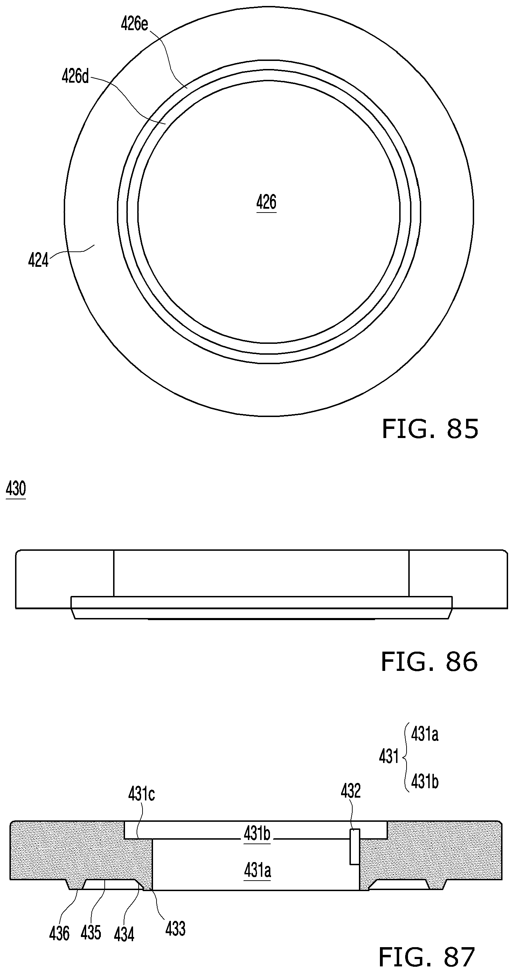

FIG. 83 illustrates a front view of an elastic bushing, FIG. 84 illustrates a sectional view of the elastic bushing, and FIG. 85 illustrates a plan view of the elastic bushing.

The elastic bushing 420 is a member for sealing between the inner peripheral surface of the coupling hole 4b and the fluid connector 400 while coupling the fluid connector 400 to the coupling hole 4b.

The elastic bushing 420 is made of an elastically deformable material. For example, the elastic bushing 420 may be made of a rubber material.

In addition, the elastic bushing 420 is provide to hold the fluid source wall 4a not only in the thickness direction but also in the surface direction. For this, the elastic bushing 420 may include a coupling part 422, an engagement part 424, an insertion hole 426, etc.

The coupling part 422 is formed to simultaneously pressurize each of the inner corner 4d and outer corner 4e of the coupling hole 4b in both the thickness direction and surface direction of the fluid source wall 4a. For this, the coupling part 422 has a length longer by a predetermined ratio than the thickness of the fluid source wall 4a or the depth of the coupling hole 4b such that the lower part of the coupling part 422 penetrates the coupling hole 4b and protrudes to the inside of the fluid source 4 by a predetermined length.

The shape of the coupling part 422 is not particularly limited. For example, the coupling part 422 may have a cylindrical shape whose diameter is the same as the diameter of the coupling hole 4b or smaller by a predetermined ratio than the diameter of the coupling hole 4b. In particular, for ease insertion of the coupling part 422 into the coupling hole 4b, the outer peripheral surface of the lower part of the coupling part 422 preferably has an inclined surface wherein the diameter of the coupling part 422 is inclined to be gradually narrowed as approaching the lower end of the coupling part 422, but the present invention is not limited thereto.

The engagement part 424 is formed to be caught and adhered to the outer surface of the coupling hole-surrounding part 4c while being elastically deformed due to pressure applied when the socket 410 and the tightening nut 440 are screwed together. For example, the engagement part 424 may have a disk shape that extends from the upper end of the coupling part 422 to be concentric with the coupling part 422 and has a diameter larger by a predetermined ratio compared to the diameter of the coupling hole 4b.

The insertion hole 426 is formed to be concentric with the coupling part 422 and the engagement part 424 and to penetrate the coupling part 422 and the engagement part 424 in the height direction of the fluid connector 400.

The insertion hole 426 may include a first insertion hole 426a, a second insertion hole 426b, a third insertion hole 426c, etc.

The first insertion hole 426a is formed to be positioned at a lower part of the insertion hole 426. More specifically, the first insertion hole 426a is formed to penetrate a lower part of a coupling part 422. The first insertion hole 126a has a diameter that is the same as the diameter of the socket body 411 or a diameter that is larger by a predetermined ratio compared to the diameter of the socket body 411 but is smaller by a predetermined ratio compared to the outer diameter of the first male screw thread 411a such that the lower end of the socket body 411 where the first male screw thread 411a is not formed can be inserted into the first insertion hole 426a.

In addition, a bent guide surface 426f is formed at a lower part of the inner peripheral surface of the first insertion hole 426.

The second insertion hole 426b is positioned on an upper side of the first insertion hole 426a, and formed to extend from an upper end of the first insertion hole 426a to be connected to the first insertion hole 426a. More specifically, the second insertion hole 426b is formed to penetrate an upper part of the coupling part 422 and a lower part of the engagement part 424. The second insertion hole 426b has a diameter that is the same as the outer diameter of the first male screw thread 411a or is larger by a predetermined ratio compared to the outer diameter of the first male screw thread 411a such that the first male screw thread 411a can be inserted into the second insertion hole 426b. Accordingly, the second insertion hole 426b and the first insertion hole 426a may be connected to form a step structure. In this case, a bottom surface of the second insertion hole 426b may support a lower end of the first male screw thread 411a. Accordingly, the bottom surface of the second insertion hole 426b is referred to as a support surface 426d. The support surface 426d preferably has an inclined surface that is downwardly sloped such that the height of the inclined surface is gradually lowered as approaching the center of the elastic bushing 420. Accordingly, the first male screw thread 411a and the support surface 426d may maintain linear contact with each other even when the socket body 411 is slightly inclined.

The third insertion hole 426c is positioned on an upper side of the second insertion hole 426b, and is formed to extend from an upper end of the second insertion hole 426b to be connected to a second insertion hole 426b. More specifically, the third insertion hole 426c is formed to penetrate an upper part of an engagement part 424 of the second insertion hole 426c. The third insertion hole 426c has a diameter larger by a predetermined ratio compared to the second insertion hole 426b. Accordingly, the third insertion hole 426c and the second insertion hole 426b may be connected to form a step structure. In this case, an inner peripheral surface and bottom surface of the third insertion hole 426c may function as an alignment groove 426e that assists in allowing the elastic bushing 420 to be uniformly, elastically deformed in a state of being aligned in a predetermined manner in conjunction with an alignment protrusion 433 of the washer 430 to be described below.

As the elastic bushing 420 is formed as described above, the lower part of the coupling part 422 formed inside the first insertion hole 426a may function as an inner sealing part 427 that is brought into close contact with the inner corner 4d of the coupling hole 4b while being elastically deformed due to pressure applied when the socket 410 and the tightening nut 440 are screwed together. Accordingly, the first insertion hole 426a preferably has a depth equal to or deeper than a predetermined reference depth such that the fluid connector 400 can be applied to various types of the fluid sources 4 whose fluid source wall 4a has different thicknesses. In addition, a corner for connecting the upper part of the coupling part 422, inside which the second insertion hole 426b is formed, and the engagement part 424 functions as an outer sealing part 428 that is brought into close contact with the outer corner 4e of the coupling hole 4b while being elastically deformed due to pressure applied when the socket 410 and the tightening nut 440 are screwed together. More detailed descriptions of the inner sealing part 427 and the outer sealing part 428 are described below.

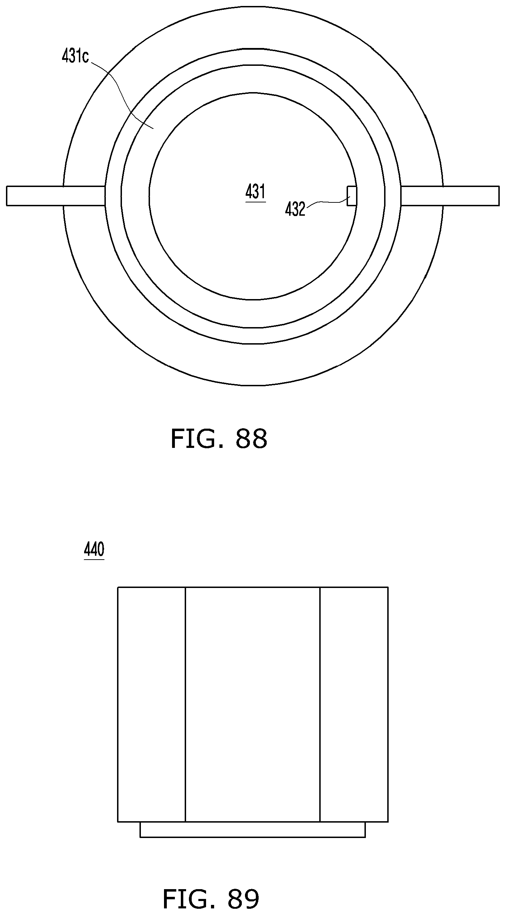

FIG. 86 illustrates a front view of a washer, FIG. 87 illustrates a sectional view of the washer, and FIG. 88 illustrates a plan view of the washer.

The washer 430 is a member for converting pressure, applied when the socket 410 and the tightening nut 440 are screwed together, into a predetermined manner to pressurize the elastic bushing 420.

In addition, the washer 430 may be made of plastic or a material having a rigidity that can maintain an original shape without being deformed due to pressure applied when another socket 410 and another tightening nut 440 are screwed together.

The washer 430 has a disk shape having a diameter larger by a predetermined ratio compared to the diameter of the coupling hole 4b. The washer 430 may include an insertion hole 431, a guide block 432, an alignment protrusion 433, an outer pressurizing surface 434, an engagement part-pressurizing surface 435, a fixing protrusion 436, etc.

The insertion hole 431 is formed to penetrate the center of the washer 430 in the height direction of the fluid connector 400 such that the socket body 411 and the first male screw thread 411a can be movably inserted thereinto. In addition, the insertion hole 431 may include a first insertion hole 431a formed at a lower part to the washer 430 and configured to have a diameter that is the same as the outer diameter of the first male screw thread 411a or larger by a predetermined ratio than the outer diameter of the first male screw thread 411a such that the first male screw thread 411a is movably inserted thereinto; and a second insertion hole 431b formed at an upper part of the washer 430 such that a lower end of the second insertion hole 431b is connected to an upper end of the first insertion hole 431a, and configured to have a diameter that is larger by a predetermined ratio compared to the diameter of the first insertion hole 431a. When the first insertion hole 431a and the second insertion hole 431b are formed in such a manner, the second insertion hole 431b and the first insertion hole 431a are connected to each other to form a step structure, so that a bottom surface of the second insertion hole 431b may function as a settlement surface 431c where a lower end of the tightening nut 440 is settled.

The guide block 432 is formed to protrude toward the center of the insertion hole 431 from the inner peripheral surface of the insertion hole 431 and to lengthily extend along the height direction of the fluid connector 400. In addition, the guide block 432 has a width smaller than the guide groove 411b such that it can be movably inserted into the guide groove 411b of the first male screw thread 411a in the height direction of the fluid connector 400.

The alignment protrusion 433 is formed to protrude from a bottom surface of the washer 430 along the circumference of the first insertion hole 431a such that it can be inserted into the alignment groove 426e of the elastic bushing 420 when the fluid connector 400 is installed at the fluid source 4. The alignment protrusion 433 preferably has a ring shape, but the present invention is not limited thereto. The alignment protrusion 433 is inserted into the alignment groove 426e of the elastic bushing 420 in the - thickness direction (in other words, in the - height direction of the fluid source wall 4a) of the fluid source wall 4a when the fluid connector 400 is installed at the fluid source 4, thereby pressurizing the elastic bushing 420 to be aligned in a predetermined arrangement shape and, accordingly, assisting the coupling part 422 and the elastic bushing 420 including the coupling part 422 to be uniformly elastically deformed in a predetermined manner.

The outer pressurizing surface 434 is formed on the bottom surface of the washer 430 along the circumference of the alignment protrusion 433 to face the outer corner 4e of the coupling hole 4b in a state where the outer sealing part 428 of the elastic bushing 420 is present therebetween when the fluid connector 400 is installed at the fluid source 4. In addition, the outer pressurizing surface 434 has a ring shape, and is configured to include an upwardly inclined surface whose height gradually increases as approaching from the center of the washer 430 to the outer edge thereof. The slope angle of the outer pressurizing surface 434 is not particularly limited. For example, the slope angle of the outer pressurizing surface 434 may be 45°.

The engagement part-pressurizing surface 435 is formed on the bottom surface of the washer 430 along the circumference of the outer pressurizing surface 434 to face the engagement part 424 of the elastic bushing 420 when the fluid connector 400 is installed at the fluid source 4. The engagement part-pressurizing surface 435 has a circular disk shape having a depth smaller by a predetermined ratio than the thickness of the engagement part 424. Accordingly, the engagement part-pressurizing surface 435 may pressurize the engagement part 424 of the elastic bushing 420 to be in close contact with the outer surface of the coupling hole-surrounding part 4c.

The fixing protrusion 436 is formed to protrude from the bottom surface of the washer 430 along the circumference of the engagement part-pressurizing surface 435 to face an outer surface of one area of the fluid source wall 4a that is away from the coupling hole 4b by a predetermined distance, compared to the coupling hole-surrounding part 4c, when the fluid connector 400 is installed at the fluid source 4. In addition, the fixing protrusion 436 has a ring shape, and has an inner diameter larger than the outer diameter of the engagement part 424 such that the outer surface of the fluid source wall 4a can be pressurized when the fluid connector 400 is installed at the fluid source 4. Accordingly, the fixing protrusion 436 is brought into close contact with the outer surface of the fluid source wall 4a such that frictional force acts between the fixing protrusion 436 and the fluid source wall 4a, thereby fixing the fluid connector 400 not to be separated from the fluid source 4.

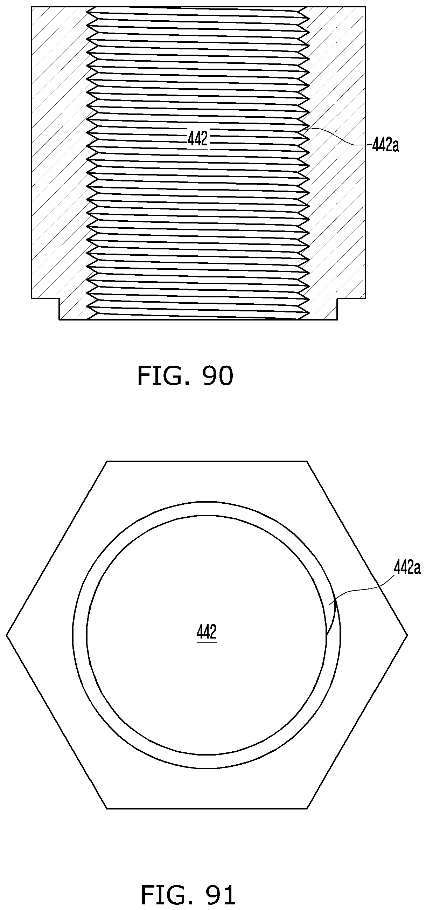

FIG. 89 illustrates a front view of a tightening nut, FIG. 90 illustrates a sectional view of the tightening nut, and FIG. 91 illustrates a plan view of the tightening nut.

Next, the tightening nut 440 is a member for coupling the fluid-guiding member to the fluid connector 4 while coupling the elastic bushing 420 to the coupling hole 4b.

The tightening nut 440 preferably has a cylindrical shape lengthily elongated along the height direction of the fluid connector 400, but the present invention is not limited thereto.

The tightening nut 440 may include a connecting hole 442 formed by perforating the tightening nut 440 along the height direction of the fluid connector 400 such that the socket body 411 can be inserted into connecting hole 442.

On the inner peripheral surface of the connecting hole 442, the female screw thread 442a is formed to be screw-coupled with the first male screw thread 411a of the socket body 411. Accordingly, when the tightening nut 440 is rotated in a tightening direction along the first male screw thread 411a in a state where an upper end of the first male screw thread 411a is screw-coupled with the lower end of the female screw thread 442a, the tightening nut 440 is lowered, and the socket 410 is raised. Accordingly, the tightening nut 440 may be gradually coupled with the socket 410 such that the socket body 411 is gradually inserted into the connecting hole 442 by rotating the tightening nut 440 in the tightening direction along the first male screw thread 411a.

In addition, when the tightening nut 440 is rotated in a loosening direction, opposite to the tightening direction, along the first male screw thread 411a in a state where the first male screw thread 411a is screw-coupled with the female screw thread 442a, the tightening nut 440 is raised, and the socket 410 is lowered. Accordingly, the tightening nut 440 may be gradually separated from the socket 410 such that the socket body 411 is gradually withdrawn from the connecting hole 442 by rotating the tightening nut 440 in the loosening direction along the first male screw thread 411a.

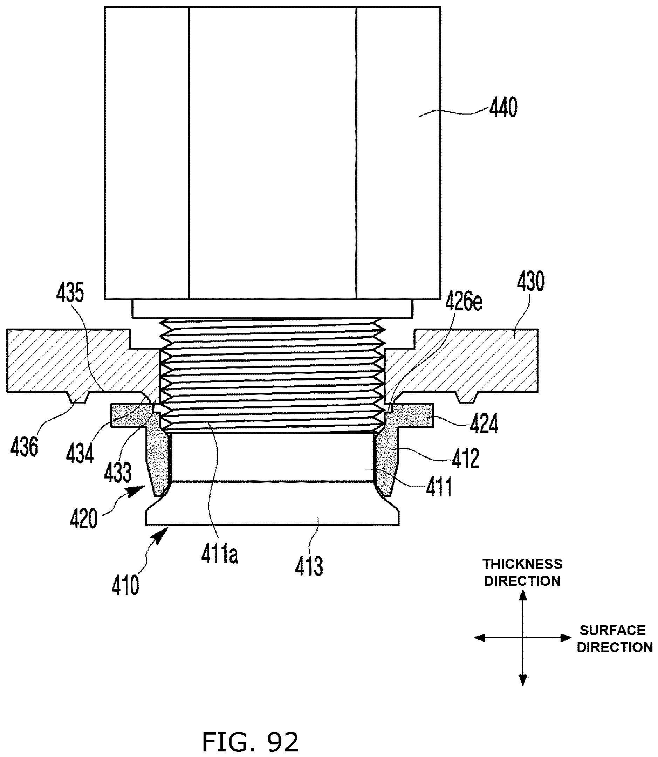

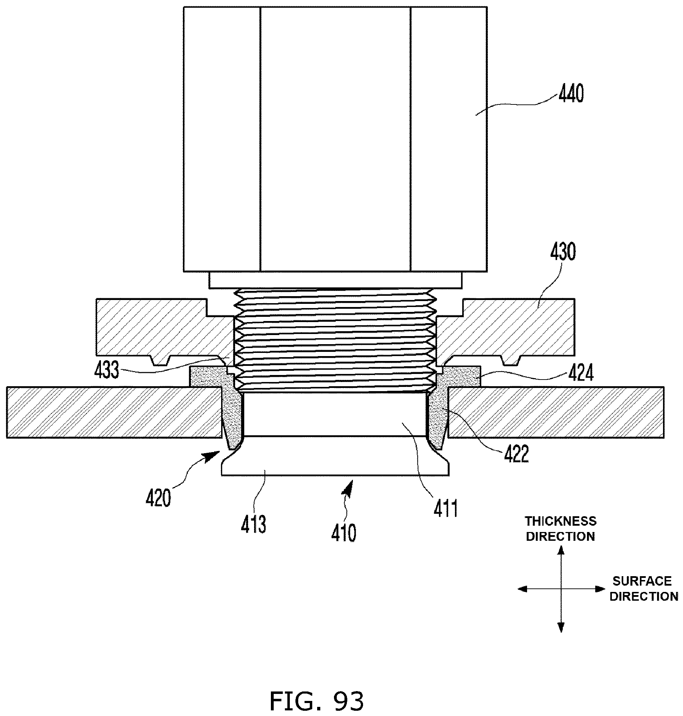

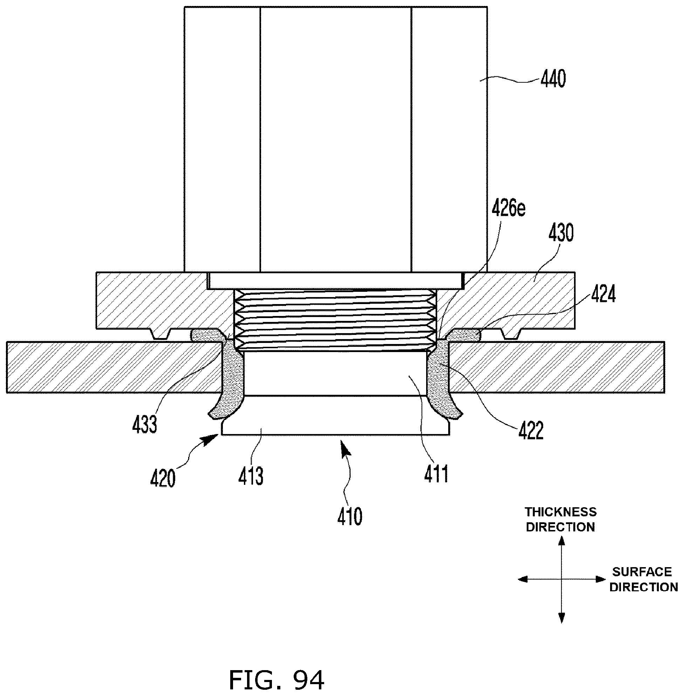

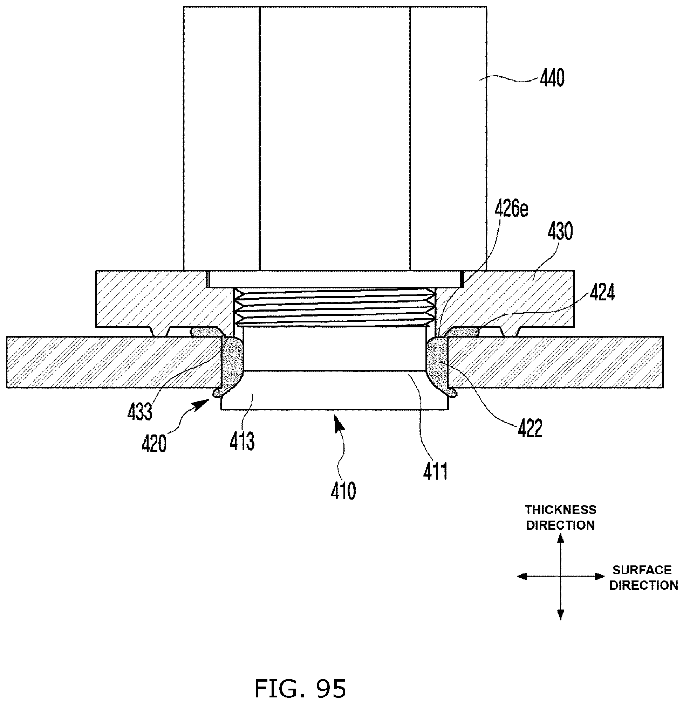

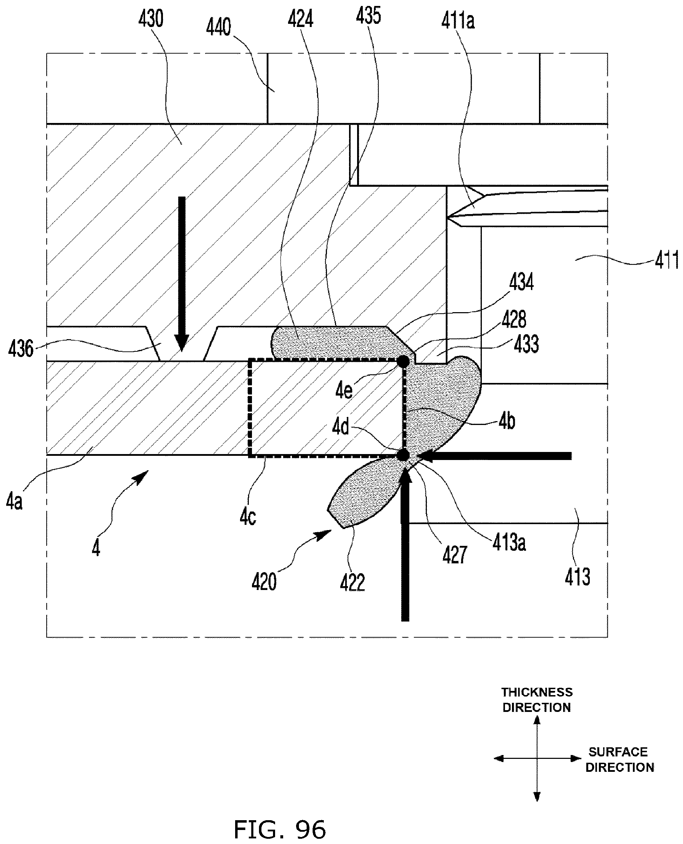

FIGS. 92 to 95 are drawings for explaining a method of installing a fluid connector at a fluid source, and FIG. 96 is a drawing for explaining the principle that an elastic bushing holds a fluid source wall.

As described above, each of the fluid source 4 and the fluid-guiding member may have various structures depending on the intended use. Hereinafter, a method of connecting the fluid source 4 and the fluid-guiding member using the fluid connector 400 is described, taking as an example the case where the fluid source 4 is configured as a water tank in which water is stored, and the fluid-guiding member is configured as the branch pipe 2 described above.

First, the coupling hole 4b is formed by perforating the fluid source wall 4a using a perforating member.

Next, the socket 410 and the elastic bushing 420 are coupled by inserting the socket body 411 and the first male screw thread 411a into the insertion hole 426 such that the lower end of the first male screw thread 411a of the socket 410 is supported by the support surface 426d of the elastic bushing 420.

Next, the socket 410 and the washer 430 are coupled by inserting the socket body 411 into the insertion hole 431 of the washer 430 under the guidance of the guide groove 411b and the guide block 432 such that the washer 430 is positioned on the upper side of the elastic bushing 420.

Next, by rotating and tightening the tightening nut 440 in a predetermined tightening direction along the first male screw thread 411a in a state where the upper end of the first male screw thread 411a of the socket body 411 is placed at the lower end of the female screw thread 442a of the tightening nut 440, the tightening nut 440 is positioned on the upper side of the washer 430, and the socket 410 and the tightening nut 440 are pre-coupled such that the tightening nut 440 is spaced apart from the socket head 413 by a predetermined clearance.

When the tightening nut 440 is rotated and tightened along the first male screw thread 411a in a state in which an upper end of the first male screw thread 411a is placed on the lower end of the female screw thread 442, the socket 410 is raised while the tightening nut 440 is lowered, so that a gap between the socket head 413 and the tightening nut 440 is gradually reduced. Accordingly, the socket body 411 is gradually inserted into the connection hole 442 through a lower opening of a connection hole 442 of the tightening nut 440, and a gap between the socket head 413, the elastic bushing 420, the washer 430 and the tightening nut 440 is gradually reduced. Accordingly, when the tightening nut 440 is additionally tightened in a state in which the tightening nut 440 is tightened such that the socket head 413, the elastic bushing 420, the washer 430 and the tightening nut 440 are in close contact with each other, the socket head 413 pressurizes an elastic bushing 420 in the + thickness direction, and the tightening nut 440 pressurizes the washer 430 in the - thickness direction. In addition, the washer 430 pressurizes the elastic bushing 420 in the - thickness direction via pressure applied from the tightening nut 440. Then, the elastic bushing 420 are pressurized by the socket head 413 and the washer 430 in both up and down directions, thereby being elastically deformed.

However, if the coupling part 422 of the elastic bushing 420 is elastically deformed in advance before it is inserted into the inside of the fluid source 4 through the coupling hole 4b, the elastic bushing 420 cannot be used to hold the fluid source wall 4a. Accordingly, the socket 410 and the tightening nut 440 are pre-coupled by tightening the tightening nut 440 only until the socket head 413 and the tightening nut 440 are spaced apart from each other by a predetermined distance such that the elastic bushing 420 is not elastically deformed and maintains its original shape as it is.

Next, the lower part of the socket 410, which includes from the socket head 413 to the lower part of the first male screw thread 411a, and the coupling part 422 of the elastic bushing 420 are selectively inserted into the coupling hole 4b such that the engagement part 424 of the elastic bushing 420 is engaged with the outer surface of the coupling hole-surrounding part 4c, the outer sealing part 428 of the elastic bushing 420 faces the outer corner 4e of the coupling hole 4b, and the socket head 413 and the inner sealing part 427 of the elastic bushing 420 protrude into the inside of the fluid source 4.

Next, the tightening nut 440 is rotated and tightened in the tightening direction along the first male screw thread 411a of the socket 410 such that the elastic bushing 420 is elastically deformed to hold the fluid source wall 4a by pressure applied from the tightening nut 440 and the socket 410, thereby fully connecting the socket 410 and the tightening nut 440.

The full connection between the socket 410 and the tightening nut 440 may be accomplished by first tightening the tightening nut 440 such that the socket head 413, the elastic bushing 420, the washer 430 and the tightening nut 440 are in close contact with each other, and then secondarily tightening the tightening nut 440 until the elastic bushing 420 is pressurized in both directions ( + thickness direction and - thickness direction) by the socket head 413 and the washer 430 and, accordingly, elastically deformed in a predetermined shape.

More specifically, when the socket 410 and the tightening nut 440 are fully connected, the elastic bushing 420 is aligned into a predetermined arrangement pattern by pressurizing the elastic bushing 420 in the - thickness direction of the fluid source wall 4a after the alignment protrusion 433 of the washer 430 is inserted into the alignment groove 426e of the elastic bushing 420, the engagement part-pressurizing surface 435 of the washer 430 pressurizes the engagement part 424 in the - thickness direction of the fluid source wall 4a to be in close contact with the outer surface of the coupling hole-surrounding part 4c, and the fixing protrusion 436 of the washer 430 pressurizes the outer surface of the fluid source wall 4a to fix the fluid connector 400 to the fluid source 4.

In addition, the outer pressurizing surface 434 of the washer 430 simultaneously pressurizes the outer sealing part 428 of the elastic bushing 420 in the - thickness direction and surface direction of the fluid source wall 4a through the above-described inclined structure. Then, the outer sealing part 428 may simultaneously pressurize the outer corner 4e in the - thickness direction and the surface direction while being elastically deformed according to the shape of the outer corner 4e. In response to this, the inner pressurizing surface 413a of the socket head 413 pressurizes the inner sealing part 427 of the elastic bushing 420 in the + thickness direction and surface direction of the fluid source wall 4a through the above-described inclined structure. Then, the inner sealing part 427 may simultaneously pressurize the inner corner 4d in the + thickness direction and the surface direction while being elastically deformed according to the shape of the inner corner 4d.

As the elastic bushing 420 is elastically deformed in such a manner, the elastic bushing 420 may simultaneously hold and fix the inner corner 4d and outer corner 4e of the coupling hole 4b in the thickness direction and surface direction of the fluid source wall 4a, so that the elastic bushing 420 and the fluid connector 400 including the elastic bushing 420 may be coupled to the fluid source 4.

Next, the fluid-guiding member is coupled to the tightening nut 440.

For example, when the fluid source 4 is configured as a water tank and the fluid-guiding member is configured as a branch pipe 2, the water tank and the branch pipe 2 may be connected using the fluid connector 400 by screw-coupling the second male screw thread 2c of the branch pipe 2 with the female screw thread 442a of the connecting hole 442 of the tightening nut 440.

When the branch pipe 2 is coupled to the tightening nut 440 in such a manner, the water tank and the branch pipe 2 are connected through the discharge hole 415 of the socket 410. Accordingly, water discharged from the water tank may be delivered to the branch pipe 2 through the discharge hole 415 of the socket 410, and the branch pipe 2 may transport water delivered from the water tank to a demander.

The above-described fluid connector 400 is provided such that the inner sealing part 427 and the outer sealing part 428 can simultaneously pressurize the inner corner 4d and the outer corner 4e in the thickness direction and surface direction of the fluid source wall 4a while maintaining a contact state between the inner corner 4d and outer corner 4e of the coupling hole 4b and the inner sealing part 427 and outer sealing part 428 of the elastic bushing 420 over the entire area of the coupling hole 4b formed by perforating the fluid source 4.

Accordingly, the fluid connector 400 may simultaneously hold the inner corner 4d and outer corner 4e of the coupling hole 4b in the thickness direction and the surface direction through the elastic bushing 420. That is, the fluid connector 400 holds the fluid source wall 4a not only in the thickness direction but also in the surface direction d, which is an expansion direction of the fluid source wall 4a formed by the high pressure of fluid, through the elastic bushing 420. Due to the fluid connector 400, the elastic bushing 420 and the fluid connector 400 including the elastic bushing 420 may be prevented from being separated from the coupling hole 4b, or the occurrence of a gap that may cause fluid to leak between the outer peripheral surface of the elastic bushing 420 and the inner peripheral surface of the coupling hole 4b may be prevented.

Meanwhile, since the thickness of the fluid source wall 4a is generally significantly smaller than its area, the surface direction stiffness of the fluid source wall is larger than the thickness direction stiffness. However, an existing fluid connector is designed to be installed in a manner of applying an external force to its fluid source wall only in its thickness direction. Accordingly, in the case of the existing fluid connector, the fluid source wall is frequently deformed or damaged by an external force applied to the fluid source wall by the fluid connector during the installation and use of the fluid connector.

In contrast, the fluid connector 400 is installed to distribute pressure delivered from the socket 410 and the tightening nut 440 in the thickness direction and surface direction of the fluid source wall 4a and apply the distributed pressure to the inner corner 4d and outer corner 4e of the coupling hole 4b. Accordingly, the fluid connector 400 may prevent the fluid source wall 4a from being deformed or damaged by an external force applied to the fluid source wall 4a by the fluid connector 400 during the installation and use of the fluid connector 400.

In addition, the fluid connector 400 is provided such that the elastic bushing 420 can pressurize the fluid source wall 4a in both the inside and outside directions when the tightening nut 440 is tightened from the outside of the fluid source 4. Accordingly, the fluid connector 400 may provide convenience in that the fluid connector 400 may be installed or removed by manipulating the fluid connector 400 only on the outside of the fluid source 4 without having to manipulate the fluid connector 400 using a tool on both the inside and outside of the fluid source 4.

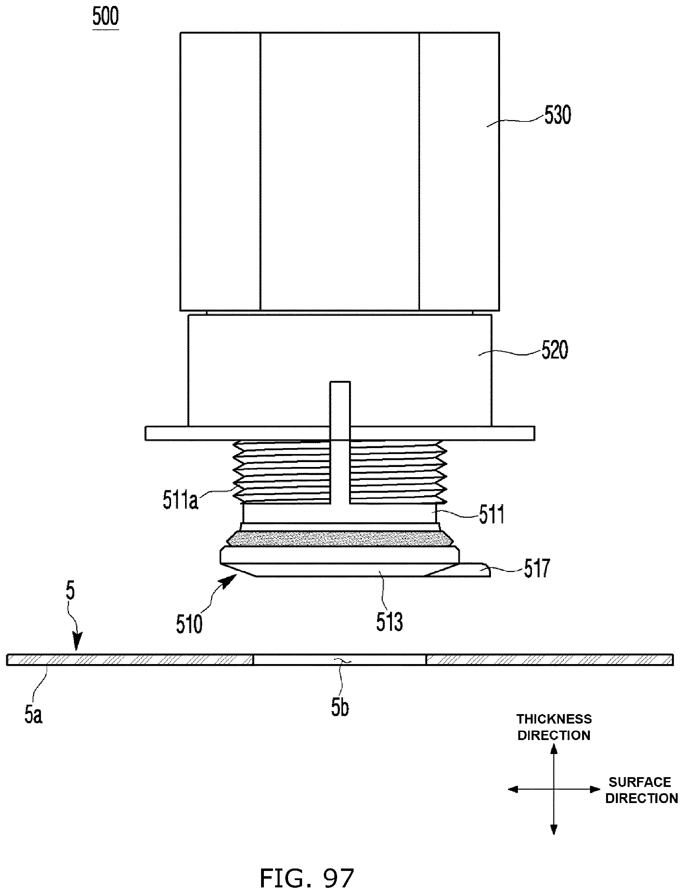

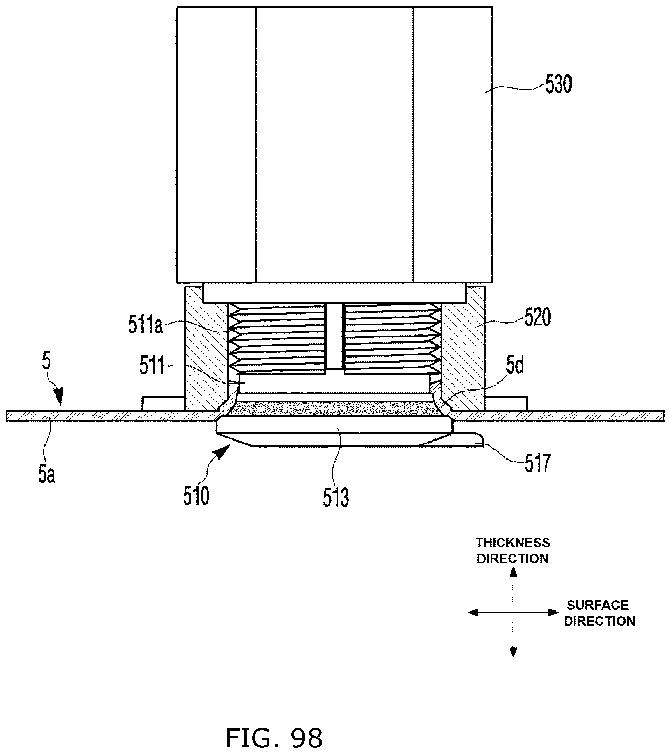

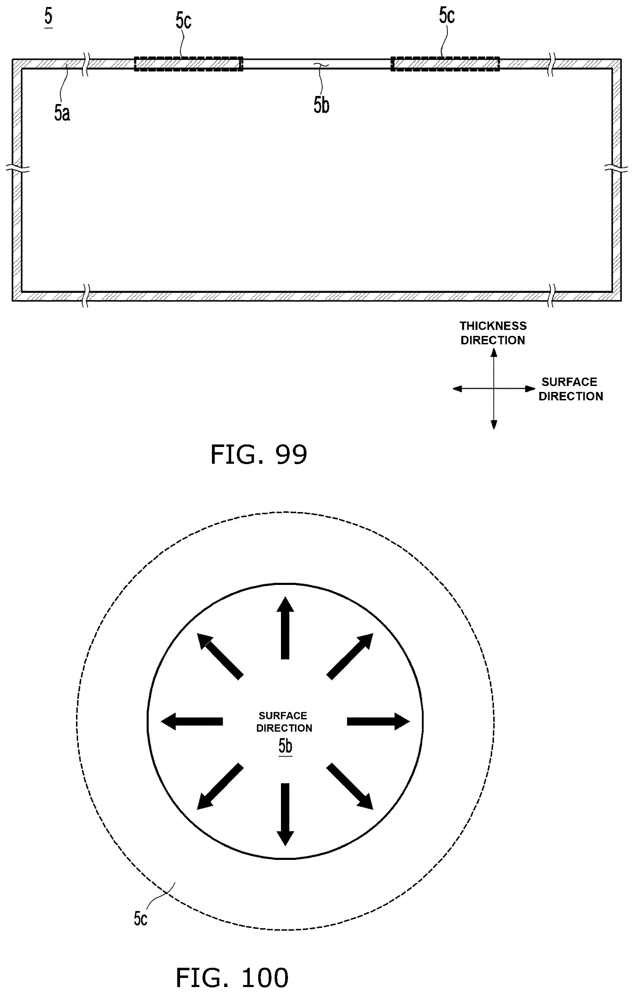

FIG. 97 illustrates a state where a fluid connector according to a fifth embodiment of the present invention is separated from a fluid source, FIG. 98 illustrates a state where the fluid connector shown in FIG. 97 is coupled to a fluid source, and FIGS. 99 and 100 illustrate a drawing for explaining a method of forming a coupling hole by perforating a fluid source wall.

Referring to FIGS. 97 and 98, a fluid connector 500 according to a fifth embodiment of the present invention is a device for connecting a fluid source 5 and the above-described fluid-guiding member to each other, and may include a socket 510, a washer 520, a tightening nut 530, etc. The fluid connector 500 has a partially changed structure such that it can be installed at the fluid source 5 in a manner different from the above-described fluid connector 400. Hereinafter, descriptions of the same constructions included in the fluid connectors 100, 200, 300 and 400 are omitted or only briefly mentioned.

The fluid connector 500 differs from the fluid connector 400 according to the fourth embodiment of the present invention described above in that a wing part 5d is formed on a fluid source wall 5a made of an elastic material, such as PVC or rubber, which can be elastically deformed, and then the wing part 5d is fixed using the socket 510 and the washer 520 to install the fluid connector 500.

In particular, the fluid connector 500 is preferably applied to the fluid source 5 having a structure wherein a woven knitted yarn is embedded in the fluid source wall 5a to prevent tearing or picking of the fluid source wall 5a, but the present invention is not limited thereto.

Hereinafter, the fluid connector 500 according to the fifth embodiment of the present invention is mainly described with a focus on the differences, and descriptions of the same components included in both the fluid connector 400 according to the fourth embodiment of the present invention and the fluid connector 500 according to the fifth embodiment of the present invention are omitted or only briefly mentioned.

The fluid connector 500 is provided to be coupled to a coupling hole 5b that is formed by perforating the fluid source wall 5a so as to communicate the inside of the fluid source 5 with the outside. Accordingly, to install the fluid connector 500, a work of perforating the coupling hole 5b using a punch or other drilling devices so as to couple the fluid connector 500 to the fluid source wall 5a is performed in advance. It is preferred to perforate the coupling hole 5b in the thickness direction of the fluid source wall 5a, but the present invention is not limited thereto. In addition, the coupling hole 5b is preferably circular, but the present invention is not limited thereto. In addition, the coupling hole 5b is preferably formed in one area of the fluid source wall 5a having a flat structure, but the present invention is not limited thereto.

Hereinafter, the fluid connector 500 is described based on the case where the circular coupling hole 5b is perforated in the thickness direction of the fluid source wall 5a. In addition, a peripheral area surrounding the coupling hole 5b among the entire area of the fluid source wall 5a is named a coupling hole-surrounding part 5c.

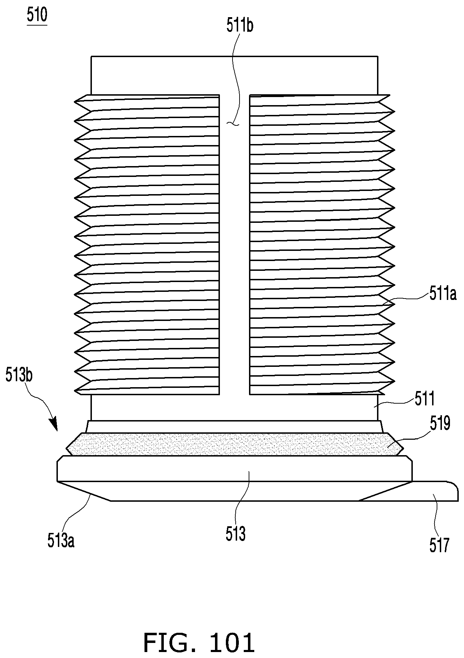

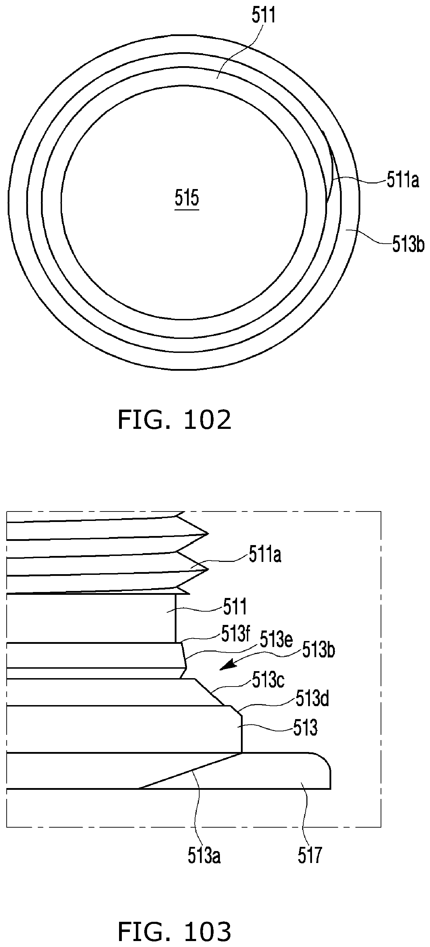

FIG. 101 illustrates a front view of a socket, FIG. 102 illustrates a plan view of the socket, and FIG. 103 illustrates a state where an inner pressurizing surface is formed at a socket head.

The socket 510 is a member for sequentially connecting the fluid source 5, the fluid connector 500 and a fluid-guiding member.

The socket 510 may include a socket body 511, a socket head 513, a discharge hole 515, a hook 517, an O-ring 519, etc.

The socket body 511 has a cylindrical shape lengthily elongated along the height direction of the fluid connector 500. In addition, the socket body 511 preferably has a diameter larger by a predetermined ratio compared to the diameter of the coupling hole 5b, but the present invention is not limited thereto.

The socket body 511 includes a first male screw thread 511a formed to protrude from the outer peripheral surface. The first male screw thread 511a has an outer diameter larger by a predetermined ratio compared to the diameter of the socket body 511. In particular, In particular, the first male screw thread 511a is preferably formed to be spaced apart by a predetermined clearance from each of the upper end and low end of the socket body 511. Here, the upper end of the socket body 511 refers to an end, where the socket head 513 to be described below is formed, among both ends of the socket body 511, and the upper end of the socket body 511 refers to an end opposite to the lower end among the both ends of the socket body 511.

On the first male screw thread 511a, a guide groove 511b into which a guide block 524 of the washer 520 described below is movably inserted is concavely formed along the height direction of the fluid connector 500.

The socket head 513 is formed at a lower end of the socket body 511 to be concentric with the socket body 511. The socket head 513 has a diameter larger by a predetermined ratio compared to the outer diameter of the first male screw thread 511a. Then, the following relationship is established between the coupling hole 5b, the socket body 511, the first male screw thread 511a and the socket head 513.

Diameter of the socket head 513 > Outer diameter of first male screw thread 511a > Diameter of socket body 511 > Diameter of coupling hole 5b

An insertion guide surface 513a for guiding the insertion of the socket head 513 such that the socket head 513 can be easily inserted into the coupling hole 5b is formed on the side surface of the socket head 513. The insertion guide surface 513a preferably has an inclined structure wherein the diameter of the socket head 513 gradually decreases as approaching the lower end of the socket head 513, but the present invention is not limited thereto.

In addition, a downwardly sloped inner pressurizing surface 513b whose height gradually decreases as approaching from the center of the socket 510 to the outer edge thereof is formed on the upper surface of the socket head 513. An O-ring groove 513c onto which the O-ring 519 can be fitted is concavely formed on the inner pressurizing surface 513b. In particular, the O-ring groove 513c is preferably formed in the middle of the inner pressurizing surface 513b to be spaced apart from lower and upper ends of the inner pressurizing surface 513b by a predetermined distance. In this case, the inner pressurizing surface 513b may be divided into a lower part extending from an upper end of the circumference of the socket head 513; a middle part wherein the O-ring groove 513c is formed; an upper part extending from the lower end of the socket body 511; and the like. For convenience of explanation, the lower part of the inner pressurizing surface 513b is referred to as a first inner pressurizing surface 513d, and the upper part of the inner pressurizing surface 513b is referred to as a second inner pressurizing surface 513e.

In addition, the second inner pressurizing surface 513e preferably has a slope angle larger by a predetermined ratio than the slope angle of the first inner pressurizing surface 513d.

In addition, the diameter of the upper end of the second inner pressurizing surface 513 e is preferably larger by a predetermined ratio than the diameter of the socket body 511. In this case, a step surface for connecting the upper end of the second inner pressurizing surface 513e and the lower end of the socket body 511 to each other to form a step structure is formed between the upper end of the second inner pressurizing surface 513e and the lower end of the socket body 511. The step surface may perform a function of reversing the wing part 5d of the fluid source wall 5a formed to face the inside of the fluid source 5 to face the + height direction of the fluid connector 500 or the outside of the fluid source 5, so this step surface is referred to as a reversal step 513f below.

The discharge hole 515 is formed by perforating the inside of the socket 510 so as to penetrate the socket head 513 and the socket body 511 in the height direction of the fluid connector 500.

The hook 517 is formed to protrude from the insertion guide surface 513a in the radial direction of the socket head 513. The hook 517 is preferably formed to be spaced apart from the inner surface of the fluid source wall 5a by a predetermined distance when the socket head 513 is inserted into the inside of the fluid source 5 through the coupling hole 5b.

The O-ring 519 is made of elastically deformable rubber or other elastic materials, and fitted onto the O-ring groove 513c. The O-ring 519 preferably has a thickness larger by a predetermined ratio than the depth of the O-ring groove 513c. Then, when the O-ring 519 is fitted onto the O-ring groove 513c, the O-ring 519 may protrude more highly by a predetermined height compared to the first inner pressurizing surface 513d and the second inner pressurizing surface 513e.

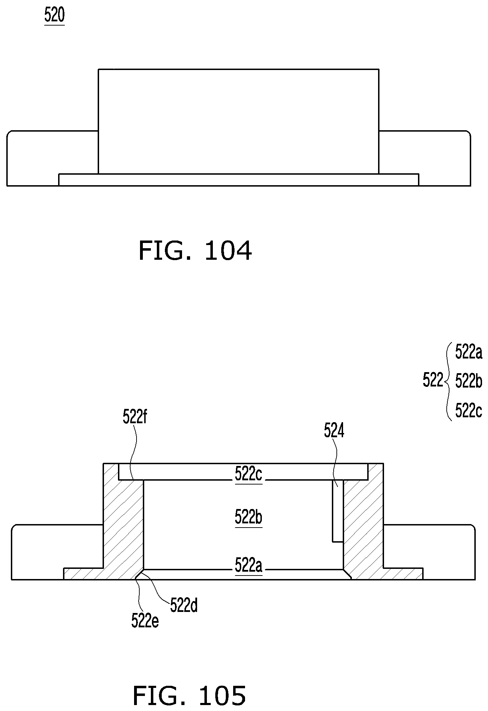

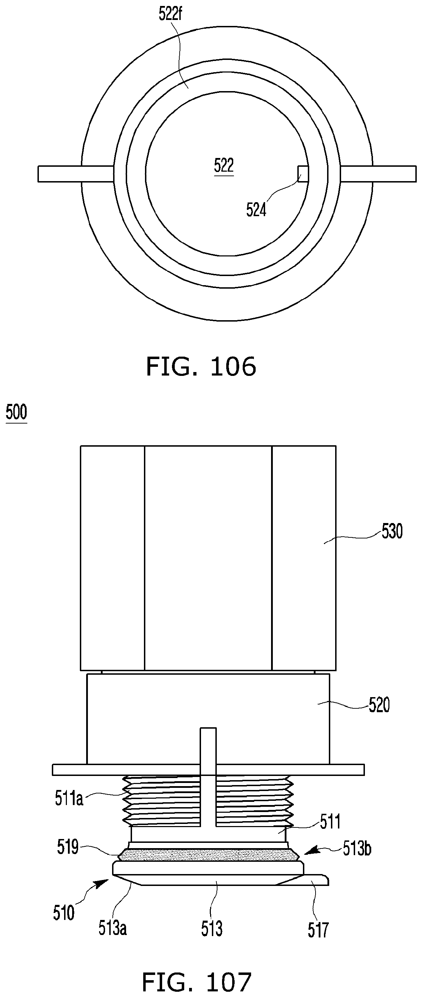

FIG. 104 illustrates a front view of a washer, FIG. 105 illustrates a sectional view of the washer, and FIG. 106 illustrates a plan view of the washer.

Next, the washer 520 is a member for fixing the wing part 5d of the fluid source wall 5a in a predetermined pattern in conjunction with the socket head 513.

The washer 520 may be made of plastic or a material having rigidity that can maintain an original shape without being deformed due to pressure applied when another socket 510 and another tightening nut 530 are screwed together.

As described above, the socket body 511, the first male screw thread 511a and the socket head 513 have diameters that are larger than the coupling hole 5b. However, to install the fluid connector 500, the lower part of the socket 510 including from the lower part of the socket head 513 to the lower part of the first male screw thread 511a needs to be inserted into the fluid source 5 through the coupling hole 5b. To insert the lower part of the socket 510 into the fluid source 5 through the coupling hole 5b in such a manner, the coupling hole-surrounding part 5c needs to be pressurized toward the inside of the fluid source 5 using the socket head 513 such that the diameter of the coupling hole 5b expands while the coupling hole-surrounding part 5c, which corresponds to the peripheral area of the coupling hole 5b surrounding the coupling hole 5b, among the entire area of the fluid source wall 5a is elastically deformed Accordingly, in the process of inserting the lower part of the socket 510 into the fluid source 5 through the coupling hole 5b, the coupling hole-surrounding part 5c forms the wing part 5d having a wing shape as it is gradually bent toward the inside of the fluid source 5 by pressure applied from the socket head 513 and the first male screw thread 511a. That is, the wing part 5d having a cylindrical shape is formed at the ring-shaped coupling hole-surrounding part 5c surrounding the coupling hole 5b. Then, the coupling hole 5b is positioned inside the wing part 5d in a state of being expanded to have the same diameter as the inner diameter of the wing part 5d.

As the wing part 5d is formed at the coupling hole-surrounding part 5c in such a manner, the coupling hole 5b is maximally expanded to have a diameter corresponding to the diameter of the socket head 513 when the socket head 513 passed through the coupling hole 5b, is shrunk to have a diameter corresponding to the diameter of the socket body 511 when the lower end of the socket body 511 passes through the coupling hole 5b, and is expanded again to have the same diameter as the outer diameter of the first male screw thread 511a when the first male screw thread 511a passes through the coupling hole 5b.

The washer 520 is provided at the wing part 5d to be fixed in the thickness direction and the surface direction by distributing pressure, applied from the tightening nut 530 when the socket 510 and the tightening nut 530 are screw-coupled, into the thickness direction and surface direction of the fluid source wall 5a to apply to the wing part 5d.

The washer 520 has a disk shape having a diameter that is larger by a predetermined ratio compared to the diameter of the coupling hole 5b. The washer 520 may include the insertion hole 522, the guide block 524, etc.

The insertion hole 522 is formed to penetrate the center of the washer 520 in the height direction of the fluid connector 500 such that the wing part 5d formed to be in close contact with the first male screw thread 511a and the first male screw thread 511a can be inserted into the insertion hole 522. In addition, the insertion hole 522 may include a first insertion hole 522a formed at the lower part of the washer 520, a second insertion hole 522b formed in the middle of the washer 520 such that the lower end of second insertion hole 522b can communicate the upper end of the first insertion hole 522a, a third insertion hole 522c formed at the upper part of the washer 520 such that the lower end of the third insertion hole 522c can communicate with the upper end of the second insertion hole 522b, etc.

In addition, an outer pressurizing surface 522d that is inclined such that the diameter of the first insertion hole 522a gradually increases as approaching the lower end of the first insertion hole 522a is formed on the inner peripheral surface of the first insertion hole 522a. The outer pressurizing surface 522d preferably has a slope angle corresponding to the slope angle of the inner pressurizing surface 513b such that the wing part 5d is interposed between the outer pressurizing surface 522d and the inner pressurizing surface 513b of the socket head 513 when installing the fluid connector 500.

In addition, the outer pressurizing surface 522d is preferably formed such that the lower end of the first insertion hole 522a having the maximum diameter has a diameter that is the same as the diameter of the socket head 513 or larger than the diameter of the socket head 513, and the upper end of the first insertion hole 522a having the minimum diameter has a diameter that is larger than the outer diameter of the first male screw thread 511a, but smaller than the diameter of the socket head 513.

The outer pressurizing surface 522d may include a fixing protrusion 522e protruded to face the inner pressurizing surface 513b of the socket head 513 when installing the fluid connector 500. The fixing protrusion 522e preferably has a ring shape, but the present invention is not limited thereto. The fixing protrusion 522e is preferably formed to face the O-ring 519 with the wing part 5d therebetween when installing the fluid connector 500, but the present invention is not limited thereto.

In addition, each of the lower and upper corners of the outer pressurizing surface 522d is preferably rounded to prevent the wing part 5d of the fluid source 5 from being sharply bent and damaged by the outer pressurizing surface 522d, but the present invention is not limited thereto. Here, the lower corner of the outer pressurizing surface 522d refers to a corner where the outer pressurizing surface 522d and the bottom surface of the washer 520 meet, and the upper corner of the outer pressurizing surface 522d refers to a corner where the outer pressurizing surface 522d and the inner peripheral surface of the second insertion hole 522b meet.

The second insertion hole 522b is formed to have a diameter the same as the diameter of the upper end of the first insertion hole 522a, and the third insertion hole 522c is formed to have a diameter larger by a predetermined ratio than the diameter of the second insertion hole 522b. Then, the second insertion hole 522b and the third insertion hole 522c are connected to each other to form a step structure, so that the lower end of the tightening nut 530 may be settled on the bottom surface of the third insertion hole 522c. Accordingly, the bottom surface of the third insertion hole 522c is referred to as a settlement surface 522f below.

The guide block 524 is formed to protrude toward the center of the insertion hole 522 from the inner peripheral surface of the insertion hole 522 and to lengthily extend along the height direction of the fluid connector 500. In addition, the guide block 524 has a width smaller than the guide groove 511b such that it can be movably inserted into the guide groove 511b of the first male screw thread 511a in the height direction of the fluid connector 500.

Meanwhile, the tightening nut 530 has the same structure as the tightening nut 440 of the fluid connector 400 according to the fourth embodiment of the present invention described above. Accordingly, a detailed description of the tightening nut 530 is omitted.

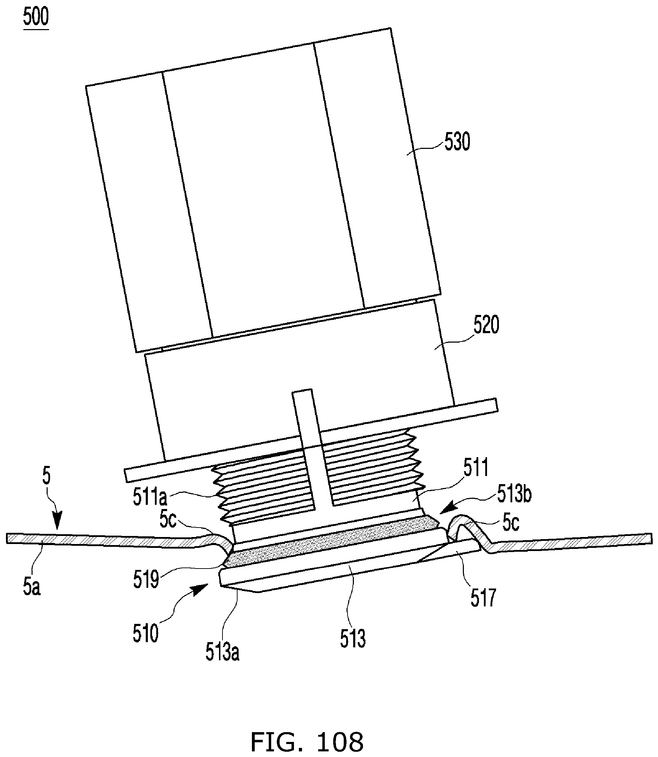

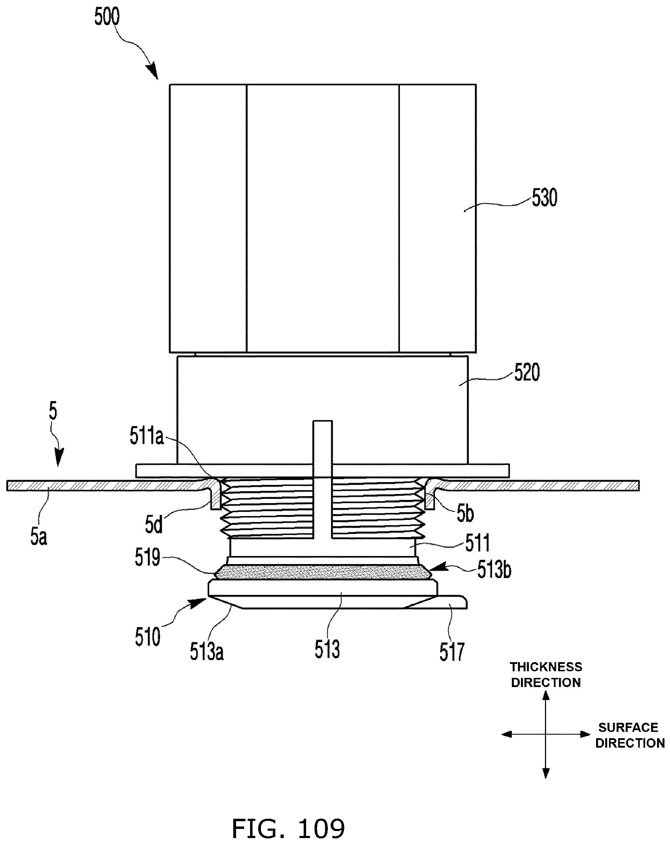

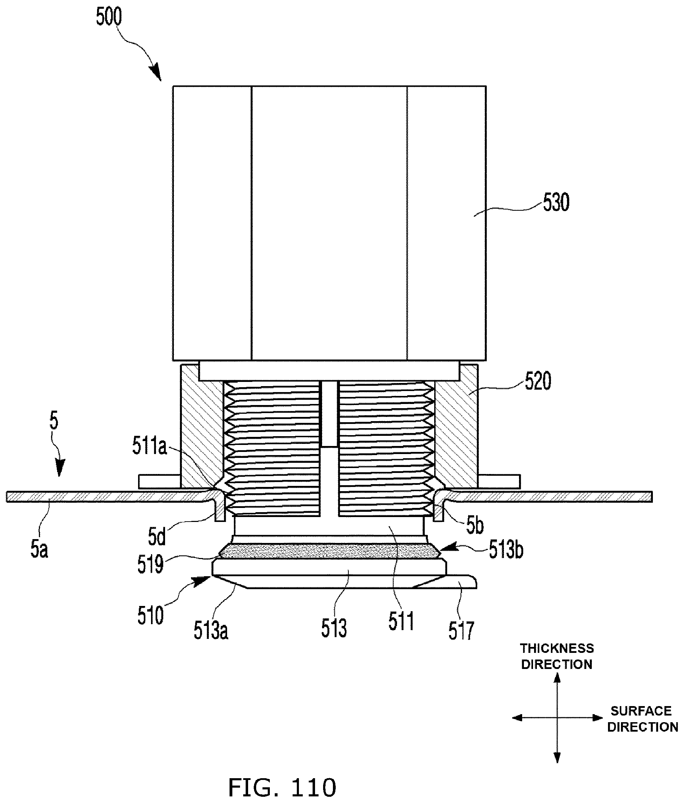

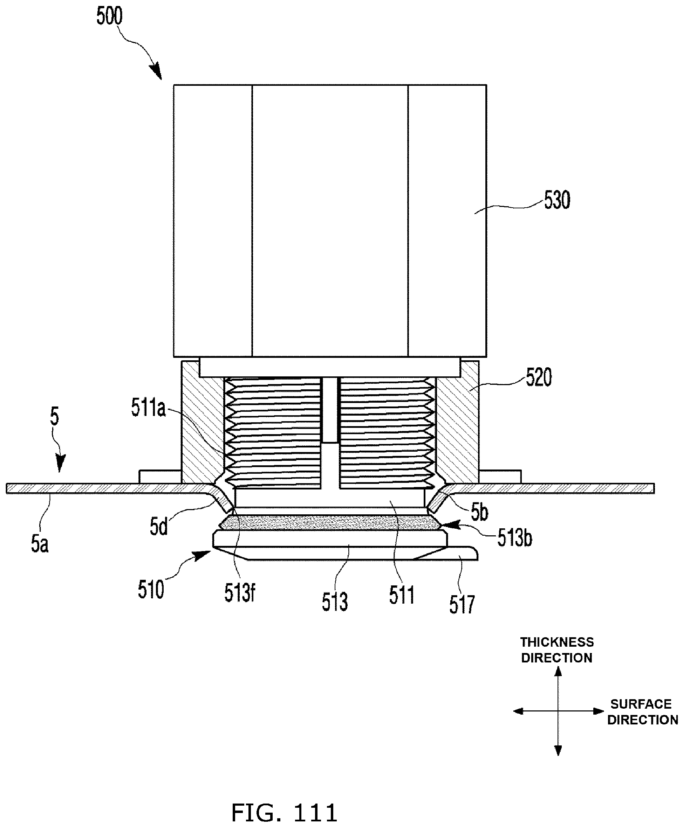

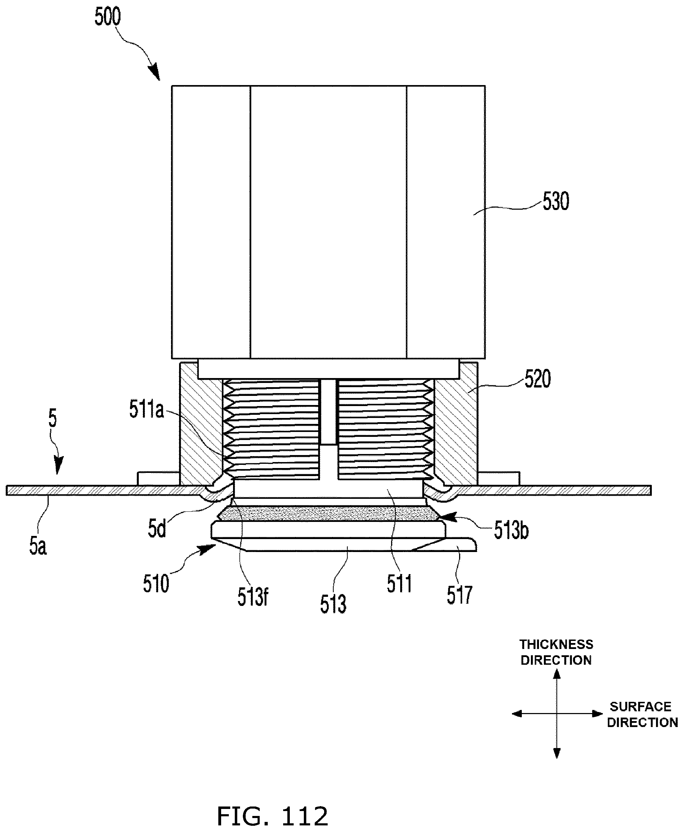

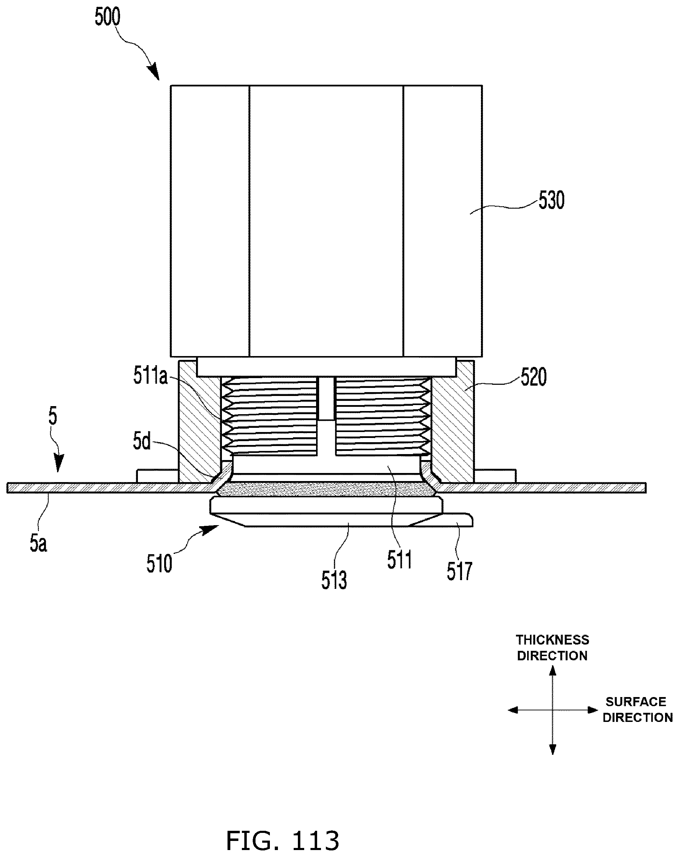

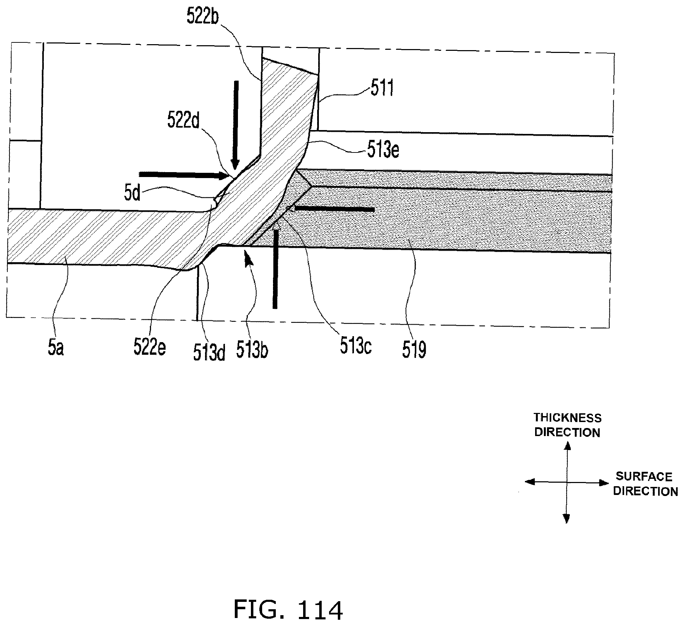

FIGS. 107 to 113 are drawings for explaining a method of installing a fluid connector at a fluid source, and FIG. 114 a drawing for explaining the principle that a socket body and a washer hold a fluid source wall.

First, the coupling hole 5b is formed by perforating the fluid source wall 5a using a perforating member.

Next, the socket body 511 is inserted into the insertion hole 522 of the washer 520 under the guidance of the guide groove 511b and the guide block 524, thereby coupling the socket 510 and the washer 520.

Next, by rotating and tightening the tightening nut 530 in a predetermined tightening direction along the first male screw thread 511a in a state where the upper end of the first male screw thread 511a of the socket body 511 is placed at the lower end of the female screw thread of the tightening nut 530, the tightening nut 530 is positioned on the upper side of the washer 520, and the socket 510 and the tightening nut 530 are pre-coupled such that the tightening nut 530 is spaced apart from the socket head 513 by a predetermined clearance.

A gap between the socket head 513 of the tightening nut 530 when the socket 510 and the tightening nut 530 are pre-coupled is determined such that a distance between the lower end of the tightening nut 530 and the lower end of the first male screw thread 511a is determined to be larger by a predetermined ratio compared to the height of the washer 520.

Next, the fluid connector 500 is titled by a predetermined angle such that the hook 517 faces the coupling hole 5b, and then the hook 517 is inserted into the inside of the fluid source 5 through the coupling hole 5b to be caught on the inner surface of the coupling hole-surrounding part 5c.

Next, the socket head 513 is pressurized toward the inside of the fluid source 5 through the lever principle such that the coupling hole-surrounding part 5c is elastically deformed and the coupling hole 5b is expanded in the state where the hook 517 is caught on the inner surface of the coupling hole-surrounding part 5c, and the wing part 5d having a cylindrical shape surrounding the expanded coupling hole 5b is formed at the coupling hole-surrounding part 5c while inserting the lower part of the socket 510, which includes from the socket head 513 to the lower part of the first male screw thread 511a, into the inside of the fluid source 5 through the expanded coupling hole 5b.

Next, the socket 510 and the tightening nut 530 are fully connected by rotating and tightening the tightening nut 530 along the first male screw thread 511a in the tightening direction such that the wing part 5d is interposed between the outer pressurizing surface 522d of the washer 520 and the inner pressurizing surface 513b of the socket head 513 in the state where the wing part 5d is flipped up and down.

The full connection between the socket 510 and the tightening nut 530 may be accomplished by first tightening the tightening nut 530 such that the wing part 5d is folded toward the outside of the fluid source 5 by the socket 510 rising toward the outside of the fluid source 5 and flipped up and down, and then secondarily tightening the tightening nut 530 until the flipped wing part 5d is interposed between the outer pressurizing surface 522d of the washer 520 and the inner pressurizing surface 513b of the socket head 513.

When the tightening nut 530 is first tightened in the state where the wing part 5d is formed toward the inside of the fluid source 5, the wing part 5d may be flipped up and down to protrude to the outside of the fluid source 5 while being folded toward the outside of the fluid source 5 by frictional force applied from the first male screw thread 511a of the socket body 511 rising toward the outside of the fluid source 5, the reversal step 513f of the socket head 513, etc. or other external force.

When the tightening nut 530 is secondarily tightened in the state where the wing part 5d is flipped up and down, the wing part 5d is interposed between the outer pressurizing surface 522d and the inner pressurizing surface 513b. The secondary tightening of the tightening nut 530 is preferably performed until the upper part of the wing part 5d passes through a space between the outer pressurizing surface 522d and the inner pressurizing surface 513b and enters a space between the lower end of the socket body 511 and the inner peripheral surface of the second insertion hole 522b. Then, the upper part of the wing part 5d is bent based on the upper corner of the outer pressurizing surface 522d, and the lower part of the wing part 5d is bent based on the lower corner of the outer pressurizing surface 522d. By bending the wing part 5d in two stages in such a manner, a two-stage sealing structure may be formed using the wing part 5d.

When the wing part 5d is interposed between the inner pressurizing surface 513b and the outer pressurizing surface 522d in the state where it is bent according to the slope angles of the inner pressurizing surface 513b and the outer pressurizing surface 522d, the socket head 513 and the washer 520 may simultaneously hold and fix the wing part 5d in the thickness direction and surface direction of the fluid source wall 5a. Accordingly, the socket head 513, the washer 520 and the fluid connector 500 including the socket head 513 may be coupled to the fluid source 5. In addition, the fixing protrusion 522e may fix the wing part 5d more strongly by pressurizing the lower part of the wing part 5d, and the O-ring 519 is brought into a close contact with the inner peripheral surface of the lower part of the wing part 5d, thereby sealing a gap between the socket head 513 and the wing part 5d.

Next, the branch pipe 2a is coupled to the tightening nut 530.

A method of coupling the fluid-guiding member with the tightening nut 530 is the same as the contents provided to describe the fluid connector 400 according to the fourth embodiment of the present invention, so a detailed description thereof is omitted.

As described above, the fluid connector 500 holds and fixes the wing part 5d using the washer 520 and the socket head 513 not only in the thickness direction of the fluid source wall 5a but also in the surface direction which is an expansion direction of the fluid source wall 5a due to high pressure of fluid after forming the wing part 5d by protruding the coupling hole-surrounding part 5c, which corresponds to the peripheral area surrounding the coupling hole 5b, among the entire area of the fluid source wall 5a to the outside of the fluid source 5 by a predetermined height. Accordingly, the fluid connector 500 may prevent the fluid connector 500 from being separated from the coupling hole 5b, or may prevent the occurrence of a gap between the fluid connector 500 and the inner peripheral surface of the coupling hole 5b which may cause the fluid to leak.

In addition, since the fluid connector 500 fixes and install the wing part 5d, protruded to the outside of the fluid source 5 by a predetermined height, at the fluid connector 500, it may be stably coupled to the fluid source 5 even when the coupling hole 5b of the fluid source 5 has an oval or other uneven shapes.

In addition, since the socket 510 is installed to penetrate the coupling hole 5b expanded in the process of forming the wing part 5d, the diameter of the socket 510 and the diameter of the discharge hole 515 formed at the socket 510 may be expanded, compared to an existing fluid connector configured such that the socket 510 has the same diameter as the diameter of the coupling hole 5b.

In addition, the fluid connector 500 is provided such that, when the tightening nut 530 is tightened from the outside of the fluid source 5, the socket 510 and the washer 520 can pressurize and hold the wing part 5d of the fluid source wall 5a from both the inside and outside of the fluid source 5. Accordingly, the fluid connector 500 may provide convenience in that the fluid connector 500 may be installed or removed by manipulating the fluid connector 500 only on the outside of the fluid source 5 without having to manipulate the fluid connector 500 using a tool on both the inside and outside of the fluid source 5.

## Claims

1. A fluid connector, the fluid connector being coupled to a coupling hole formed by perforating a main pipe,
wherein the fluid connector comprises:
a socket, at least a portion of which is inserted into the coupling hole;
an elastic bushing movably mounted on the socket such that at least a portion of the elastic bushing is inserted into the coupling hole together with the socket;
a washer movably mounted on the socket to be disposed outside the main pipe in a state of facing the elastic bushing; and
a tightening nut screw-coupled to the socket to be disposed outside the main pipe in a state of facing the washer,
wherein the elastic bushing is provided to pressurize each of an inner corner, positioned at a lower end of an inner peripheral surface of the coupling hole, and an outer corner, positioned at an upper end thereof, in a height direction of the main pipe and, at the same time, in at least one direction of a longitudinal direction and circumferential direction of the main pipe while being elastically deformed by pressure delivered through the socket and the washer when the tightening nut is screw-coupled to the socket.
